# EUROPEAN PATENT APPLICATION

(11) **EP 4 579 444 A1**
(43) Date of publication of application: **02.07.2025**
(21) Application number: 24215331.0
(22) Date of filing: 26.11.2024
(51) Int. Cl.: G06F 9/30, G06F 9/38

(54) **SOFTWARE DEFINED SUPER CORES**

(30) Priority: 30.12.2023 US 202318401460
(71) Applicant: INTEL Corporation, Santa Clara, CA 95054 (US)
(72) Inventor: Gaur, Jayesh, 560066 Bangalore (IN); Bandishte, Sumeet, 560037 Bangalore (IN); Sabba, Ariel, 2011800 Lavon (IL); Lempel, Ori, 19245 Ramot Menashe (IL); Rappoport, Lihu, 34657 Haifa HA (IL); Subramoney, Sreenivas, 560103 Bangalore (IN)
(74) Representative: Samson & Partner Patentanwälte mbB

(57) **Abstract**

Techniques for software defined super core usage are described. In some examples, a fist and second processor core are to operate as a single virtual core enabled by the operating system to fetch the first set of instruction segments of the single threaded program and the second set of instruction segments of the single threaded program concurrently using flow control instructions that have been inserted into the single threaded program.

## Description

### BACKGROUND

High performance cores through frequency turbo is inefficient in performance/watt. To counter this, we must build larger (deeper/wider) high IPC cores. This has a high degree of dependence on process technology node scaling and availability at scale. Additionally, larger cores then come at the cost of core count.

Performance and efficiency core style architectures aim to balance single thread and multithread (core count) performance requirements. But they entail the need for designing and validating multiple core designs. Performance and efficiency core style architectures also have a fixed inflexible ratio of performance and efficiency cores.

### BRIEF DESCRIPTION OF DRAWINGS

Various examples in accordance with the present disclosure will be described with reference to the drawings, in which:
FIG. 1 illustrates examples of a processor complex.
FIG. 2 illustrates examples of software defined supercore (SDC) usage.
FIGS. 3(A)-3(B) illustrate examples of code splitting for SDC.
FIG. 4 illustrates examples of linear code.
FIGS. 5(A), 5(B), and 5(C) illustrate examples of code that may include non-linear aspects.
FIG. 6(A) is a block diagram illustrating both an example in-order pipeline and an example register renaming, out-of-order issue/execution pipeline according to examples.
FIG. 6(B) is a block diagram illustrating both an example in-order architecture core and an example register renaming, out-of-order issue/execution architecture core to be included in a processor according to examples.
FIG. 7 illustrates a computer system including a processor core according to some examples.
FIG. 8 illustrates examples of aspects of memory access circuitry.
FIG. 9 illustrates examples of states of the store address buffer and the shadow store buffer of a core.
FIG. 10 illustrates examples of shadow store buffer usage.
FIG. 11 illustrates examples of livein loads and liveout stores.
FIG. 12 illustrates examples of a method for XMOV usage.
FIG. 13 illustrates examples of a method performed by a processor to process an XMOV instruction.
FIG. 14 illustrates examples of a liveout data structure.
FIG. 15 illustrates examples of out-of-order (OOO) renaming.
FIG. 16 illustrates examples of a segment being executed but having different liveouts.
FIG. 17 illustrates examples of a method for out-of-order renaming in an SDC.
FIG. 18 illustrates examples of usage of a trace data structure in an SDC.
FIG. 19 illustrates examples of a method for parallel fetching in an SDC.
FIG. 20 illustrates examples of disambiguation prediction usage.
FIG. 21 illustrates examples of a method for potentially throttling in SDC mode.
FIG. 22 illustrates examples of methods for SDC usage.
FIG. 23 illustrates examples of a method for entering and exiting SDC mode.
FIG. 24 illustrates an example computing system.
FIG. 25 illustrates a block diagram of an example processor and/or System on a Chip (SoC) that may have one or more cores and an integrated memory controller.
FIG. 26 is a block diagram illustrating a computing system 2600 configured to implement one or more aspects of the examples described herein.
FIG. 27A illustrates examples of a parallel processor.
FIG. 27B illustrates examples of a block diagram of a partition unit.
FIG. 27C illustrates examples of a block diagram of a processing cluster within a parallel processing unit.
FIG. 27D illustrates examples of a graphics multiprocessor in which the graphics multiprocessor couples with the pipeline manager of the processing cluster.
FIGS. 28A-28C illustrate additional graphics multiprocessors, according to examples.
FIG. 29 shows a parallel compute system according to some examples.
FIGS. 30A-30B illustrate a hybrid logical/physical view of a disaggregated parallel processor, according to examples described herein.
FIG. 31 illustrates examples of execution unit(s) circuitry, such as execution unit(s) circuitry.
FIG. 32 is a block diagram of a register architecture according to some examples.
FIG. 33 illustrates examples of an instruction format.
FIG. 34 illustrates examples of an addressing information field.
FIGS. 35(A)-(B) illustrate examples of a first prefix.
FIGS. 36(A)-(D) illustrate examples of how the R, X, and B fields of the first prefix are used.
FIGS. 37(A)-(B) illustrate examples of a second prefix.
FIGS. 38(A)-(E) illustrate examples of a third prefix.
FIGS. 39A-39B illustrate thread execution logic including an array of processing elements employed in a graphics processor core according to examples described herein.
FIG. 40 illustrates an additional execution unit, according to an example.
FIG. 41 is a block diagram illustrating a graphics processor instruction formats 4100 according to some examples.
FIG. 42 is a block diagram of another example of a graphics processor.
FIG. 43A is a block diagram illustrating a graphics processor command format accordingto some examples.
FIG. 43B is a block diagram illustrating a graphics processor command sequence according to an example.
FIG. 44 is a block diagram illustrating the use of a software instruction converter to convert binary instructions in a source ISA to binary instructions in a target ISA according to examples.
FIG. 45 is a block diagram illustrating an IP core development system 4500 that may be used to manufacture an integrated circuit to perform operations according to some examples.

### DETAILED DESCRIPTION

The present disclosure relates to methods, apparatus, systems, and non-transitory computer-readable storage media for software defined super cores.

Some software-hardware solutions decomposed existing programs into multiple threads which run on different processors. The software identifies a code region suitable for multi-threading and decomposes the code into multiple threads. In these efforts hot loops of a single thread (ST) binary were split and run it on two cores. Many instructions would be replicated across the two strands to make the cores appear independent. Lastly, the memory execution unit and caches required extensive changes to support in-order retirement, memory ordering, speculative commit, and rollback etc.

These approaches replicate a lot of instructions (including memory instructions) across both the strands to make the two strands appear independent. This would entail almost 25-40% instruction overheads over the native program.

Software defined super cores (SDC) seek to aggregate the Instructions-per-Cycle (IPC) capabilities of neighboring cores into a "super core." A super core is a virtual construct grouping of two or more cores (in some examples, physically adjacent core) that are virtually "fused" such that they each run different portions of an application's instructions, but retire the instructions in original program order. Thus, the virtually fused "super cores" gives to software applications and/or an operating system the semblance of being a single core. A super core enables energy-efficient, high-performance capability at the same voltage/frequency. SDC-enabled platforms have a wide dynamic range and flexibility depending on system load and task requirements using just a core intellectual property substrate. SDC is a software and hardware solution enabling neighboring cores to run as virtual clusters of a super core - reducing the traditional process technology node dependence on scaling core size.

In some examples, a SDC software framework splits (or rather steers) a thread of a program such that each constituent core of the "super core" executes distinct blocks of the program simultaneously. SDC software can be run as part of a JIT compiler, a static compiler, and/or directly on legacy binaries requiring no recompilation. The SDC hardware component adds a small amount of hardware to each core (e.g., to a memory execution cluster) for faster memory communication across the component cores.

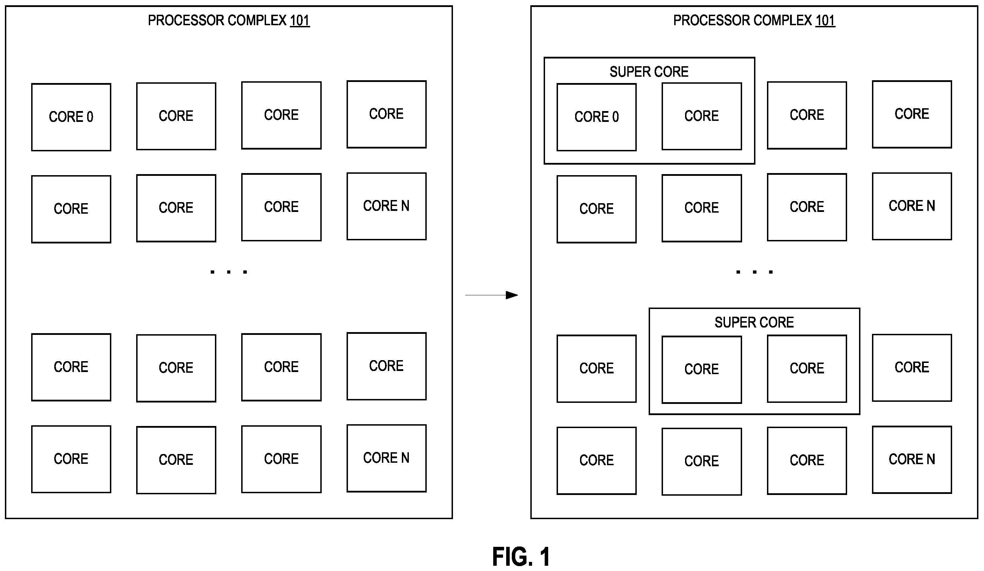

FIG. 1 illustrates examples of a processor complex. On the left hand side, a processor complex 101 includes a plurality of cores 0 .. N. In some examples, two or more cores can be virtually "fused" into a super core. In some examples, the two or more cores need to be physically proximate. In some examples, the two or more cores can be separated by one or more cores.

The same program is run on the separate cores of the super core, but markers in the program ensure that the cores run different portions of the program. The retirement of the program is in order which gives the appearance to an operating system, virtual machine, etc. of being a single core. All memory ordering constraints are satisfied.

Even though the program is split across two physical cores, the overheads of execution are low (e.g., <5% extra overheads). The higher instructions per cycle (IPC) delivered by SDC allows for either longer bursts of turbo execution or a more efficient execution at lower voltages.

In some examples, the cores of a super core are of the same class (e.g., efficiency cores, performance cores, "little" cores, "BIG" cores, etc. In some examples, the cores of a super core support the same instruction set architecture. In some examples, the cores of a super core support a subset of the same instruction set architecture. In some examples, the cores of a super core support different instruction set architectures but support binary translation or emulation to be able to execute all instructions of the program to be run on the super core.

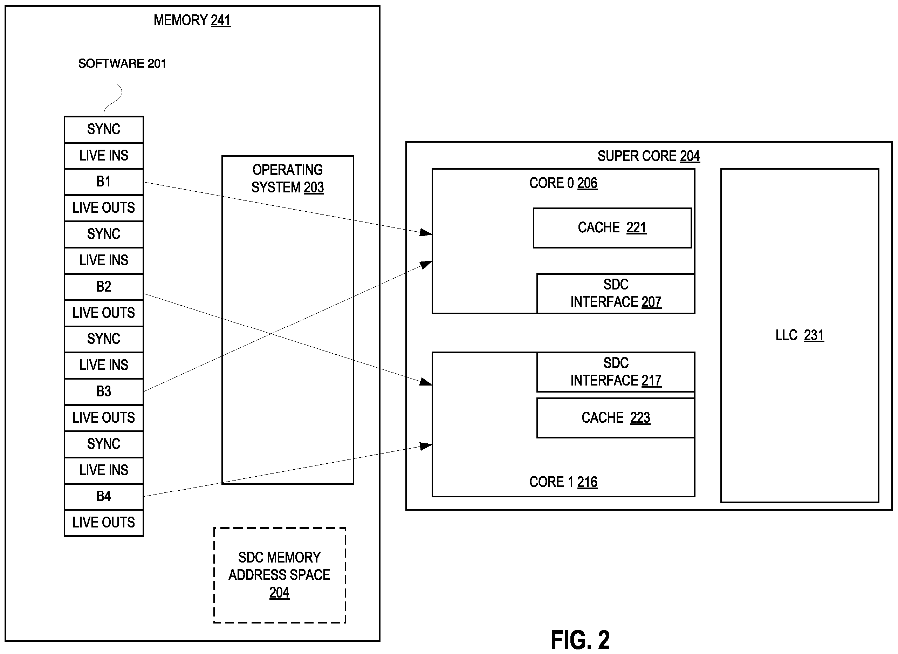

FIG. 2 illustrates examples of SDC usage. In this illustration, a software program 201 (e.g., thread) has four different blocks (B1, B2, B3, and B4) to be executed. The odd-numbered blocks are executed by core 0 206 and the even-numbered blocks are executed by core 1 216. In the illustrated code there are synchronization (sync) operations, live-in operations to load one or more registers that had been "live" in the other core that will be used by the current core, and live-out operations to store one or more registers to be available to the other core. Each of these operations will be described in greater detail below. In some examples, the program is statically split into the distinct blocks of code which run on distinct cores in parallel.

The operating system (OS) 203 manages the cores. The OS 203 provisions cores for new applications, tracks their progress, and reclaims cores after the application has finished. In some examples, the cores (e.g., a hardware guided scheduling (HGS)) provide information relevant to recommendations for thread migration. In some examples, HGS hardware of the system utilizes the information provided by the cores (such as runtime instruction mix and core state) to request to the OS 203 that a particular application is to migrate to a super core mode. The OS 203 will then check if SDC-capable cores are available. If such cores are found, the OS 203 migrates the application to the super core module. The entire state of the application such as memory contents, registers contents, etc. are also transferred to the super core. If the OS 203 does not find any available SDC-capable cores, it will decline the request and the application will continue execution on the same core as before the super-core migration request was issued to the OS. The OS 203 and software program 201 are stored in memory 241.

In some examples, once a thread is running in super core mode, it is monitored in case it needs to be switched back to a conventional core. This need for reversion to conventional core can happen due to various reasons such as: a) the application suffers a high amount of branch misprediction due to a program phase change or loses instruction level parallelism; b) there are many outstanding threads in the system which need independent cores (essentially, the system requires more cores rather than larger cores); etc. In the above scenarios mentioned, the OS 203 can decide to migrate an application back from super core mode to a conventional core. In some examples, the HGS, which may monitor the IPC of each application, will be aware of all threads that are using the super core mode and will select the least beneficial thread out of them all. It will recommend the OS 203 to migrate this application back to a conventional core and free up the other core for the outstanding threads.

Each core of the super core includes a SDC interface (SDC interface 207 and SDC interface 217). A SDC interface includes circuitry to use a memory address space (e.g., memory address space 204 and/or memory space within the SDC interfaces) for register and memory transfers between the "N" cores that are virtually fused as one super core. In some examples, the address space is called a wormhole address space. Each register that is used by a core has a particular address. For example, RAX has a particular address. This address space is visible to the hardware and the OS 203 and is explicitly reserved for SDC communication. The wormhole_addr, liveouts/liveins, etc. all belong to this space. The user program does not have access to this memory address space 204. In some examples, the memory address space 204 is accessible as memory mapped input/output.

The "sync" of the software 201 in Fig. 2 indicates sync load and/or store instructions. Each segment starts with this instruction which ensures in-order retirement across the constituent cores of a super core. The sync load is an uncacheable load that can only retire once all older instructions in the other core have retired. It is handled by the SDC interfaces which order sync loads to retire alternatively from each core effectively enforcing a global retirement order. Note the interleaving pattern may be different if a different number of cores are virtually fused into a super core.

In some examples, flow control instructions are used to check the wormhole_addr and resteer each core to their respective code segments. Note that "jump" or "branch" may be used as examples of a flow control instruction in this example and that where jump or branch are used is not meant to limit to that particular language. Live-outs and live-ins are communicated using special store/load instructions pairs to special memory locations. Register dependencies are identified statically by SDC software and store-load pairs are injected accordingly at every split point as shown in the software 201. In some examples, live-out store and live-in loads include an identifier of a location of the data to be stored at or loaded from. Examples of formats for addressing information are detailed below.

After executing the B1 instructions, core 0 206 skips B2 instructions and starts fetching from B3. This is done using unconditional wormhole jump instructions (not shown) which steer the core to skip the next code segment. The jump is inserted by the SDC software since its target is known statically.

In some examples, an SDC interface 207 or 217 is a part of a memory execution unit (MEU) of a core. Each SDC interface 207 or 217 handles load-store ordering between the cores, inter-core store-load forwarding, request for ownership (RFO) operations, and snoops.

Each core may also have independent cache 221 and 223 and/or a shared cache such as a last-level cache 231.

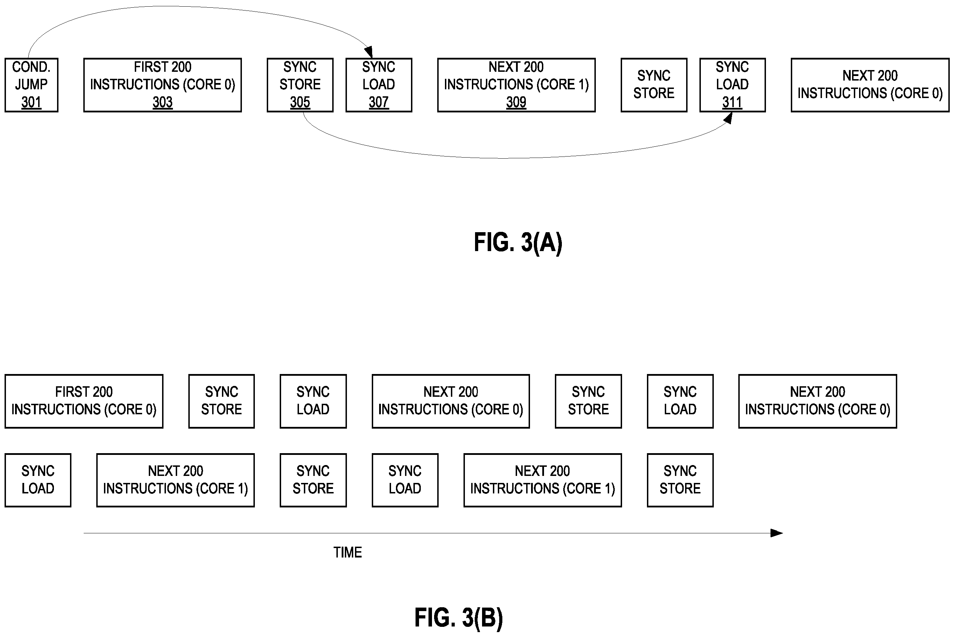

FIGS. 3(A)-3(B) illustrate examples of code splitting of a single thread for SDC. In these examples, the single threaded code is chunked into instruction segments of a particular size. The size can be any relevant size of instructions, such as 100, 200, or any other number of instructions per segment. In FIG. 3(A), the code starts with a conditional jump 301 that checks the wormhole_addr. In this example, the wormhole_addr for core 0 303 returns 0 while wormhole_addr for core 1 309 returns 1. as shown, core 1 309 will jump over the first instruction segment while core 0 303 will fall-through and execute the first 200 instructions. After executing the first instruction segment and storing out registers ("liveout") and executing a sync store instruction 305, core 0 will jump over the next instruction segment (using an inserted unconditional jump) and start fetching from the point thereafter. Those instructions are preceded by a sync load 311 (and livein loads) to load data needed for the code segment.

Meanwhile, core 1 309, which had skipped the first instruction segment, jumps to the next instruction segment and starts executingthose after loading any registers, etc. that it needs after the sync load 307. In this manner, each core alternatively executes code segments of an approximate number of instructions each and give the appearance of parallel execution of a single thread program.

After executing the first 200 instructions, core 0 303 will write the register liveout values to special memory locations using specially inserted store instruction(s) and followed by as a sync store instruction 305 as shown. Core 1 309 reads these memory locations using specially inserted load instruction(s) after a sync load instruction 307 at, or near, the beginning of its code segment as shown. Thus, register dependencies between the two code segments are effectively managed using explicit store/load instructions at every split point. Memory dependencies are handled by the SDCs.

In some examples, the splitting across these instruction segments (or chunks) and insertion of jumps, loads, etc. is done by a software splitter offline. The software splitter minimizes the live-in communication and makes the two instruction sequences as independent as possible. In some examples, the splitting across the instruction segments and insertion of jumps, loads, etc. is done by hardware (e.g., a microsequencer routine) during execution or before execution.

FIG. 3(B) illustrates the parallel nature of SDC and shows that core 0 303 and core 1 309 may execute different segments of code in parallel. Of course, there may be instances where a core has to wait for a live-out from the other core to execute at least a portion of its segment if there are, for example, data dependencies.

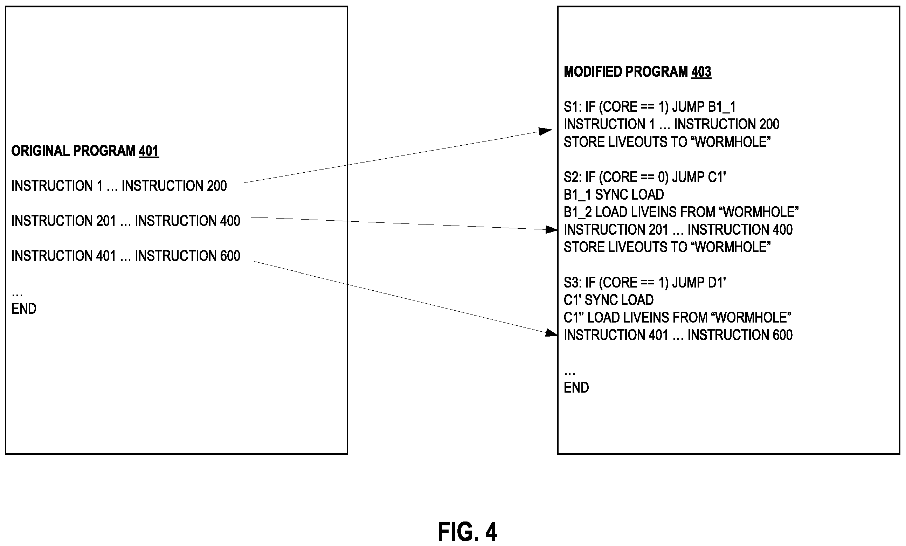

FIG. 4 illustrates examples of linear code. Original program 401 is to be modified into modified code 403 to be run on an SDC. Note the original program 401 includes 3 segments (or chunks) of 200 instructions. These instructions are not changed in the modified code 403. The modified code 403 adds additional instructions to support SDC.

In the modified code, both cores of the SDC execute a wormhole core check S1. The core 0 executes instructions 1-200 while core 1 is re-steered to sync load B1_1. After core 0 executes instructions 1-200 it then executes liveout stores for the register liveouts (e.g., values that are dependencies for the instructions to be executed by the other core(s) of the SDC). Meanwhile, core 1 continues fetching Sync load B1_1, livein loads, and instructions 200-400. The livein loads are stalled until the liveout stores from core 0 have completed and therefore, any subsequent dependent instruction in instructions 200-400 are also stalled. However, independent instructions of the fetched instructions 200-400 can be executed by core 1 without waiting for livein loads.

Once core 0 completes instructions 1-200 and stores its liveout values, it reaches wormhole Core Check S2 which will make it jump to sync load C1' from where core 0 starts fetching instructions 401-600. Meanwhile, core 1 executes instructions 201-400, then stores its liveouts after that and reaches S3 which will make it jump to D1' (not shonw), where it will fetch and execute instructions 601-800 (not shown) and so on.

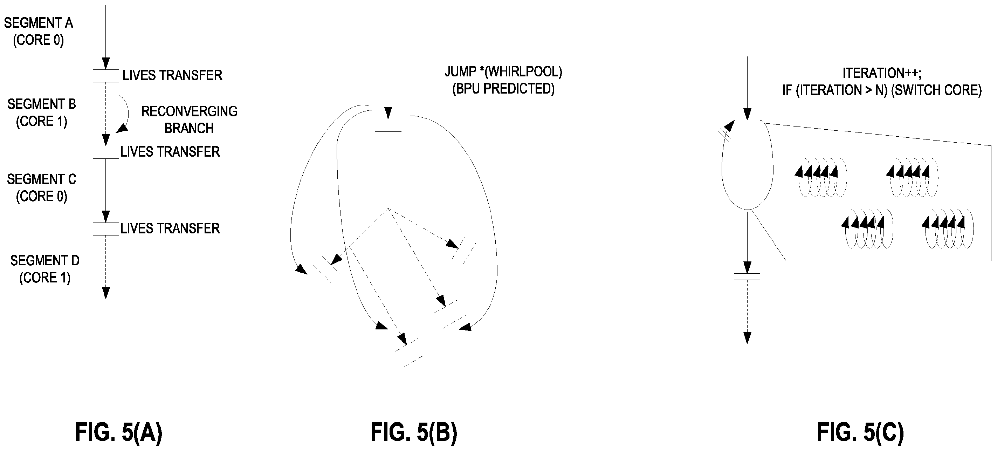

FIGS. 5(A), 5(B), and 5(C) illustrate examples of code that may include non-linear aspects. In these figures, the dashed segments represent code segments run on core 1. FIG. 5(A) illustrates linear code of instruction segments. As shown, the first segment of instructions are executed on core 0, the next segment of instructions on core 1, etc. Note that the segment instruction count is not a fixed constraint and can be altered to achieve the best performance. In this illustration there is a branch, however, as this is a reconverging branch (the branch target is within the same segment) it has no impact on the linearity (e.g., the branch target could not be in multiple places in segments A, C, or D).

FIG. 5(B) illustrates code with branches. This figure shows that core 1 starts a code region but encounters multiple branches which can take it along different program paths. Due to this, core 0 does not know which is the expected code segment that it needs to jump to as there are multiple possible end points for core 1. To ensure a correct handoff, a wormhole jump in this case uses an indirect branch whose target is provided by core 1. When core 1 finishes its execution, it writes the program counter (PC) of the last executed instruction in that code segment to a special wormhole address space location (e.g., a "whirlpool" address). The indirect branch instruction in core 0 reads this memory location and uses the target to re-steer core 0 appropriately. In some examples, core 0 will use the branch predictorto predict the target of the indirect branch ahead of time, rather than using the whirlpool address mechanism, so that it can operate in parallel with core 0 (in the hope that the branch predictor has correctly predicted the last instruction to be executed by core 1).

FIG. 5(C) illustrates code with loops. In this code, each loop is split in such a manner that N iterations execute on core 0, the next N iterations on core 1, the next N iterations on core 0, and so on. This is done by means of a special wormhole loop instruction that counts how many loop iterations have elapsed and dynamically resteers the core after N iterations have elapsed. After resteering, the core skips N-2N iterations of the loop and resumes execution thereafter. Note that the actual execution of the N iteration blocks on the 2 cores occurs in parallel. The N iteration count is obtained statically to represent approximately 200 dynamic instructions in the loop execution. Profile information may be used to guide the best iteration count for splitting.

The SDC interfaces enable the necessary hardware support in the form of data communication between the cores, tracking memory dependences across cores and guaranteeing in-order retirement semantics thus ensuring architectural integrity.

Example Core Architectures - In-order and out-of-order core block diagram.

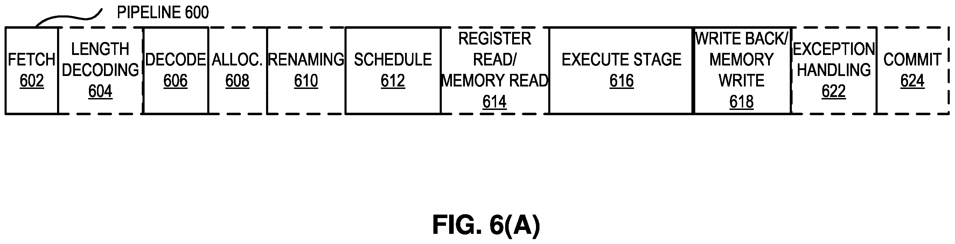

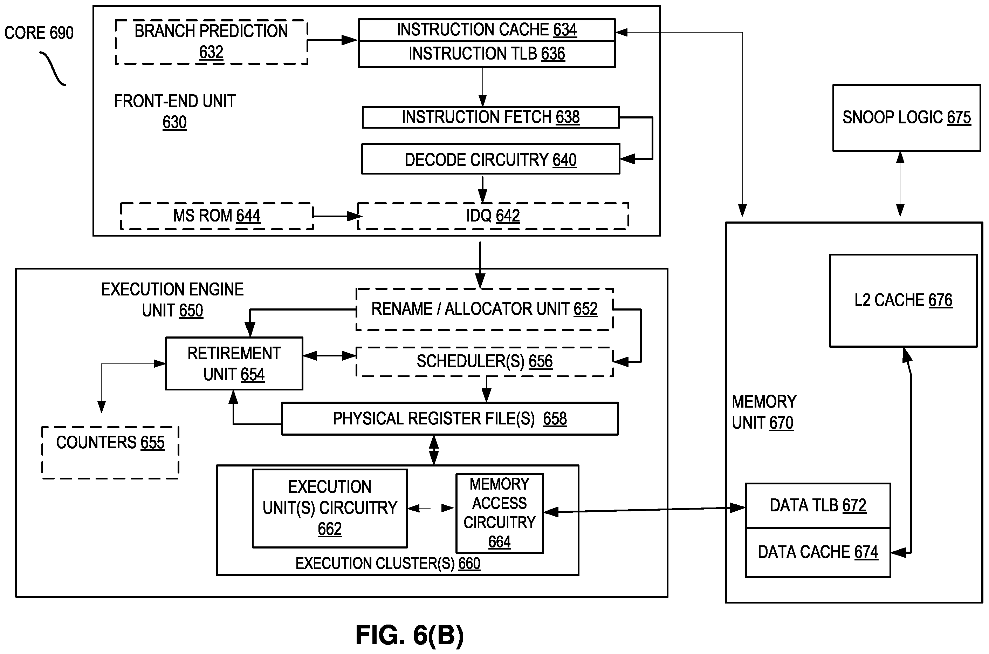

FIG. 6(A) is a block diagram illustrating both an example in-order pipeline and an example register renaming, out-of-order issue/execution pipeline according to examples. FIG. 6(B) is a block diagram illustrating both an example in-order architecture core and an example register renaming, out-of-order issue/execution architecture core to be included in a processor according to examples. The solid lined boxes in FIGS. 6(A)-(B) illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 6(A), a processor pipeline 600 includes a fetch stage 602, an optional length decoding stage 604, a decode stage 606, an optional allocation (Alloc) stage 608, an optional renaming stage 610, a schedule (also known as a dispatch or issue) stage 612, an optional register read/memory read stage 614, an execute stage 616, a write back/memory write stage 618, an optional exception handling stage 622, and an optional commit stage 624. One or more operations can be performed in each of these processor pipeline stages. For example, during the fetch stage 602, one or more instructions are fetched from instruction memory, and during the decode stage 606, the one or more fetched instructions may be decoded, addresses (e.g., load store unit (LSU) addresses) using forwarded register ports may be generated, and branch forwarding (e.g., immediate offset or a link register(LR)) may be performed. In some examples, the decode stage 606 and the register read/memory read stage 614 may be combined into one pipeline stage. In some examples, during the execute stage 616, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 6(B) may implement the pipeline 600 as follows: 1) the instruction fetch circuitry 638 performs the fetch and length decoding stages 602 and 604; 2) the decode circuitry 640 performs the decode stage 606; 3) the rename/allocator unit circuitry 652 performs the allocation stage 608 and renaming stage 610; 4) the scheduler(s) circuitry 656 performs the schedule stage 612; 5) the physical register file(s) circuitry 658 and the memory unit circuitry 670 perform the register read/memory read stage 614; the execution cluster(s) 660 perform the execute stage 616; 6) the memory unit circuitry 670 and the physical register file(s) circuitry 658 perform the write back/memory write stage 618; 7) various circuitry may be involved in the exception handling stage 622; and 8) the retirement unit circuitry 654 and the physical register file(s) circuitry 658 perform the commit stage 624.

FIG. 6(B) shows a processor core 690 including front-end unit circuitry 630 coupled to execution engine unit circuitry 650, and both are coupled to memory unit circuitry 670. The core 690 may be a reduced instruction set architecture computing (RISC) core, a complex instruction set architecture computing (CISC) core, a very long instruction word (VLIW) core, or a hybrid or alternative core type. As yet another option, the core 690 may be a special-purpose core, such as, for example, a network or communication core, compression engine, co-processor core, general purpose computing graphics processing unit (GPGPU) core, graphics core, or the like.

The front-end unit circuitry 630 may include branch prediction circuitry (e.g., a branch prediction unit (BPU)) 632 coupled to instruction cache circuitry 634, which is coupled to an instruction translation lookaside buffer (TLB) 636, which is coupled to instruction fetch circuitry 638, which is coupled to decode circuitry 640. In some examples, the instruction cache circuitry 634 is included in the memory unit circuitry 670 rather than the front-end unit circuitry 630. The decode circuitry 640 (or decoder) may decode instructions, and generate as an output one or more micro-operations, micro-code entry points, microinstructions, other instructions, or other control signals, which are decoded from, or which otherwise reflect, or are derived from, the original instructions. The decode circuitry 640 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 640 may be implemented using various different mechanisms. Examples of suitable mechanisms include, but are not limited to, look-up tables, hardware implementations, programmable logic arrays (PLAs), microcode read only memories (ROMs), etc. In some examples, the core 690 includes a micro-sequencer ROM (MSROM) 644 or other medium that stores microcode for certain macroinstructions (e.g., in decode circuitry 640 or otherwise within the front-end unit circuitry 630). In some examples, the decode circuitry 640 includes a micro-operation (micro-op) or operation cache (not shown) to hold/cache decoded operations, micro-tags, or micro-operations generated during the decode or other stages of the processor pipeline 600. In other examples, a separate instruction decode queue (IDQ) 642 store micro-ops. The decode circuitry 640 and/or IDQ 642 may be coupled to rename/allocator unit circuitry 652 in the execution engine unit circuitry 650.

The execution engine unit circuitry 650 includes the rename/allocator unit circuitry 652 coupled to retirement unit circuitry 654 and a set of one or more scheduler(s) circuitry 656. The scheduler(s) circuitry 656 represents any number of different schedulers, including reservations stations, central instruction window, etc. In some examples, the scheduler(s) circuitry 656 can include arithmetic logic unit (ALU) scheduler/scheduling circuitry, ALU queues, address generation unit (AGU) scheduler/scheduling circuitry, AGU queues, etc. The scheduler(s) circuitry 656 is coupled to the physical register file(s) circuitry 658. Each of the physical register file(s) circuitry 658 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 658 includes vector registers unit circuitry, writemask registers unit circuitry, and scalar register unit circuitry. These register units may provide architectural vector registers, vector mask registers, general-purpose registers, etc. The physical register file(s) circuitry 658 is coupled to the retirement unit circuitry 654 (also known as a retire queue or a retirement queue) to illustrate various ways in which register renaming and out-of-order (OOO) execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 654 and the physical register file(s) circuitry 658 are coupled to the execution cluster(s) 660. The execution cluster(s) 660 includes a set of one or more execution unit(s) circuitry 662 and a set of one or more memory access circuitry 664. The execution unit(s) circuitry 662 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). In some examples, execution unit(s) circuitry 662 may include hardware to support functionality for instructions for one or more of a compression engine, graphics processing, neural-network processing, in-memory analytics, matrix operations, cryptographic operations, data streaming operations, data graph operations, etc.

While some examples may include a number of execution units or execution unit circuitry dedicated to specific functions or sets of functions, other examples may include only one execution unit circuitry or multiple execution units/execution unit circuitry that all perform all functions. The scheduler(s) circuitry 656, physical register file(s) circuitry 658, and execution cluster(s) 660 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 664). It should also be understood that where separate pipelines are used, one or more of these pipelines may be out-of-order issue/execution and the rest in-order.

In some examples, the execution engine unit circuitry 650 may perform load store unit (LSU) address/data pipeliningto an Advanced Microcontroller Bus (AMB) interface (not shown), and address phase and writeback, data phase load, store, and branches.

The set of memory access circuitry 664 is coupled to the memory unit circuitry 670, which includes data TLB circuitry 672 coupled to data cache circuitry 674 coupled to level 2 (L2) cache circuitry 676. In some examples, the memory access circuitry 664 may include load unit circuitry, store address unit circuitry, and store data unit circuitry, each of which is coupled to the data TLB circuitry 672 in the memory unit circuitry 670. The instruction cache circuitry 634 is further coupled to the level 2 (L2) cache circuitry 676 in the memory unit circuitry 670. In some examples, the instruction cache 634 and the data cache 674 are combined into a single instruction and data cache (not shown) in L2 cache circuitry 676, level 3 (L3) cache circuitry (not shown), and/or main memory. The L2 cache circuitry 676 is coupled to one or more other levels of cache and eventually to a main memory. In some examples, the memory access circuitry 664 is a part of or is a memory execution unit. In some examples, a memory execution unit includes one or more of the data TLB 672 and/or the data cache 674.

In some examples, a core includes snoop logic 675 to perform snooping operations. In some examples, the snoop logic 675 is external to the core (e.g., as a part of a system agent or caching and home agent). In some examples, the snoop logic 675 has aspects that are a part of a core and aspects that are external to a core.

The core 690 may support one or more instructions sets (e.g., the x86 instruction set architecture (optionally with some extensions that have been added with newer versions); the MIPS instruction set architecture; the ARM instruction set architecture (optionally with optional additional extensions such as NEON, etc.); RISC instruction set architecture), including the instruction(s) described herein. In some examples, the core 690 includes logic to support a packed data instruction set architecture extension (e.g., AVX1, AVX2, AVX512, AMX, etc.), thereby allowing the operations used by many multimedia applications to be performed using packed data.

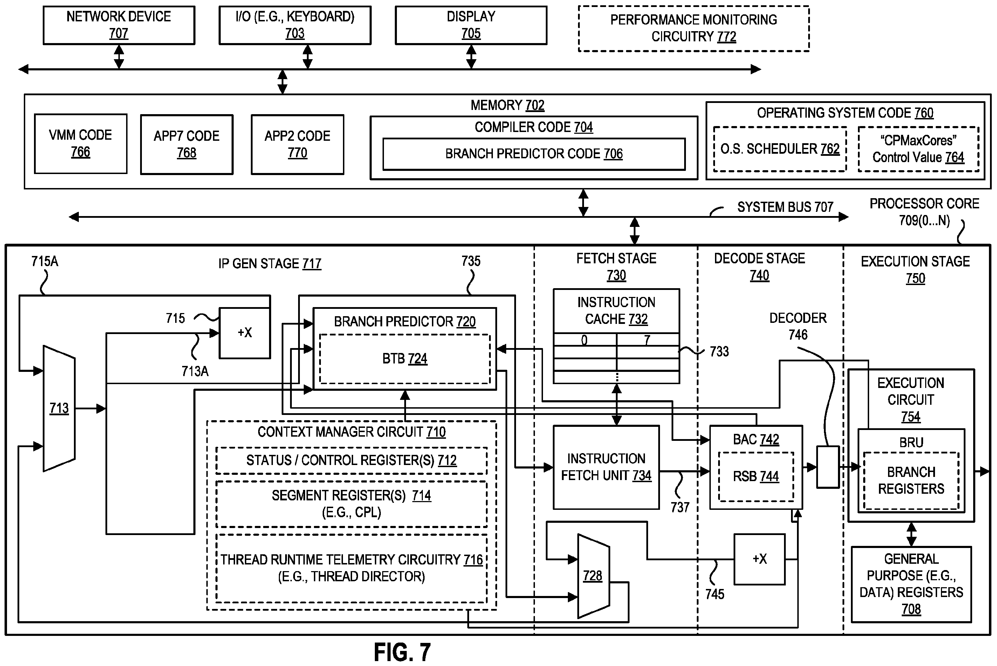

FIG. 7 illustrates a computer system including a processor core according to some examples. Processor core 709 includes multiple components (e.g., microarchitectural prediction and caching mechanisms) that may be shared by multiple contexts (e.g., virtualized as a plurality of logical processors implemented on a single SMT core). For example, branch target buffer (BTB) 724, instruction cache 732, and/or return stack buffer (RSB) 744 may be shared by multiple contexts. Certain examples include a context manager circuit 710 to maintain multiple unique states associated with a plurality of contexts simultaneously and switch active contexts among those tracked by the context manager circuit.

Depicted computer system 700 includes a branch predictor 720 and a branch address calculator 742 (BAC) in a pipelined processor core 709(0)-709(N) according to examples of the disclosure. Referring to FIG. 7, a pipelined processor core (e.g., 709(0) includes an instruction pointer generation (IPtr Gen) stage 711, a fetch stage 730, a decode stage 740, and an execution stage 750. In one example, computer system 700 includes multiple cores 709(0-N), where N is any positive integer. In another example, computer system 700 includes a single core.

In certain examples, each processor core 709(0-N) instance supports multi-threading (e.g., executing two or more parallel sets of operations or threads on a first and second logical core), and may do so in a variety of ways including time sliced multi-threading, simultaneous multi-threading (e.g., where a single physical core provides a logical core for each of the threads that physical core is simultaneously multi-threading), or a combination thereof (e.g., time sliced fetching and decoding and simultaneous multi-threading thereafter). In the depicted example, each single processor core 709(0) to 709(N) includes an instance of branch predictor 720. Branch predictor 720 may include a BTB 724.

In certain examples, branch target buffer 724 stores (e.g., in a branch predictor array) the predicted target instruction corresponding to each of a plurality of branch instructions (e.g., branch instructions of a section of code that has been executed multiple times). In the depicted example, a BAC 742 is included which accesses (e.g., includes) a return stack buffer 744 (RSB). In certain examples, return stack buffer 744 is to store (e.g., in a stack data structure of last data in is the first data out (LIFO)) the return addresses of any CALL instructions (e.g., that push their return address on the stack).

BAC 742 is used to calculate addresses for certain types of branch instructions and/or to verify branch predictions made by a branch predictor (e.g., BTB). In certain examples, the branch address calculator performs branch target and/or next sequential linear address computations. In certain examples, the branch address calculator performs static predictions on branches based on the address calculations.

In certain examples, the branch address calculator 742 contains a return stack buffer 744 to keep track of the return addresses of the CALL instructions. In one example, the branch address calculator attempts to correct any improper prediction made by the branch predictor 720 to reduce branch misprediction penalties. As one example, the branch address calculator verifies branch prediction for those branches whose target can be determined solely from the branch instruction and instruction pointer.

In certain examples, the branch address calculator 742 maintains the return stack buffer 744 utilized as a branch prediction mechanism for determining the target address of return instructions, e.g., where the return stack buffer operates by monitoring all "call subroutine" and "return from subroutine" branch instructions. In one example, when the branch address calculator detects a "call subroutine" branch instruction, the branch address calculator pushes the address of the next instruction onto the return stack buffer, e.g., with a top of stack pointer marking the top of the return stack buffer. By pushing the address immediately following each "call subroutine" instruction onto the return stack buffer, the return stack buffer contains a stack of return addresses in this example. When the branch address calculator later detects a "return from subroutine" branch instruction, the branch address calculator pops the top return address off of the return stack buffer, e.g., to verify the return address predicted by the branch predictor 720. In one example, for a direct branch type, the branch address calculator is to (e.g., always) predict taken for a conditional branch, for example, and if the branch predictor does not predict taken for the direct branch, the branch address calculator overrides the branch predictor's missed prediction or improper prediction.

In certain examples, core 709 includes circuitry to validate branch predictions made by the branch predictor 720. Each branch predictor 720 entry (e.g., in BTB 724) may further include a valid field and a bundle address (BA) field which are used to increase the accuracy and validate branch predictions performed by the branch predictor 720, as is discussed in more detail below. In one example, the valid field and the BAfield each consist of one bit one-bit fields. In other examples, however, the size of the valid and BA fields may vary. In one example, a fetched instruction is sent (e.g., by BAC 742 from line 737) to the decoder 746 to be decoded, and the decoded instruction is sent to the execution circuit (e.g., unit) 754 to be executed.

Depicted computer system 700 includes a network device 707, input/output (I/O) circuit 703 (e.g., keyboard), display 705, and a system bus (e.g., interconnect) 707.

In one example, the branch instructions stored in the branch predictor 720 are pre-selected by a compiler as branch instructions that will be taken. In certain examples, the compiler code 704, as shown stored in the memory 702 of FIG. 7, includes a sequence of code that, when executed, translates source code of a program written in a high-level language into executable machine code. In one example, the compiler code 704 further includes additional branch predictor code 706 that predicts a target instruction for branch instructions (for example, branch instructions that are likely to be taken (e.g., pre-selected branch instructions)). The branch predictor 720 (e.g., BTB 724 thereof) is thereafter updated with a target instruction for a branch instruction. In one example, software manages a hardware BTB, e.g., with the software specifying the prediction mode or with the prediction mode defined implicitly by the mode of the instruction that writes the BTB also setting a mode bit in the entry.

Memory 702 may include operating system (OS) code 760, virtual machine monitor (VMM) code 766, first application (e.g., program) code 768, second application (e.g., program) code 770, or any combination thereof.

In certain examples, OS code 760 is to implement an OS scheduler 762, e.g., utilizing thread runtime telemetry circuitry 716 (e.g., (i) Hardware Guide Scheduler (HGS) (or HGS+) circuitry or (ii) Thread Director circuitry) of processor core 709 to schedule one or more threads for processing in core 709 (e.g., logical core of a plurality of logical cores implemented by core 709). In certain examples, the OS scheduler 762 is to implement one or more scheduling modes (e.g., selects from a plurality of scheduling modes). In certain examples, a scheduling mode causes the scheduling of thread(s) with a dynamic SMT scheduling disclosed herein, for example, to provide SMT core isolation via forced core parking of logical SMT sibling processors when desired (e.g., when necessary), e.g., while allowing a less restrictive (e.g., "small or idle") scheduling policy for user-initiated background tasks (e.g., compiler/render, etc.) running on the system to take advantage of SMT physical processor cores (e.g., performance cores (P-cores)) (e.g., big cores). In certain examples, an OS 760 includes a control value 764, e.g., to set a number of logical processors that can be in an un-parked (or idle) state at any given time. In certain examples, control value 764 (e.g., "CPMaxCores") is set (e.g., by a user) to specify the maximum percentage of logical processors (e.g., in terms of logical processors within each Non-Uniform Memory Access (NUMA) node, e.g., as discussed below) that can be in the un-parked state at any given time. In one example (e.g., in a NUMA node) with sixteen logical processors, configuring the value of this setting to 50% ensures that no more than eight logical processors are ever in the un-parked state at the same time. In certain examples, the value of this "CPMaxCores") setting will automatically be rounded up to a minimum number of cores value (e.g., "CPMinCores") that specifies the minimum percentage of logical processors (e.g., in terms of all logical processors that are enabled on the system within each NUMA node) that can be placed in the un-parked state at any given time. In one example (e.g., in a NUMA node) with sixteen logical processors, configuring the value of this "CPMinCores" setting to 25% ensures that at least four logical processors are always in the un-parked state.

In certain examples, non-uniform memory access (NUMA) is a computer system architecture that is used with multiprocessor designs in which some regions of memory have greater access latencies, e.g., due to how the system memory and physical processors (e.g., processor cores) are interconnected. In certain examples, some memory regions are connected directly to one or more physical processors, with all physical processors connected to each other through various types of interconnection fabric. In certain examples, for large multi-processor (e.g., multi-core) systems, this arrangement results in less contention for memory and increased system performance. In certain examples, a NUMA architecture divides memory and processors into groups, called NUMA nodes. In certain examples, from the perspective of any single processor in the system, memory that is in the same NUMA node as that processor is referred to as local, and memory that is contained in another NUMA node is referred to as remote (e.g., where a processor (e.g., core) can access local memory faster).

In certain examples virtual machine monitor (VMM) code 766 is to implement one or more virtual machines (VMs) as an emulation of a computer system. In certain examples, VMs are based on a specific computer architecture and provide the functionality of an underlying physical computer system. Their implementations may involve specialized hardware, firmware, software, or a combination. In certain examples, Virtual Machine Monitor (VMM) (also known as a hypervisor) is a software program that, when executed, enables the creation, management, and governance of VM instances and manages the operation of a virtualized environment on top of a physical host machine. A VMM is the primary software behind virtualization environments and implementations in certain examples. When installed over a host machine (e.g., processor) in certain examples, a VMM facilitates the creation of VMs, e.g., each with separate operating systems (OS) and applications. The VMM may manage the backend operation of these VMs by allocating the necessary computing, memory, storage and other input/output (I/O) resources, such as, but not limited to, an input/output memory management unit (IOMMU). The VMM may provide a centralized interface for managing the entire operation, status and availability of VMs that are installed over a single host machine or spread across different and interconnected hosts.

As discussed below, depicted core (e.g., branch predictor 720 thereof) includes access to one or more registers. In certain examples, core include one or more general purpose register(s) 708 and/or one more status/control registers 712.

In certain examples, each entry for the branch predictor 720 (e.g., in BTB 724 thereof) includes a tag field and a target field. In one example, the tag field of each entry in the BTB stores at least a portion of an instruction pointer (e.g., memory address) identifying a branch instruction. In one example, the tag field of each entry in the BTB stores an instruction pointer (e.g., memory address) identifying a branch instruction in code. In one example, the target field stores at least a portion of the instruction pointer for the target of the branch instruction identified in the tag field of the same entry. Moreover, in other examples, the entries for the branch predictor 720 (e.g., in BTB 724 thereof) includes one or more other fields. In certain examples, an entry does not include a separate field to assist in the prediction of whether the branch instruction is taken, e.g., if a branch instruction is present (e.g., in the BTB), it is considered to be taken.

As shown in FIG. 7, the IPtr Gen mux 713 of IPtr generation stage 711 receives an instruction pointer from line 715A. The instruction pointer provided via line 715A is generated by the incrementor circuit 715, which receives a copy of the most recent instruction pointer from the path 713A. The incremented circuit 715 may increment the present instruction pointer by a predetermined amount, to obtain the next sequential instruction from a program sequence presently being executed by the core.

In one example, upon receipt of the IPtr from IPtr Gen mux 713, the branch predictor 720 compares a portion of the IPtr with the tag field of each entry in the branch predictor 720 (e.g., BTB 724). If no match is found between the IPtr and the tag fields of the branch predictor 720, the IPtr Gen muxwill proceed to select the next sequential IPtr as the next instruction to be fetched in this example. Conversely, if a match is detected, the branch predictor 720 reads the valid field of the branch predictor entry which matches with the IPtr. If the valid field is not set (e.g., has a logical value of 0) the branch predictor 720 considers the respective entry to be "invalid" and will disregard the match between the IPtr and the tag of the respective entry in this example, e.g., and the branch target of the respective entry will not be forwarded to the IPtr Gen Mux. On the other hand, if the valid field of the matching entry is set (e.g., has a logical value of 7), the branch predictor 720 proceeds to perform a logical comparison between a predetermined portion of the instruction pointer (IPtr) and the branch address (BA) field of the matching branch predictor entry in this example. If an "allowable condition" is present, the branch target of the matching entry will be forwarded to the IPtr Gen mux, and otherwise, the branch predictor 720 disregards the match between the IPtr and the tag of the branch predictor entry. In some examples, the entry indicator is formed from not only the current branch IPtr, but also at least a portion of the global history.

More specifically, in one example, the BA field indicates where the respective branch instruction is stored within a line of cache memory 732. In certain examples, a processor is able to initiate the execution of multiple instructions per clock cycle, wherein the instructions are not interdependent and do not use the same execution resources.

For example, each line of the instruction cache 732 shown in FIG. 7 includes multiple instructions (e.g., six instructions). Moreover, in response to a fetch operation by the fetch unit 734, the instruction cache 732 responds (e.g., in the case of a "hit") by providing a full line of cache to the fetch unit 734 in this example. The instructions within a line of cache may be grouped as separate "bundles." For example, as shown in FIG. 7, the first three instructions in a cache line 733 may be addressed as bundle 0, and the second three instructions may be addressed as bundle 7. Each of the instructions within a bundle are independent of each other (e.g., can be simultaneously issued for execution). The BA field provided in the branch predictor 720 entries is used to identify the bundle address of the branch instruction which corresponds to the respective entry in certain examples. For example, in one example, the BA identifies whether the branch instruction is stored in the first or second bundle of a particular cache line.

In one example, the branch predictor 720 performs a logical comparison between the BA field of a matching entry and a predetermined portion of the IPtr to determine if an "allowable condition" is present. For example, in one example, the fifth bit position of the IPtr (e.g. IPtr[4]) is compared with the BA field of a matching (e.g., BTB) entry. In one example, an allowable condition is present when IPtr [4] is not greater than the BA. Such an allowable condition helps prevent the apparent unnecessary prediction of a branch instruction, which may not be executed. That is, when less than all of the IPtr is considered when doing a comparison against the tags of the branch predictor 720, it is possible to have a match with a tag, which may not be a true match. Nevertheless, a match between the IPtr and a tag of the branch predictor indicates a particular line of cache, which includes a branch instruction corresponding to the respective branch predictor entry, may be aboutto be executed. Specifically, if the bundle address of the IPtr is not greater than the BA field of the matching branch predictor entry, then the branch instruction in the respective cache line is soon to be executed. Hence, a performance benefit can be achieved by proceeding to fetch the target of the branch instruction in certain examples.

As discussed above, if an "allowable condition" is present, the branch target of the matching entry will be forwarded to the IPtr Gen mux in this example. Otherwise, the branch predictor will disregard the match between the IPtr and the tag. In one example, the branch target forwarded from the branch predictor is initially sent to a Branch Prediction (BP) resteer mux 728, before it is sent to the IPtr Gen mux. The BP resteer mux 728, as shown in FIG. 7, may also receive instruction pointers from other branch prediction devices. In one example, the input lines received by the BP resteer mux will be prioritized to determine which input line will be allowed to pass through the BP resteer mux onto the IPtr Gen mux.

In addition to forwarding a branch target to the BP resteer mux, upon detecting a match between the IPtr and a tag of the branch predictor, the BA of the matching branch predictor entry is forwarded to the Branch Address Calculator (BAC) 742. The BAC 742 is shown in FIG. 7 to be located in the decode stage 740 but may be located in other stage(s). The BAC may also receive a cache line from the fetch unit 734 via line 737.

The IPtr selected by the IPtr Gen mux is also forwarded to the fetch unit 734, via data line 735 in this example. Once the IPtr is received by the fetch unit 734, the cache line corresponding to the IPtr is fetched from the instruction cache 732. The cache line received from the instruction cache is forwarded to the BAC, via data line 737.

Upon receipt of the BA in this example, the BAC will read the BA to determine where the pre-selected branch instruction (e.g., identified in the matching branch predictor entry) is located in the next cache line to be received by the BAC (e.g., the first or second bundle of the cache line). In one example, it is predetermined where the branch instruction is located within a bundle of a cache line (e.g., in a bundle of three instructions, the branch instruction will be stored as the second instruction).

In alternative examples, the BA includes additional bits to more specifically identify the address of the branch instruction within a cache line. Therefore, the branch instruction would not be limited to a specific instruction position within a bundle.

After the BAC determines the address of the pre-selected branch instruction within the cache line and has received the respective cache line from the fetch unit 734, the BAC will decode the respective instruction to verify the IPtr truly corresponds to a branch instruction. If the instruction addressed by BA in the received cache line is a branch instruction, no correction for the branch prediction is necessary. Conversely, if the respective instruction in the cache line is not a branch instruction (i.e., the IPtr does not correspond to a branch instruction), the BAC will send a message to the branch predictor to invalidate the respective branch predictor entry, to prevent similar mispredictions on the same branch predictor entry. Thereafter, the invalidated branch predictor entry will be overwritten by a new branch predictor entry.

In addition, in one example, the BAC will increment the IPtr by a predetermined amount and forward the incremented IPtr to the BP resteer mux 728, via data line 745, e.g., the data line 745 coming from the BAC will take priority over the data line from the branch predictor. As a result, the incremented IPtr will be forwarded to the IPtr Gen mux and passed to the fetch unit in order to correct the branch misprediction by fetching the instructions that sequentially follow the IPtr.

In certain examples, the context manager circuit 710 allows one or more of the above discussed shared components to be utilized by multiple contexts, e.g., while alleviating information being leaked across contexts by directly or indirectly observing the information stored. Computing system 700 (e.g., core 709) may include a control register (e.g., model specific register(s)) 712), a segment register 714 (e.g., indicating the current privilege level), a thread runtime telemetry circuitry 716, or any combination thereof. Segment register 714 may store a value indicating a current privilege level of software operating on a logical core, e.g., separately for each logical core. In one example, the current privilege level is stored in a current privilege level (CPL) field of a code segment selector register of segment register 714. In certain examples, processor core 709 requires a certain level of privilege to perform certain actions, for example, actions requested by a particular logical core (e.g., actions requested by software running on that particular logical core).

Each thread may have a context. In certain examples, contexts are identified by one or more of the following properties: 1) a hardware thread identifier such as a value that identifies one of multiple logical processors (e.g., logical cores) implemented on the same physical core through techniques such as simultaneous multi-threading (SMT); 2) a privilege level such as implemented by rings; 3) page table base address or code segment configuration such as implemented in a control register (e.g., CR3) or code segment (CS) register; 4) address space identifiers (ASIDs) such as implemented by Process Context ID (PCID) or Virtual Process ID (VPID) that semantically differentiate the virtual-to-physical mappings in use by the CPU; 5) key registers that contain cryptographically sealed assets (e.g., tokens) used for determination of privilege of the executing software; and/or 6) ephemeral - a context change such as a random reset of context.

Over any non-trivial period of time, many threads (e.g., contexts thereof) may be active within a physical core. In certain examples, system software time-slices between applications and system software functions, potentially allowing many contexts access to microarchitectural prediction and/or caching mechanisms.

An instance of a thread runtime telemetry circuitry 716 (e.g., (i) Hardware Guide Scheduler (HGS) (or HGS+) circuitry or (ii) Thread Director circuitry) may be in each core 709(0-N) of computer system 700 (e.g., for each logical processor implemented by a core). A single instance of a thread runtime telemetry circuitry 716 may be anywhere in computer system 700, e.g., a single instance of thread runtime telemetry circuitry used for all cores 709(0-N) present.

In one example, status/control registers 712 include status register(s) to indicate the status of the processor core and/or control register(s) to control functionality of the processor core. In one example, one or more (e.g., control) registers are (e.g., only) written to at the request of the OS running on the processor, e.g., where the OS operates in privileged (e.g., system) mode, but not for code running in non-privileged (e.g., user) mode. In one example, a control register can only be written to by software running in supervisor mode, and not by software running in user mode. In certain examples, control register 712 includes a field to enable the thread runtime telemetry circuitry 716.

In certain examples, decoder 746 decodes an instruction, and that decoded instruction is executed by the execution circuit 754, for example, to perform operations according to the opcode of the instruction.

In certain examples, decoder 746 decodes an instruction, and that decoded instruction is executed by the execution circuit 754, for example, to reset one or more capabilities (or one more software thread runtime property histories), e.g., of thread runtime telemetry circuitry 716.

Computer system 700 may include performance monitoring circuitry 772, e.g., including any number of performance counters therein to count, monitor, and/or log events, activity, and/or other measure related to performance. In various examples, performance counters may be programmed by software running on a core to log performance monitoring information. For example, any of performance counters may be programmed to increment for each occurrence of a selected event, or to increment for each clock cycle during a selected event. The events may include any of a variety of events related to execution of program code on a core, such as branch mispredictions, cache hits, cache misses, translation lookaside buffer hits, translation lookaside buffer misses, etc. Therefore, performance counters may be used in efforts to tune or profile program code to improve or optimize performance. In certain examples, thread runtime telemetry circuitry 716 is part of performance monitoring circuitry 772. In certain examples, thread runtime telemetry circuitry 716 is separate from performance monitoring circuitry 772.

In certain examples, thread runtime telemetry circuitry 716 (e.g., (i) Hardware Guide Scheduler (HGS) (or HGS+) circuitry or (ii) Thread Director circuitry) is to generate "capability" values to differentiate logical processors (e.g., CPUs) of each physical processor core 709 with different (e.g., current) computing capability (e.g., computing throughput). In certain examples, the thread runtime telemetry circuitry 716 generates capability values that are normalized in a (e.g., 256, 512, 1024, etc.) range. In certain examples, the thread runtime telemetry circuitry 716 is able to estimate how busy and/or energy efficient a logical processor (e.g., CPU) is (e.g., on a per class basis) via the capability values, e.g., and an OS scheduler 762 is to utilize the capability values when evaluating performance versus energy trade-offs for scheduling threads.

In certain examples, the performance (Perf) capability value of a logical processor (e.g., CPU) represents the amount of work it can absorb when running at its highest frequency, e.g., compared to the most capable logical processor (e.g., CPU) of the system 700. In certain examples, the performance (Perf) capability value for a single logical processor (e.g., CPU) of the system 700 is a value (e.g., an 8-bit value indicating values of 0 to 255) that specifies the relative performance level of the logical processor, e.g., where higher values indicate higher performance and/or the lowest performance level of 0 indicates a recommendation to the OS to not schedule any threads on it for performance reasons.

In certain examples, the energy efficiency (EE) capability value of a logical processor (e.g., CPU) of the system 700 represents its energy efficiency (e.g., in performing processing). In certain examples, the energy efficiency (EE) capability value of a single logical processor (e.g., CPU) is a value (e.g., an 8-bitvalue indicating values of 0 to 255) that specifies the relative energy efficiency level of the logical processor, e.g., where higher values indicate higher energy efficiency and/or the lowest energy efficiency capability of 0 indicates a recommendation to the OS to not schedule any software threads on it for efficiency reasons. In certain examples, an energy efficiency capability of the maximum value (e.g., 255) indicates which logical processors have the highest relative energy efficiency capability. In certain examples, the maximum value (e.g., 255) is an explicit recommendation for the OS to consolidate work on those logical processors for energy efficiency reasons.

In certain examples, the functionality discussed herein (e.g., the core isolation via the parking of one or more SMT sibling logical core) is implemented by using thread runtime telemetry circuitry 716 (e.g., Intel^{®} Thread Director circuitry, e.g., microcontroller) to dynamically park an SMT core's logical core sibling(s) (e.g., when concurrent scenarios are executed). In certain examples, a processor (e.g., via non-transitory machine-readable medium that stores power management code (e.g., p-code)) determines, using per energy performance preference (EPP) group utilization and quality of service (QoS), if there is limited threaded high QoS and/or low EPP activity (e.g., foreground threads) and multi-threaded low QoS and/or high EPP activity (e.g., background threads). In certain examples, if so, then the processor (e.g., via non-transitory machine-readable medium that stores power management code (e.g., p-code)) will populate a data structure that stores telemetry data (e.g., per logical processor core) of the thread runtime telemetry circuitry 716 to cause the dynamic parking of an SMT core's logical core sibling(s). In certain examples, such a data structure stores data of (i) Hardware Guide Scheduler (HGS) (or HGS+) circuitry or (ii) Thread Director circuitry. In certain examples, the thread runtime telemetry circuitry 716 is to cause a write of a (e.g., capability) value (e.g., zero or about zero) to the entry or entries of the sibling logical processor core(s) of a logical processor core of an SMT physical processor core to hint to the OS 760 (e.g., to the OS scheduler 762) to avoid using those sibling logical processor core(s), e.g., to avoid scheduling a thread on those sibling logical processor core(s).

In certain examples, the thread runtime telemetry circuitry 716 (e.g., (i) Hardware Guide Scheduler (HGS) (or HGS+) circuitry or (ii) Thread Director circuitry) (e.g., via its corresponding data structure) communicates numeric performance and numeric power efficiency capabilities of each logical core in a certain (e.g., 0 to 255) (e.g., 0 to 511) (e.g., 0 to 1023) range to the OS in real-time. In certain examples, when either the performance or energy capabilities efficiency of a logical processor core (e.g., CPU) is zero, the thread runtime telemetry circuitry 716 adapts to the current instruction mix and recommends not scheduling any tasks on such logical core.

In certain examples, thread runtime telemetry circuitry 716 predicts capability values based on the dynamic characteristics of a system (e.g., eliminating a need to run a workload on each core to measure its amount of work), for example, by providing ISA-level counters (e.g., number of load instructions) that may be shared among various cores, and lowering the hardware implementation costs of performance monitoring by providing a single counter based on multiple performance monitoring events.

Each core 709 of computer system 700 may be the same (e.g., symmetric cores) or a proper subset of one or more of the cores may be different than the other cores (e.g., asymmetric cores). In one example, a set of asymmetric cores includes a first type of core (e.g., a lower power core) and a second, higher performance type of core (e.g., a higher power core). In certain examples, an asymmetric processor is a hybrid processor that includes one or more less powerful non-SMT physical processor cores (e.g., efficient cores (E-cores)) (e.g., small cores) and one or more SMT physical processor cores (e.g., performance cores (P-cores)) (e.g., big cores).

In certain examples, a computer system includes multiple cores that all execute the same instruction set architecture (ISA). In certain examples, a computer system includes multiple cores, each having an instruction set architecture (ISA) according to which it executes instructions issued or provided to it and/or the system by software. In this specification, the use of the term "instruction" may generally refer to this type of instruction (which may also be called a macro-instruction or an ISA-level instruction), as opposed to: (7) a micro-instruction or micro-operation that may be provided to execution and/or scheduling hardware as a result of the decoding (e.g., by a hardware instruction-decoder) of a macro-instruction, and/or (2) a command, procedure, routine, subroutine, or other software construct, the execution and/or performance of which involves the execution of multiple ISA-level instructions.

In some such systems, the system may be heterogeneous because it includes cores that have different ISAs. A system may include a first core with hardware, hardwiring, microcode, control logic, and/or other micro-architecture designed to execute particular instructions according to a particular ISA (or extensions to or other subset of an ISA), and the system may also include a second core without such micro-architecture. In other words, the first core may be capable of executing those particular instructions without any translation, emulation, or other conversion of the instructions (except the decoding of macro-instructions into micro-instructions and/or micro-operations), whereas the second core is not. In that case, that particular ISA (or extensions to or subset of an ISA) may be referred to as supported (or natively supported) by the first core and unsupported by the second core, and/or the system may be referred to as having a heterogeneous ISA.

In other such systems, the system may be heterogeneous because it includes cores having the same ISA but differing in terms of performance, power consumption, and/or some other processing metric or capability. The differences may be provided by the size, speed, and/or microarchitecture of the core and/or its features. In a heterogeneous system, one or more cores may be referred to as "big" because they are capable of providing, they may be used to provide, and/or their use may provide and/or result in a greater level of performance (e.g., greater instructions per cycle (IPtrC)), power consumption (e.g., less energy efficient), and/or some other metric than one or more other "small" or "little" cores in the system.

In these and/or other heterogeneous systems, it may be possible for a task to be performed by different types of cores. Furthermore, it may be possible for a scheduler (e.g., a hardware scheduler and/or a software scheduler 762 of an operating system 760 executing on the processor) to schedule or dispatch tasks to different cores and/or migrate tasks between/among different cores (generally, a "task scheduler"). Therefore, efforts to optimize, balance, or otherwise affect throughput, wait time, response time, latency, fairness, quality of service, performance, power consumption, and/or some other measure on a heterogeneous system may include task scheduling decisions.

For example, if a particular task is mostly stalled due to long latency memory accesses, it may be more efficient to schedule it on a "small" core (e.g., E-core) and save power of an otherwise bigger core (e.g., P-core). On the other hand, heavy tasks may be scheduled on a big core (e.g., P-core) to complete the compute sooner, e.g., and let the system go into sleep/idle sooner. Due to the diversity of workloads a system (e.g., a client) can perform, the dynamic characteristics of a workload, and conditions of the system itself, it might not be straightforward for a pure software solution to make such decisions. Therefore, the use of examples herein (e.g., of a thread runtime telemetry circuitry) may be desired to provide information upon which such decisions may be based, in part or in full. Furthermore, the use of these examples may be desired in efforts to optimize and/or tune applications based on the information that may be provided.

A processor may include a thread runtime telemetry circuitry 716 that is shared by multiple contexts (and/or cores. A processor may contain other shared structures dealing with state including, for example, prediction structures, caching structures, a physical register file (renamed state), and buffered state (a store buffer). Prediction structures, such as branch predictors or prefetchers, may store state about past execution behavior that is used to predict future behavior. A processor may use these predictions to guide speculation execution, achieving performance that would not be possible otherwise. Caching structures, such as caches or TLBs, may keep local copies of shared state so as to make accesses by the processor (e.g., very) fast.

Note that discussions of the core, etc. typically use FIG. 6 for ease of understanding in the examples below, but the description is not limited to this figure. For example, the core, etc. of FIG. 7 also support(s) SDC, etc.

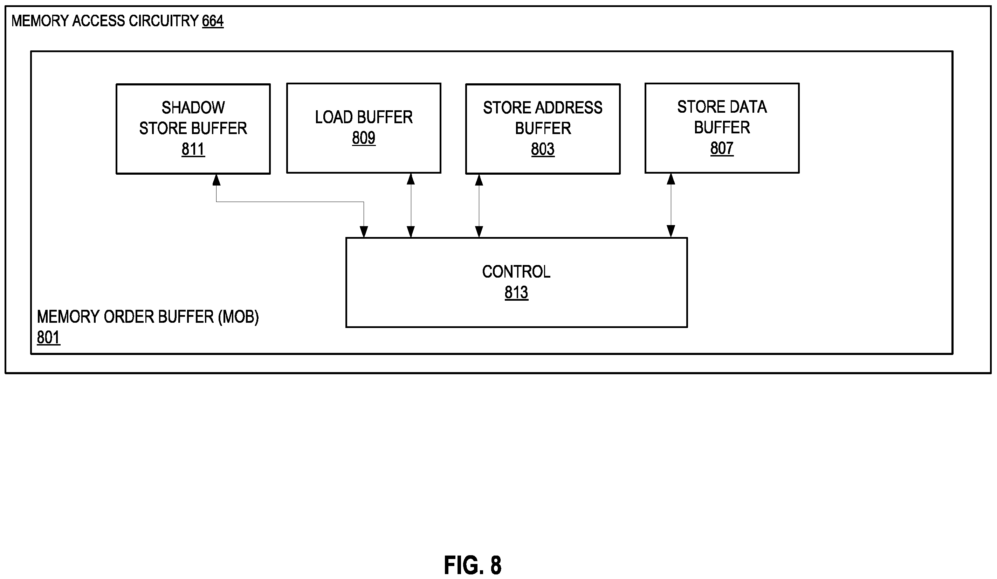

FIG. 8 illustrates examples of aspects of memory access circuitry 664. In some examples, the memory access circuitry 664 includes a memory ordering buffer (MOB) 801 that includes a load buffer (LB) 809, a store address buffer (SAB) 803, a store data buffer (SDB) 807, and a shadow store buffer 811. Note that the store address and data buffers may be merged.

Pending load requests are stored in entries of the load buffer 809. Each entry includes a load request address which is received in conjunction with the load request from the execution unit(s).

Addresses for pending stores are stored in the store address buffer 803. Data for pending stores is stored in store data buffer 807. Dispatch control circuitry 813 dispatches senior stores or loads. In some examples, the store buffers are implemented using content addressable memories (CAMs). Note that the store buffers may be physically one buffer.

When a load uop dispatches that is younger (in terms of logical program order) than the store uop, this younger load uop can check against the store uop in the store buffer (and against any other older store uops in the store buffer).

When a store uop entry is allocated in the store buffer(s), a predicted address from a store address table may be written to the corresponding store buffer entry indexed by the store buffer's ID as long as the entry state of the corresponding store address table entry allows prediction. Consequently, when a load uop dispatches that is younger (in terms of logical program order) than the store uop, this younger load uop can check against the store uop in the store buffer (and against any other older store uops in the store buffer).

The younger load uop can utilize the speculative address in the store buffer(s) for purposes of skipping the older store uops (e.g., non-matching addresses condition) or speculatively forwarding the data from the older store uops. This allows loads to avoid unnecessary blocking on such stores. If a load uop skips over an older store uop, the load uop is marked for the speculative skip (e.g., in the load buffer 809) so that the load uop can be verified later by the store uop. If the load uop forwards from a store with a speculative address (e.g., a match condition), the store uop's store buffer ID is recorded in the load buffer **809** for later verification. This store buffer ID written to the load buffer entry may be referred to as the speculatively-forwarded store buffer ID (SB ID) herein. If the load uop and the store uop have matching addresses (using the speculative address of store uop), but the store uop data is not "forwardable" (e.g., store data is not ready yet or alignment of store and load addresses does not allow forwarding, etc.), the load uop may behave as if store uop does not have a speculative address.

In one implementation, when the store uop's address is calculated and written to its store buffer entry, it is compared against the speculative address in the entry to determine if the address prediction was correct. The corresponding entry state in the store address table may be changed according to the prediction result. As discussed above, if a misprediction occurs, the counter value for the store address table entry is incremented. If a number of mispredictions reaches the state transition threshold (e.g., could be as small as 1), the entry state is changed to suppress prediction.

The calculated store address may also be compared against younger load uops in the load buffer **809** to verify if the memory disambiguation predictions (address checking process for loads against older stores for possible dependency) were correct. In some embodiments, load-based dependence prediction, or store-based prediction if in place too, may perform the same address match for their prediction verification. In such configurations, both prediction mechanisms can share the store address table match over the load buffer **809.**

When the store uop calculates its address, it also checks against the load buffer **809**for completed load uops that may have skipped over unknown store uops based on the prediction. The load buffer **809**has its own address that is the load uop address that can be used for address comparison. If there is a hit (e.g., address matches) and the hit load uop had completed without forwarding from the store uop (e.g., skipped the store uop), then this is a misprediction and a pipeline of the processing device should be flushed and the load uop re-executed as it use the wrong data. A store uop can assess whether a load uop skipped over the store uop upon performing the memory ordering check against loads in the load buffer.

In addition, when the store uop calculates its address, it also checks against the load buffer **809**for completed load uops that may have speculatively-forwarded data from the store uop based on the address prediction. In one implementation, the store buffer ID ("SB ID1") of the store uop with the calculated address is compared against the speculatively-forwarded store buffer ID ("SB ID2") stored in the load buffer **809**entries for each load uop that has used speculative forwarding based on store address prediction. If the SB ID1 is equal to the speculatively-forwarded SB ID2 (e.g., store uop is the one that speculatively forwarded for the load uop), the address prediction is checked for a match. If there is a match, then there is no misprediction. Otherwise (e.g., no address match), there is a misprediction and the load uop is marked for a processor pipeline flush and re-execution of the load uop. If the SB ID1 is different than speculatively-forwarded SB ID2, then an address match check is performed. If there is an address match (e.g., load uop forwarded from the wrong store uop), then a misprediction results and the load uop is marked for a processor pipeline flush and re-execution of the load uop.

In one implementation, load uops and store uops keep their ordering information. Uops in a processor pipeline maintain this information in the form of the reorder buffer id. The load buffer and store buffer (and reorder buffer) are allocated in program order based on the reorder buffer id. When a load uop is allocated, it receives the store buffer id of the "youngest older" store uop (e.g., the store uop right before the load uop in the program order. This is sometimes called the store color. When a load uop is dispatched for memory ordering check against stores in the store buffer, the load uop may look up just those store uops with the same age or older than the store color. Similarly, when a store uop preforms memory ordering checking against load uops in the load buffer, the store uop looks at the store color of the load. If the load uop's store color is before the store's SB ID, it means that the load uop is excluded from the check.

In some examples, the store buffers are a first-in-first-out (FIFO) structure for storing address, size, data, and other key attributes. The top pointer of the structure points to the store most recently retired. The bottom of the store buffer (i.e., the one containing the oldest retired store) is the one ready to be written to a memory subsystem, such as data cache. In some examples, a senior store is a store that has executed, but has not retired. In some examples, senior stores have their own buffer.

In some examples, the load buffer 809 is a scratchpad buffer used by the memory subsystem to impose access ordering on memory loads. Each load operation is tagged with the Store Buffer ID (SBID) of the store previous to it. This SBID represents the relative location of the load compared to all stores in the execution sequence. When the load executes in the memory, its SBID is used as a beginning point for analyzing the load against all older stores in the buffer by the control circuitry 813.

The shadow store buffer 811 tracks store addresses executing on the other core of the SDC. This allows for the tracking of memory dependences. All store addresses of one core are effectively exposed in the other core against which all loads can perform ordering and data transfer checks. In some examples, the shadow store buffer 811 operation is facilitated by "relaying" Store information between the cores. In a conventional core, memory ordering across cores is enforced at retirement using snoop logic which is very bad for performance.

The shadow store buffer 811 provides a lightweight mechanism where loads can obtain data from the other core at the point of execution itself thereby improving performance. Loads that match a given store request data from the producer core which it is sent with a fixed latency. This on-demand mechanism ensures that only the store data that is actually needed in the other core/cluster is communicated.

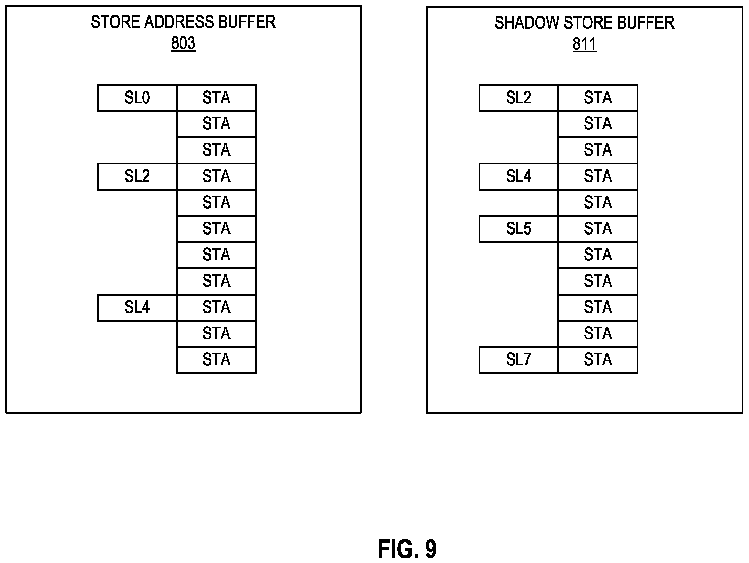

FIG. 9 illustrates examples of states of the store address buffer 803 and the shadow store buffer 811 of a core. As shown, at any given moment, the SB 803 and SSB 811 hold multiple stores which may belong to different split regions (segment) of the core. For example, SL0 is the first code segment, SL1 is the second segment, SL2 is the third segment, and so on. In this illustration, SL0, SL2 and SL4 execute in core 0 and the other segments execute in core 1. As shown, the SB 803 for core 0 holds stores corresponding to SL0, SL2 and SL whereas the SSB 811 holds the operations of the other core (SL1,SL3, SL5, and SL7). All stores between SL1-SL2 are older than the stores between SL2-SL3, but are younger than the stores between SL0-SL1.

When a load comes in, it is checked, by control circuitry 813, against all older stores in its core (in store address buffer 803), but also checked against all older stores in the SSB 811 and determines the most recent conflicting store among the cores. If the conflicting store belongs to the SSB 811 (other core/cluster), the load initiates through the control circuitry 813 a "pull" request to obtain the data of the conflicting store from the other core. The data eventually arrives from the other core with some latency and is provided to the load. Until the data arrives, the load is stalled.

It can happen that due to incorrect memory disambiguation, a load instruction may execute before a conflicting store from the other core/cluster. In a conventional processor, this is detected on execution of the store instruction wherein the store instruction checks all younger loads and determines if a conflicting younger load instruction had executed before itself. Whenever a shadow store buffer entry is updated by a store from the other core, the store checks all load younger than itself and if it finds a conflicting load that has already been executed, a memory ordering nuke is issued for that load. This ensures that memory ordering violations are repaired appropriately, and memory correctness is guaranteed.

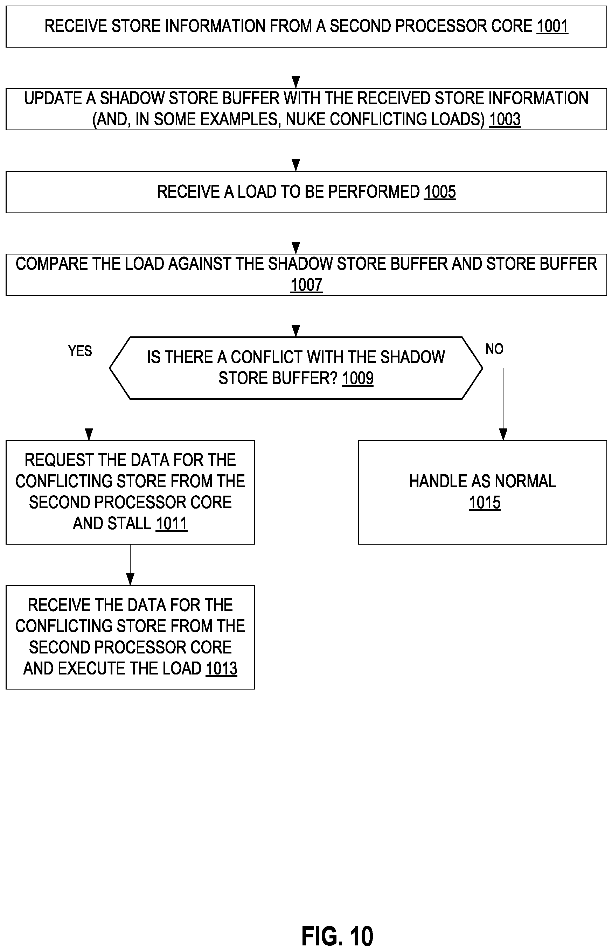

FIG. 10 illustrates examples of shadow store buffer usage. These examples are shown from the perspective of a first processor core. In some examples, control logic 813 of a memory order buffer 801 performs some of these acts.

Store information is received from a second processor core at 1001. In some examples, store information is shared upon execution of a store. In some examples, store information is shared upon completion of an instruction block (segment).

A shadow store buffer is updated with the received store information at 1003. In some examples, if there are conflicting loads they are nuked.

A load to be performed is received at 1005.

The load is compared against the shadow store buffer and store buffer at 1007.

A determination of if there a conflict with the shadow store buffer is made at 1009. If yes, then the data for the conflicting store from the other core is requested and the load stalled at 1011.

The data for the conflicting store is received from the other core and provided to the load at 1013. The load can then be executed.

If there is no shadow store buffer conflict, the load is handled as normal at 1015. LIVEIN

In some examples, the register liveins between the SDC cores are identified, the SDC interface INVB07 injects register transfer instructions in the respective code segments. For example, it inserts special store instructions in the producer segment and load instructions in the consumer code segment. Every register livein has a store instruction in the producer segment and a corresponding load instruction in the consumer segment. In addition, each segment begins with a special sync load instruction that is used for in-order retirement of different code segments across the SDC cores.

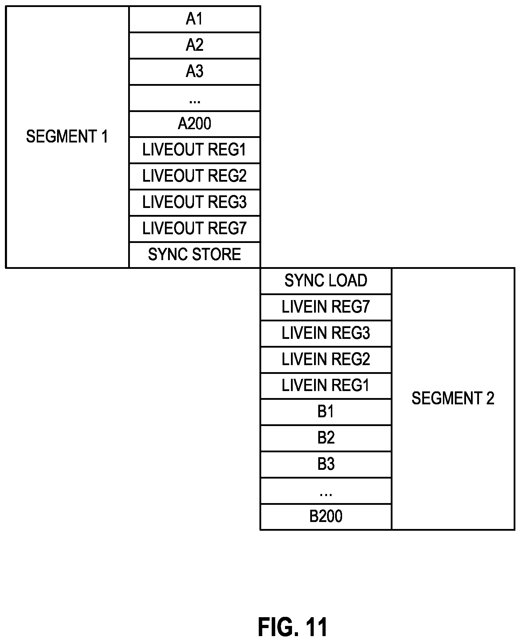

By design, livein loads and stores have a very deterministic behavior. Livein loads always receive a store forwarding from the immediately preceding liveout stores on the other core. FIG. 11 illustrates examples of livein loads and liveout stores. As shown, the order of liveout stores before a sync load (in the previous segment) is related to the order of livein loads after the sync load (in the current segment).

Livein loads do not need to perform a store check in any core since they deterministically know the store in the other core from which they receive the liveout data. Store addresses do not need to be exposed to the other core because no other instruction except livein loads will ever need them.

In some examples, at the time of execution of a livein load, the relative position of a livein load with respect to the sync load is known in the load buffer. All that remains is to know the store Buffer ID of the last store in the other core (previous segment). Once the last store in the other core is known, the livein load directly obtains the data from the other store store which it identifies by subtracting the relative distance in the other core using its relative position so that it can take data from its liveout store counterpart.

In some examples, out-of-order execution can have impacts on store forwarding. For example, a livein load arrives before a liveout store. The load will be stalled until the store is completed. When the liveout store is dispatched, it is sent through the wormhole. The partner core will push the early wakeup of the requested SBID to the requesting core (when the store is about to start). The load is waiting for this SBID and is woken up.

Another example is a liveout store arrives before livein load. In this scenario, the data for the store is cached in a small cache indexed by SBID in the partner core. When the livein load reads this data, the cache is deallocated. If this cache is full, the store data is dropped, and a load pull request is used to get the data from the other core.

Another example is identifying the SLID of a livein load. At the dispatch of a Livein Load, the previous associated sync load needs to be found. The SDC interface walks over older load buffer identifiers (LBIDs) starting from the livein's load LBID. If it finds any unknown load before finding an older sync load, that means there are non-dispatched livein loads before it. The Livein load will be stalled in the wormhole until all older loads before it (until the sync load) are resolved.

Another example is identifying the SLID of a liveout store. Once the livein knows its LBID offset from the Sync Load (SL N), the SDC interface needs to calculate the SBID of the liveout store. To do this, it needs to know the SBID of the last store in the preceding split region, which is also the SBID of the next Sync Load (SL N+1). Effectively, the SBID of Sync Load N+1 is same as the SBID of the last liveout store of SL N-1. Thus, only when SBIDs of N+1 is known can the wormhole effectively calculate the liveout store that needs to forward to the livein load.

In some examples, liveins and liveouts are performed using move instructions (e.g., an XMOV instruction). An XMOV instruction's execution communicates data between execution units of two different clusters. This may be a faster and more efficient manner of communicating data compared to the wormhole which adds significant overheads in the MEU pipeline.

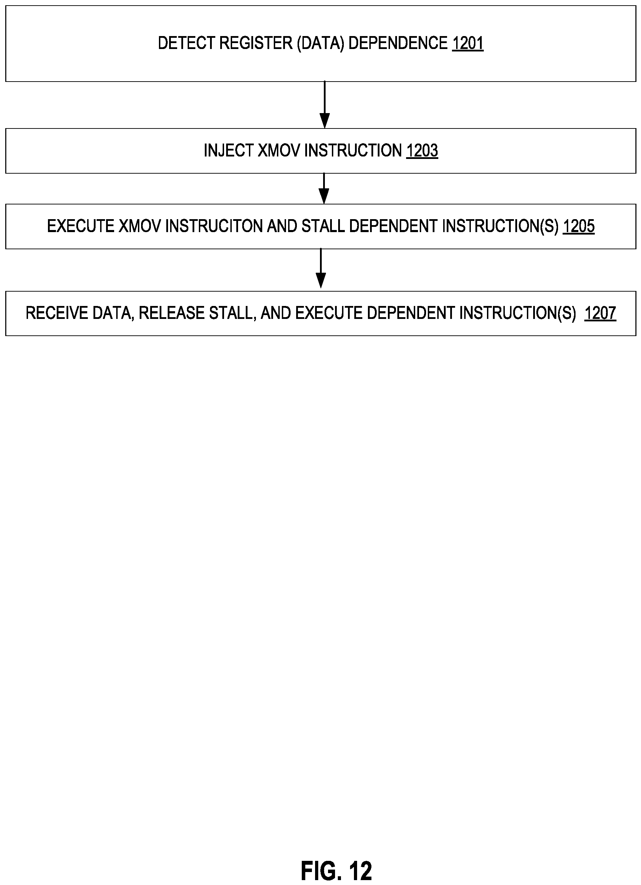

FIG. 12 illustrates examples of a method for XMOV usage. At 1201 a register dependency between cores of a SDC is detection. In some examples, XMOV instructions are injected by hardware itself when a register dependency between cores of a SDC is detected. The detection of cross-cluster dependency is assumed to be provided already to the hardware. In the register rename stage, if a register is needed by an instruction but the producer instruction lies in the other core/cluster, then an XMOV instruction is injected before the consumer instruction at 1203.

The XMOV instruction is executed at 1205 and original consumer instruction is stalled at the allocation and/or scheduling stage on the XMOV instruction until the data is available.

Once the XMOV instruction is executed and the data received, the stall is released, and any dependent instruction(s) is/are executed at 1207.

The execution of the XMOV instruction retrieves the data from the other core with a fixed latency. Note that the data will be stored in the wormhole in some examples. In other examples, the XMOV instruction causes a read from the register file of the producing core. XMOVs may be more efficientthan load-store operations because they consume less energy for the same work. At the same time, they also introduce an additional bus for communication between the execution units of two cores.

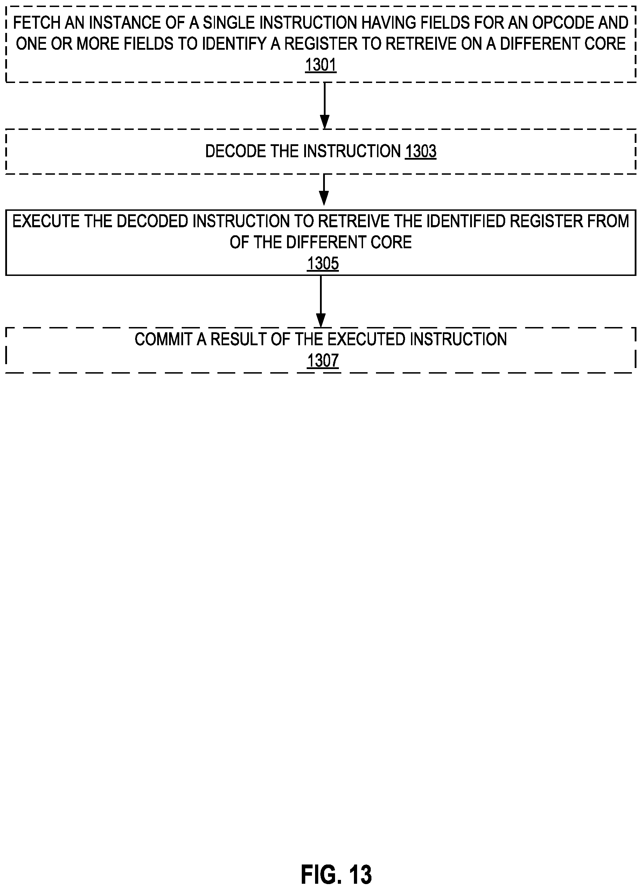

FIG. 13 illustrates examples of a method performed by a processor to process an XMOV instruction. For example, a processor core as shown in FIG. 6, a pipeline as detailed below, etc., performs this method.

In some examples, at 1301, an instance of single instruction is fetched. For example, an XMOV instruction is fetched. Note this will not happen if the instruction is injected. However, if this instruction is used outside of that context it is likely to be fetched. The instruction includes fields for an opcode and one or more fields to identify a register to retrieve on a different core. In some examples, the instruction further includes one or more fields to identify the different core (e.g., the identity of the core is encoded in an immediate or the identity of the core is stored in a register. The opcode indicates that the read operation of the register on a different core is to occur. Example formats for instructions are detailed below. In some examples, the register is identified using a memory address. In some examples, the register is address using register identifying information.

The fetched instruction is decoded at 1303. For example, the fetched XMOV instruction is decoded by decoder circuitry such as decode circuitry 640 detailed herein. Note this may not happen if the instruction is injected.

At 1305, the decoded instruction is executed by execution circuitry (hardware) such as execution cluster(s) 660 shown in FIG. 6. For the XMOV instruction, the execution will cause execution circuitry to perform the operations described above. In some examples, the register data is directly provided to the consuming instruction(s). In some examples, the register data is stored in the corresponding register on the core executing the XMOV instruction.

In some examples, the instruction is committed or retired at 1307.

In a SDC each core fetches independent blocks from memory. However, register dependencies between the two blocks may be unknown. As a result, for correct register renaming, either a core has to wait for renaming of a chunk of the other core, or it can assume that all registers will be modified by the first chunk and perform renaming with that. Both of these will cause a performance penalty and reduce parallelism. To overcome this limitation, in some examples SDC uses OOO renaming.

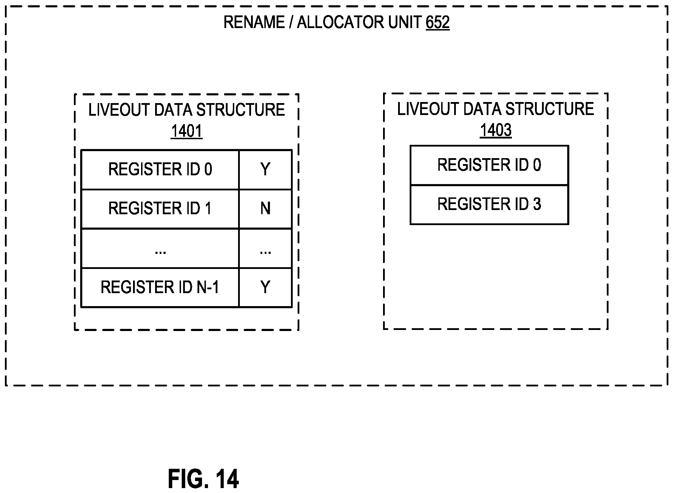

In OOO renaming, a small liveout data structure (stored in memory of the system or processor core) records the liveout registers created (the last write to a register) by a first core and that entry is communicated to the second core. FIG. 14 illustrates examples of a liveout data structure. The example liveout data structure 1401 is static in size, that is each register has an entry in the data structure and an indication of if that register is subjected to liveout. The example liveout data structure 1403 is dynamic in size, that is as registers are subject to liveout they are added to the data structure and as they are retrieved (become liveins for the other core(s)) they are removed. In some examples, the rename logic maintains the liveout data structure (e.g., using a register alias table (RAT)).

The second core does a speculation based on this entry to predict what registers would have been created by the first core and inserts pull requests to obtain the necessary register data from the first core. In case this speculation is wrong, a clear is initiated since wrong registers were synced.

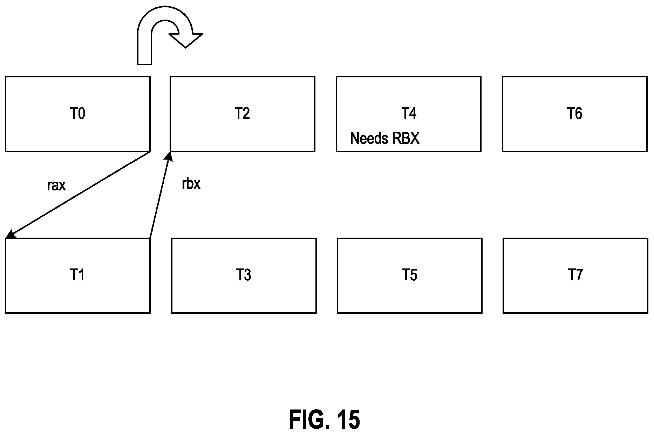

FIG. 15 illustrates examples of OOO renaming. In this illustration a single thread program is sliced into chunks T0, T1, T2, etc. The even chunks are to be executed on a first core and the odd chunks on a second core. T1 is renamed in the second core whereas T0 is fetched and renamed in the first core. Since OOO renaming is being used, the second core speculates on the registers that would be created by the execution of T0. In this case it speculates that the RAX register would be modified by T0. Assuming this, it goes ahead with the rename. Each register of the register alias table (RAT) has a bit marking who creates a given registers, and if an access is seen to that register a pull request is initiated to the other core. In some examples, the speculation is performed by one or more of the decode logic of the second core, the rename logic of the second core, or the SDC interface of the second core.

T0, upon renaming, will communicate an indication of modified registers (e.g., bit-vector of registers) informing the second core of the registers modified by the first core. If T1's speculation was incorrect, a clear will be initiated and fetch/rename is restarted from T1 in the second core.

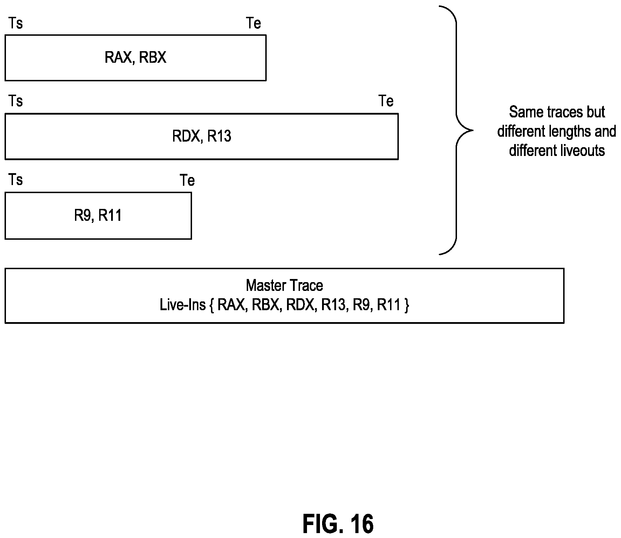

Another reason why speculation can go wrong is the presence of branches inside a segment. FIG. 16 illustrates examples of a segment being executed but having different liveouts. In this illustration, the segment has three traces (each starting at Ts and ending at Te). In the first trace, RAX and RBX are to be subjected to liveout. In the second trace, RDX and R13 are to be subjected to liveout. In the third trace, R9 and R11 are to be subjected to liveout.

In this case the RAT is used to compute a superset all the possible liveouts across all cases and a prediction of these combined liveouts by the first core is made. Note that producing a superset does not cause any functional issues, as the other core can simply inform that the register was not produced by it, and hence can be synced at a later time.

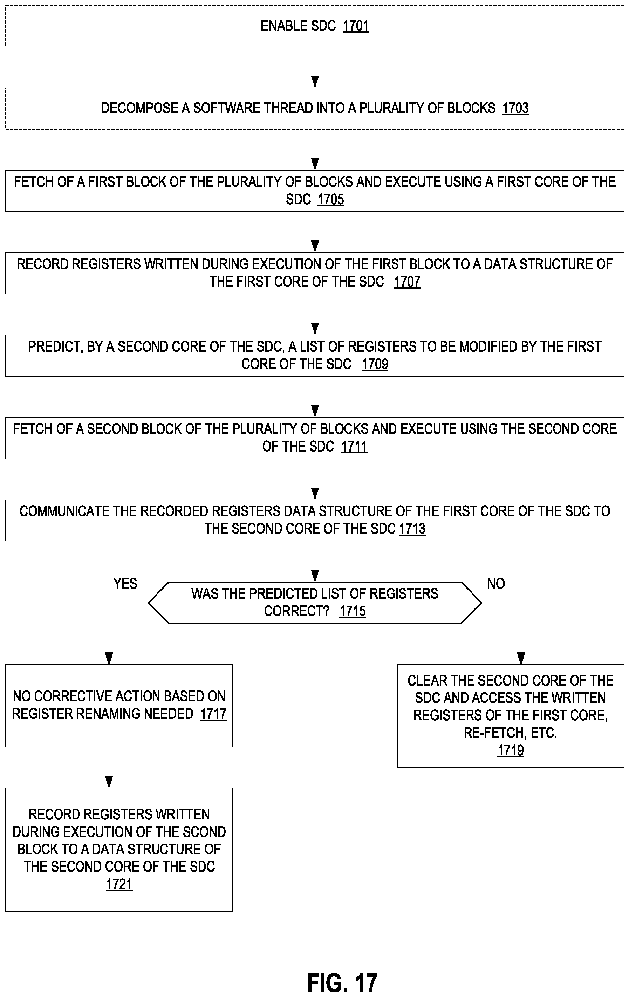

FIG. 17 illustrates examples of a method for out-of-order renaming in an SDC. In some examples, SDC is enabled at 1701. This is an entry into SDC. Note that if SDC is already in place then this act will not happen.

In some examples, a software thread is decomposed into a plurality of blocks at 1703. If a thread has not already been decomposed by software, in some examples the hardware will chunk the thread into blocks. This chunking may be rudimentary such as by a set number of instructions (e.g., 200 instruction chunks). In some examples, the chunking is done into basic blocks.

The first block of the plurality of blocks is fetched and executed using a first core of the SDC at 1705. For example, "core 0" in the discussion above fetches the first 200 instructions from memory and starts executing.

Registers written to during execution of the first block to a data structure of the first core of the SDC at 1707.

A prediction is made by a second core of the of a list of registers to be modified by the first core of the SDC at 1709. Note that this may occur before even the fetching of instructions by the first core in some examples.

A second block of the plurality of blocks is fetched and executed using the second core of the SDC at 1711. The execution is to take into account the predictions made. For example, the second block may stall waiting for a predicted register to be made available but execute as normal if a register is not predicted to be modified by the first processor core.

The recorded registers data structure of the first core of the SDC is communicated to the second core of the SDC at 1713. For example, the data structure is sent via the wormhole. Note that the data structure may have a dedicated address.

A determination of if the predicted list of registers was correct at is made 1715. In some examples, a RAT is consulted for this determination.

If the prediction was correct, then no corrective action based on register renaming is needed at 1717 and the second processor core can make its own recorded registers data structure at 1721 and communicate that data structure to the first core.

If the prediction was not correct, the second core of the SDC is cleared, and the second block re-fetched, etc. at 1719.

Some software-hardware solutions decomposed exiting programs into multiple threads which run on different processors. The software identifies a code region suitable for multi-threading and decomposes the code into multiple threads. In these efforts hot loops of a single thread binary were split and run it on two cores. Many instructions would be replicated across the two strands to make the cores appear independent. These approaches replicated a lot of instructions (including memory instructions) across both the strands to make the two strands appear independent. This would entail an almost 25-40% instruction overheads over the native program. SDC improves on these approaches.

As noted above, each core of a super core needs to fetch distinct blocks of code. In some examples, to do this fetching inserted jumps are used. A first core will start fetching instructions (e.g., 200 instructions) and will supply a pointer to the beginning of the next block (e.g., a pointer to instruction 201) to the second core. The second core will now start fetching from the 201^{st} instruction to 400^{th} instruction and then ask the first core to fetch from the 401^{st} instruction.

However, to give the effect of a parallel fetch, which effectively increases fetch bandwidth, predictions from a branch prediction unit (BPU) (e.g., BPU 632) are used. When a first core is fetching instructions, the BPU of the second core will predict where the second core should start executing from. This is accomplished by inserting an indirect jump into core 1. The BPU of the second core will predict where it needs to fetch from. After the first core has fetched 200 instructions it will inform the second core of the program counter (PC) of the 201^{st} instruction. If the second core was not fetching from 201^{st} instruction it will generate a pipeline clear (e.g., a JEClear from the jump execution unit) and retrain its BPU to record this information. In some examples, all instructions younger than the mispredicting branch are cleared from the from the front end and OOO execution engine and execution restarts from the correct branch target (the value the first core provides). In some examples, younger instructions are also flushed on the other core. The Sync Load ID of the JEClearing branch is used to determine the next Sync Load in the partner core. On a JEClear, its SLID is communicated to the wormhole. Using the JEClearing SLID, the wormhole identifies the next sync load in the other core and its LBID (which is known when the next sync load executes). The wormhole subsequently triggers a memory operation clear (MOClear) on this sync load which will flushes the next sync load itself as well as all instructions after that ensuring all younger instructions are cleared.

In some examples, entries of the branch target buffer (BTB) of the BPU record potential targets when splitting is done. A BTB entry may include a target address, a branch type field (condition, non-conditional, etc.), a branch instruction pointer, a thread ID field, and the split indication, etc. In some examples, a core waits for a set period (e.g., a minimum of -240 uops) before searching for a potential BTB target with the split indication bit set. If this bit is not found, a new split is created. The wormhole serves as communication channel is needed to communicate the targets across the two cores. All splits are done at branch exits or on BTB line crossings.

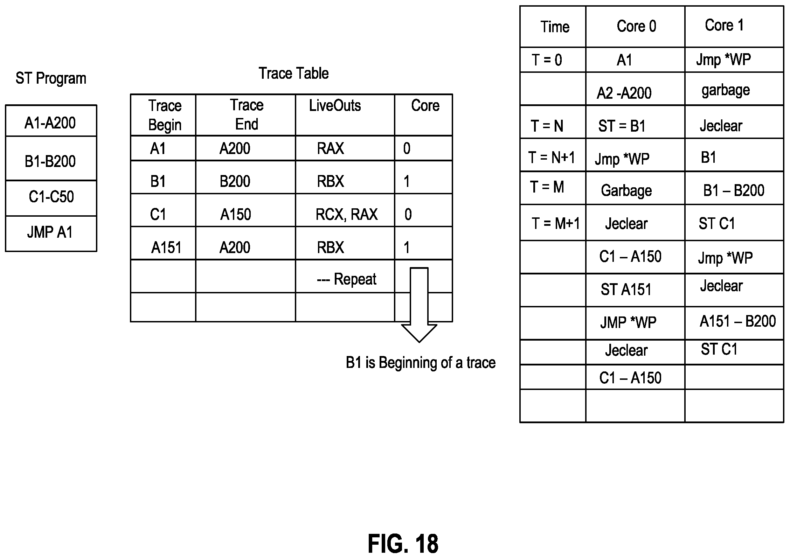

FIG. 18 illustrates examples of usage of a trace data structure in an SDC. Each core has a copy of this data structure stored in memory (e.g., a part the SDC interface). This figure illustrates a loop for a program that has three chunks (chunks A, B, and C). In this case core 0 initially starts executing chunk A (instructions A1-A200_. In the meantime, core 1 executes a JMP* whirlpool. After core 0 has executed A1-A200, it will send the program counter of B1 to core 1. Core 1 will JECLEAR and start from B1.

Both core 0/1 will record a bit in their BTB that this is potentially a trace break (split). After core 1 fetches B200, it will now inform core 0 to start fetching from C1. The same process will continue until core-1 fetches from A151-A200. At this time, core 1 will observe B1 as the next trace break and will relinquish the ownership to core 0. After this point the same process will repeat, and hence the BPU will be easily able to predict. Note that the trace table alerts each core about what to do when the trace repeats.

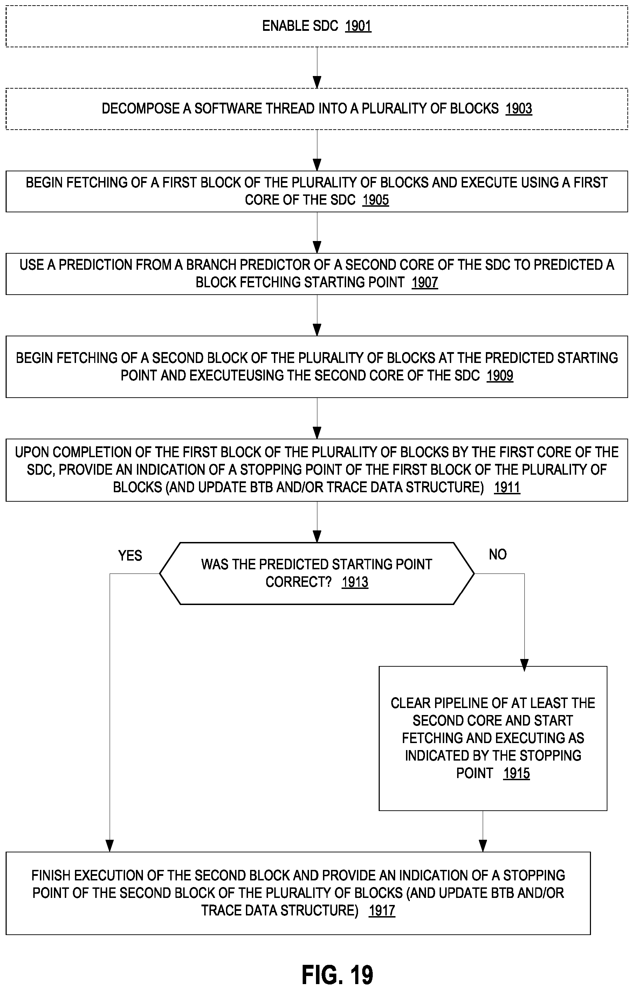

FIG. 19 illustrates examples of a method for parallel fetching in an SDC. In some examples, SDC is enabled at 1901. This is an entry into SDC. Note that if SDC is already in place then this act will not happen.

In some examples, a single thread is decomposed into a plurality of blocks at 1903. If a thread has not already been decomposed by software, in some examples the hardware will chunk the thread into blocks. This chunking may be rudimentary such as by a set number of instructions (e.g., 200 instruction chunks). In some examples, the chunking is done into basic blocks.

The first block of the plurality of blocks is fetched and executed using a first core of the SDC at 1905. For example, "core 0" in the discussion above fetches the first 200 instructions from memory and starts executing. A prediction from a branch predictor of a second core of the SDC is made to predict a block fetching starting point for the second core at 1907. Note that this prediction may occur concurrently to the fetching by the first core, before that fetching, or after that fetching.

A second block of the plurality of blocks at the predicted starting point is fetched and executed using the second core of the SDC at 1909.

Upon completion of the first block of the plurality of blocks by the first core of the SDC, the first core is to provide an indication of a stopping point of the first block of the plurality of blocks at 1911 . In some examples, the update BTB and/or trace data structure are also updated. Note that stopping point indication could be given as the PC of the last instruction to execute or the PC of the next instruction to be executed.

A determination of if the second core's prediction was correct is made at 1913. This determination is made by comparing the stopping point indication with the predicted starting point. If they do not match, then the pipeline of at least the second core is cleared and the second core starts fetching as indicated by the stopping point and executes that fetched instructions at 1915.

If they match, then execution of the second block is completed and an indication of a stopping point of the second block of the plurality of blocks is provided to the first core at 1917. The BTB and/or trace data structure may also be updated. While not explicitly shown, while the second block is executing, the first core may have its BPU make a prediction and pull instructions for the third block, etc.

When a program is executing across multiple cores, there can be data dependencies between the code segments executing on the different cores. Data dependences can arise through registers or through memory. Detailed below are examples of a cross-cluster disambiguation approach to detect cross-cluster memory dependences and enable better load scheduling for performance.

In some examples a disambiguation predictor tracks memory dependences across clusters/cores. By doing so, it determines whether a given load instruction needs to be communicated to the other core to obtain the correct data. The accuracy of the disambiguation predictor ensures that only the minimalset of load instructions are relayed between the cores/clusters which helps to reduce overall traffic and power.

Without this predictor every load in a given core/cluster may have to query every store in the other cluster making it a highly inefficient for performance and power. Our solution helps to significantly lower the load-store traffic between the clusters using a predictor which only strives to relay only the minimum set of load-store instructions between the 2 cores guaranteeing vastly improved performance and power efficiency over conventional designs.

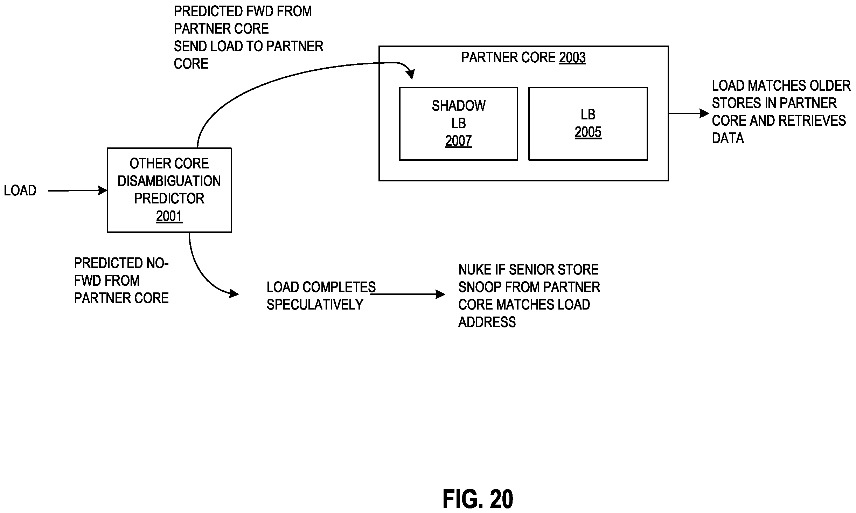

FIG. 20 illustrates examples of disambiguation prediction usage. Another core disambiguation predictor 2001 is initially empty and none of the loads will query the other core for data. The disambiguation predictor 2001 trained with the information that this load PC should get its data from the other core. In some examples, the disambiguation predictor 2001 is a part of control logic 813.

When a load dispatches in the MEU, it checks the other core disambiguation predictor 2001 which is to predict disambiguates with respect to the other core of an SDC. When there is a conflicting store in the other core, the disambiguation predictor 2001 will initiate a snoop which will nuke the infringing load (bottom path).

In some examples, when there is a hit in the disambiguation predictor 2001, it implies that the load must get forwarded from the other core as shown in the top path. Therefore, there is a check of all older stores (e.g., using a shadow load buffer 2007 and load buffer 2005) in the other core/cluster 2003. In some examples, if there is an invalid older store in the other core, the load is stalled until the invalid store is resolved. Once the store is resolved, a check is made to see if the store matches the load address. If it matches, the load obtains the data from the store, otherwise it continues scanning further older stores until it finds a match, or all stores are exhausted and none of the stores are invalid. Thus, the disambiguation predictor 2001 indicates that a load must wait until there is no invalid store in the other core or it finds a valid matching store.

In some examples, when there is a hit in the disambiguation predictor 2001, it implies that the load is predicted to be forwarded from the other core. The load is stalled until all senior stores of the previous segment have completed in the partner core. Once the store is resolved, a check is made to see if the store matches the load address. If it matches, the load obtains the data from the store, otherwise it continues scanning further older stores until it finds a match, or all stores are exhausted and none of the stores are invalid.

It can happen that the disambiguation predictor may be wrong in some cases. This necessitates a fall-through safety mechanism which ensures memory ordering correctness across clusters. In some examples, a snoop protocol across cores is used to ensure memory consistency. When a core receives a snoop from other cores, it (e.g., control 813 of a MOB 801) checks its load buffer to see if there is any load that needs to be nuked as it executed before the snoop.

In a conventional processor, when a store instruction commits, it issues a snoop to all other cores which nuke any conflicting load which executed before the store. For SDE, the partner core/cluster will also receive this snoop. The partner core will scan its load buffer to check if there is any load to the same address which has already executed. At this point, if a matching load is found, the snoop logic (e.g., snoop logic 675) checks if the load was forwarded data from the same store that triggered the snoop using the store ID of the store instruction. This requires snoop logic to also broadcast the store ID of each store instruction. If the load already obtained the correct data from the same store ID, the snoop is silently ignored. If the load as not obtained the correct data from the same store ID, the load is nuked.

In some examples, cores of a SDC can throttle or unthottle to improve performance per watt. There are at least two reasons why super core can reduce performance per watt. First, there may be an outright reduction in overall performance because of poor branch behavior in the super core mode. Second, there can be a lower performance per watt because of higher leakage from the partner core.

A reason for less than optimal performance of super cores is when it is difficult to predict jumps (branches) over code segments. In some examples, one or more performance counters (e.g., of counters 655) are used to count correct (or incorrect depending on the implementation) branch predictions for a set number of retired instructions. If the count indicates that there are too many mispredicts (e.g., a high misses per thousand instructions (MPKI) value) then the SDC is throttled. In some examples, throttling means to not use SDC. Another check may be performed after another set number of instructions have been executed, or some multiple thereof.

If the count indicates that there are not too many mispredicts, in some examples, the counter is checked again after the same set number of retired instructions have retired (e.g., the set amount is 1 million instructions and the there is a check at 1 million instructions, 2 million instructions, 3 million instructions, etc.). Note that the counter may be reset or the kept as a running total depending on the implementation.

If the count indicates that there are not too many mispredicts, in some examples, the counter is checked again after the doubled set number of retired instructions have retired (e.g., the set amount is 1 million instructions and the there is a check at 1 million instructions, 2 million instructions, 4 million instructions, etc.). Note that the counter may be reset or the kept as a running total depending on the implementation.

In some examples, the SDC interface is used to check the counters and make the throttling decision. In some examples, retirement circuitry makes this check and throttling decision.

In some examples, a set of counters is maintained to observe the total number branch mispredictions, total memory stalls, and/or total dependence stalls. During SDC mode if the values of set of counters indicates the program shows poor behavior toward these stall metrics (such that it has an inherently low ILP), the power is throttled for better performance per watt. This decision may be made by a power control unit (PCU) external to the SDC.

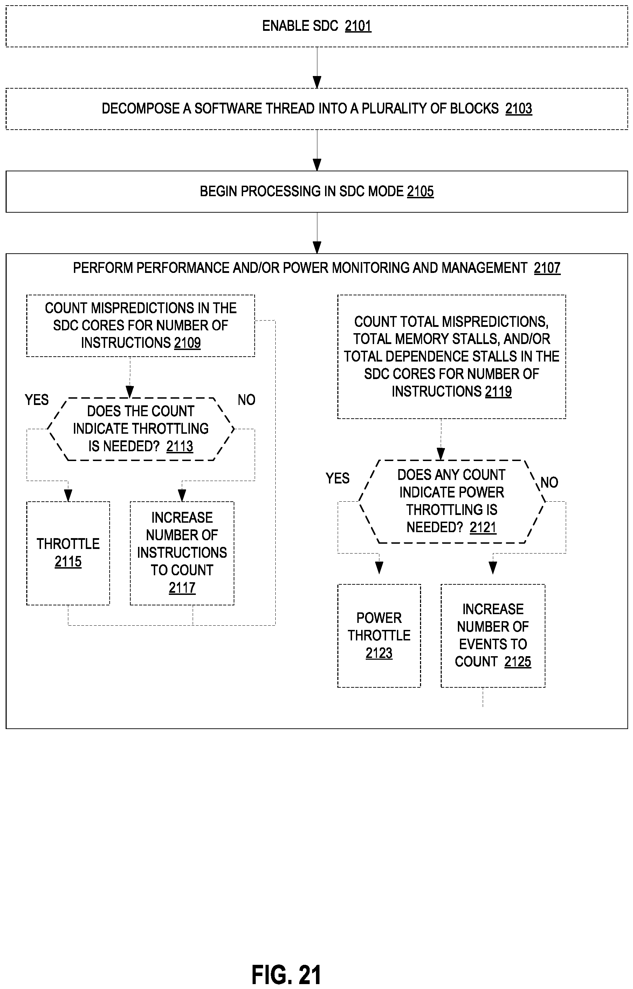

FIG. 21 illustrates examples of a method for potentially throttling in SDC mode. In some examples, performance monitoring circuitry such as 772 performs aspects of this method. In some examples, a SDC interface performs some of the aspects of this method. In some examples, an OS performs some aspects of this method.

In some examples, SDC is enabled at 2101. This is an entry into SDC mode. In some examples, the entry into SDC mode occurs in response to a request to an OS to migrate to super core mode. Note that if SDC mode is already in place then this act will not happen.

In some examples, a single thread is decomposed into a plurality of blocks at 2103. If a thread has not already been decomposed by software, in some examples the hardware will chunk the thread into blocks. This chunking may be rudimentary such as by a set number of instructions (e.g., 200 instruction chunks). In some examples, the chunking is done into basic blocks.

SDC mode processing begins at 2105. As detailed above, cores of an SDC alternate chunks. During this processing performance and/or power monitoring and management occurs at 2107.

In some examples, the management of SDC throttling (e.g., SDC exit) includes counting mispredictions in the SDC cores for a number of instructions at 2109. At 2113 a determination is made of if the count indicates a need for SDC performance throttling. For example, does the count represent so many branch mispredictions that performance is the similar or worse than single threaded execution?

If the count indicates a need for SDC performance throttling, then the SDC is throttled at 2115. In some examples, this throttling cause an SDC exit, but mispredictions for single threaded mode may be counted at 2109 to see if SDC should be tried again.

If the count does not indicate a need for SDC performance throttling, in some examples, the number of instructions to count is increased at 2117. This count, or the original count if this approach is not used, is in a subsequent counting at 2109.

In some examples, the management of power throttling includes counting total mispredictions, total memory stalls, and/or total dependence stalls in the SDC cores for a number of instructions at 2119. At 2121 a determination is made of one or more of the counts indicates a need for SDC power throttling.

If the count indicates a need for SDC power throttling, then the SDC is power throttled at 2123. In some examples, this power throttling is a voltage and/or frequency reduction.

If the count does not indicate a need for SDC power throttling, in some examples, the number of events to count is increased at 2125. This count, or the original count if this approach is not used, is in a subsequent counting at 2119.

When switching off SDC mode (SDC exit), the partner core may be executing instructions and will have state that needs to be communicated. This is a transition state. During the transition state the primary core will force syncing of all registers with the other core. It will then issue a NUKE to the other core to stop execution of any new segment in that core.

When the OS decides to enter super core mode, it will configure the two partner cores to enter super core mode. The ability to run in SDC mode depends on many things such as the availability of an adjacent core as well as the availability of a split program that can run in this mode. In some examples, an application-level API is used to inform the OS that a program would want to run in SDC mode.

In some examples, upon entry, an appropriate micro-sequencer routine (e.g., of MS ROM 644) allows a single thread program to run across the SDC partner cores. On a super core exit, the cores of the super core revert back to normal cores.

On super core entry and configuration by the OS, core 0 jumps to the start PC of the single thread program (as in a conventional scenario). Core 1 is forced into a special code segment serviced by the micro-sequencer. This is effectively an indirect jump, whose target needs to be communicated by Core 0 if branch prediction is not used. Doing so allows super core mode to speculatively start. Note that in the beginning core 1 will assume all registers are owned only by core 0, so it needs to sync all registers before using them.

In some examples, SDC mode is entered while a program is running. This may happen when cores that were not previously available are. In this example, both cores need to be provided the updated register state and a respective starting PC. In some examples, on a non-SDC to SDC switching, the architectural state of the core running the program is saved (e.g., by micro-code like an exception) and copied back into both cores. Now, only the starting PC is required and SDC mode is enabled.

For core 0, the starting PC is the same instruction where we switched from non-SDC mode to SDC mode. For Core 1, the starting PC is the location of the next sync load in the program. But the next sync load is not known statically at every point of execution and therefore, Core 1 does not know where to start. Therefore, before entering SDC mode, both cores are redirected to a special code (e.g., a micro sequencer routine). This code redirects Core 0 to restart execution where it left off. This special code also puts Core 1 into a whirlpool jump. Core 0 will eventually update the whirlpool location with the correct address when it is about to perform a sync store. This update by Core 0 will be picked up by Core 1 which is in the whirlpool and therefore, Core 1 will be redirected correctly. We note that during all this time, Core 1's execution is not stalled. It continues fetching and executing after this whirlpool branch. If Core 1 fetched a wrong path compared to the location updated by Core 0, it will JEClear as detailed above.

The above mechanism requires that Core 0 must always update the whirlpool address before a sync store. Currently, this already happens in non-linear code regions where the exact sync load is not identifiable due to branches and therefore, each code must inform the other of the exact whirlpool location to resume operation. In some examples, in linear code regions, software does not update whirlpool addresses. In some examples, the software is tweaked to update a whirlpool address on every sync store irrespective of linear or non-linear regions. This will enable entering SDC mode from any point in the program. This requires one extra store instruction at every linear split which update to the whirlpool address.

Upon an exit of super core mode, the cores save their register and cache states. In some examples, the micro-sequencer triggers this save. As the cache is up-to-date in both the cores (i.e., one of the two cores has the modified (M) copy of the cache line), it is trivial to do cache state save. However, registers may need to be saved by both cores separately. In some examples, core 0 initiates a NUKE to core 1 and forces registers to sync between them. After this core 0 will do a normal register save state (e.g., an XSAVE).

In some examples, when SDC mode is exited for an exception, the core which triggered the exception on instruction X saves the PC of instruction X and will restart execution from X. The other core needs to save the PC of "next sync load" after instruction X in the program order. This is because X is at the reorder buffer head of the current core implying that all instructions older than it on the other core have retired and execution has to resume from instructions younger than X- which is the next sync load on the other core. Since the wormhole already sees all the sync loads from both cores, it can identify the next sync load in the other core and propagate its PC so that the micro-code can also save this PC indicating the restart position for other core.

In SDC, the global register state across the cores needs to be "merged" into a common state and saved on an exception. To do this, the wormhole snoops every retired instruction on each core. The retiring instruction informs the wormhole which architectural register it modifies and its sync load ID. Note that the retiring instruction already needs to do some of this signaling (e.g., destination register ID, value etc.) for updating the architectural register file. The wormhole can determine which register is "owned" by which core at the time of entering the exception and can be saved in a special command and status register (CSR). Using this register ownership information, the micro-code can save the register state by picking the appropriate register value from its owner core. On returning from the exception, both cores are provided with the saved register state, and they resume operation from the interruption points accordingly.

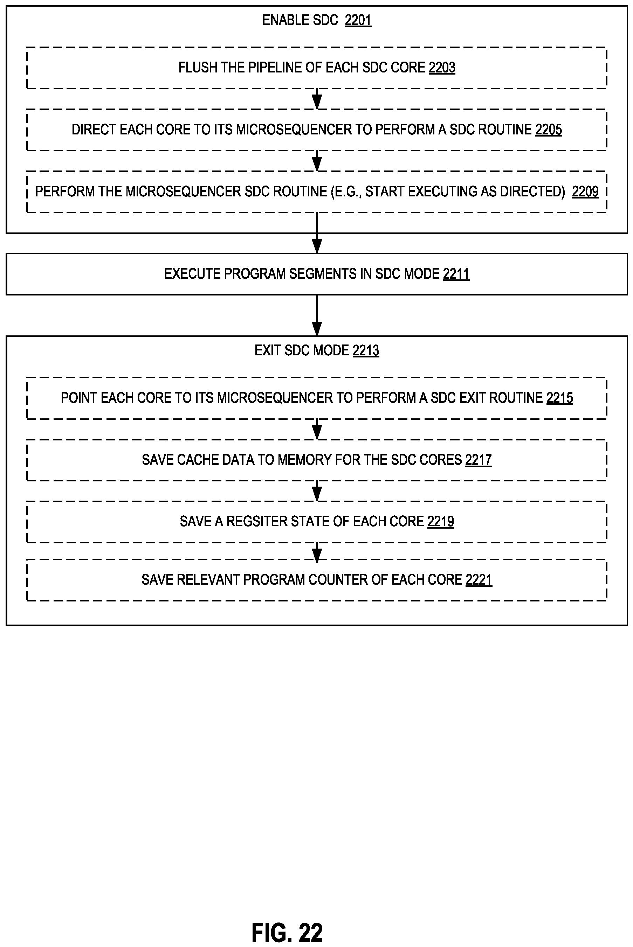

FIG. 22 illustrates examples of methods for SDC usage. This illustration shows the enablement of SDC, to using SDC, and to exiting SDC. At 2201 SDC is enabled. This enablement may consist of several acts. As noted above, the OS causes SDC to be entered into. In some examples, a hardware guided scheduler provides information to the OS to assist the OS in making the determination of if it should enter into SDC.

In some examples, the pipeline of each SDC core is flushed at 2203. This allows each core to start "fresh."

Each core is directed to its microsequencer to perform a SDC entry routine at 2205. The microsequencer performs the SDC routine at 2209. If the SDC entry is an initial entry the routine includes providing a start PC of the single thread program to a first core of the SDC. The second core performs an indirect jump to a second code segment. As noted above, in some examples, the jump is a BPU predicted location. In some examples, the jump is to a set PC (e.g., instruction 201). In some examples, the segments have been made by software to provide a location. Both cores start their execution.

The program segments are executed in SDC mode at 2211.

In some examples, the SDC mode is exited at 2213. This exit may be because a thread has completed, to handle an exception, to throttle, etc. In some examples, each to is directed to its microsequencer to perform a SDC exit routine at 2215. The cache data for both cores is saved to memory at 2217. The register state of each core is stored at 2219. In some examples, the register state is a "merged" register state as detailed above. In some examples, a relevant program counter of each core is also saved out to memory at 2221. This allows for a restart of the SDC mode.

In some examples, the SDC software framework/mechanism statically splits (or rather steers) a single thread of a program such that each constituent core (of the SDC) executes distinct blocks of the program simultaneously. SDC software can be run as part of a JIT compiler, a static compiler as well as directly on legacy binaries requiring no recompilation.

As detailed above, in some examples, the thread runtime telemetry circuitry 716 provides information not an OS to enable the migration of applications (threads) from conventional cores to super cores and vice-versa.

Enabling SDC entails one or more of: 1) classifying whether given application will benefit from SDC or not; 2) checking if free neighboring cores are available or not (and migrating threads to super cores); and/or 3) monitoring a system state to decide if SDC needs to be disabled (and migrating threads back to conventional cores if needed).

In some examples, the thread runtime telemetry circuitry 716 determines if the workload will benefit from SDC. The thread runtime telemetry circuitry monitors the instructions per clock cycle (IPC) of a given application and determines the following: 1) if the application will benefit from the usage of SDC or a frequency increase (e.g., turbo) depending upon the current operation point of voltage (V) and frequency (F) and/or 2) if the application has enough instruction level parallelism (ILP) to benefit from SDC mode (based on offline profiling that has been added to thread runtime telemetry circuitry tables or online profiling).

Generally, applications with more inherent parallelism benefit from SDC mode whereas sequential code is more suited to a frequency increase. The thread runtime telemetry circuitry 716 monitors this using its internal tables (which are created using some profile information) and the runtime throughput of the application.

Based on parameters (e.g., current V, current F, ILP, etc.), after consulting its tables, the thread runtime telemetry circuitry 716 issues a request to the OS when the application warrants a migration to SDC mode.

Traditionally, the OS is responsible for managing the cores in a given platform. The OS provisions cores for new applications, tracks their progress, and reclaims cores them after the application has finished.

With the advent of the thread runtime telemetry circuitry 716, the OS now incorporates an additional responsibility of guiding applications between disparate cores based at least in part on recommendations by the thread runtime telemetry circuitry 716.

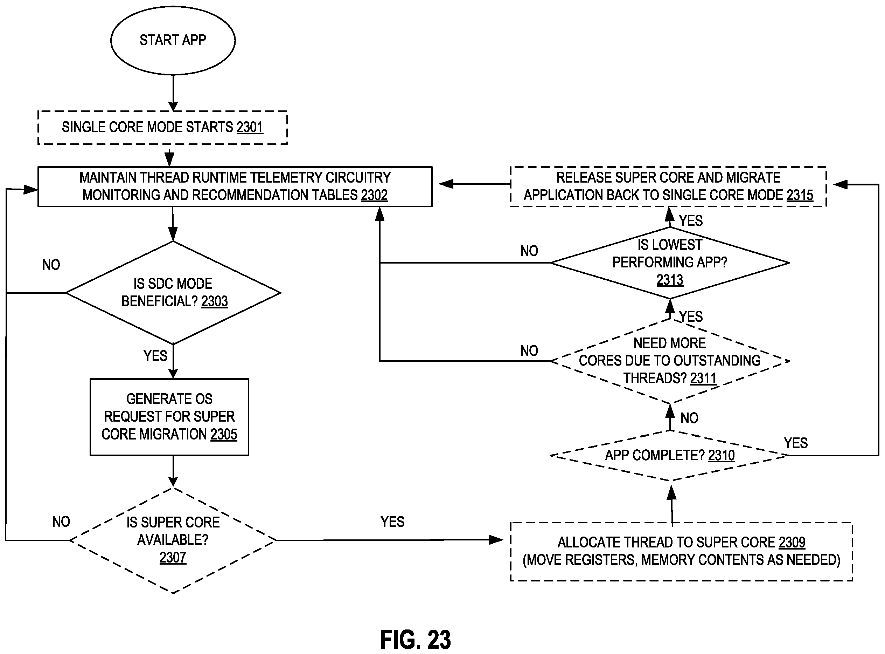

FIG. 23 illustrates examples of a method for entering and exiting SDC mode. In this illustration, in some examples, the dashed boxes represent acts performed by an OS, VMM, VM, etc. and the solid boxes are performed by a processor core (e.g., using thread runtime telemetry circuitry 716 of FIG. 7).

As shown, an application is started on a single core at 2301. The thread runtime telemetry circuitry 716 will maintain its internal monitoring recommendation data structure(s) at 2302. For example, noting that a single core is being used to execute the application.

The thread runtime telemetry circuitry 716 determines if the application would benefit from being run on SDC at 2303 (e.g., based on V, F, ILP, etc.). This determination may happen at any of several time, such as at set points in time, after a set number of instructions of the application have been executed, at branches, etc. If not, then the thread runtime telemetry circuitry 716 makes no recommendation and the thread runtime telemetry circuitry 716 will continue to maintain its internal monitoring recommendation data structure(s) at 2302.

If the thread runtime telemetry circuitry 716 determines that SDC mode should be used, then it generates a request for the OS to migrate the application to SDC mode at 2305. In some examples, this request is on the form up updating the recommendation table(s).

The OS makes a determination at 2307 of if SDC mode is available at 2307. The determination may include determining if a core that neighbors the current core is available for SDC mode. The determination may include determining if any two neighboring cores are available for SDC mode (where the migration will be away from the current core and onto two "new" cores).

If the OS determines that SDC mode is not available, the thread runtime telemetry circuitry 716 is informed of the decision and it will continue to maintain its monitoring, etc.. In some examples, the thread runtime telemetry circuitry 716 updates its recommendation table(s) to remove the recommendation.

If the OS determines that SDC mode is available, the OS migrates the application to the SDC mode at 2309. The entire state of the application such as memory contents, registers contents, etc. are also transferred to the SDC mode. In some examples, the thread runtime telemetry circuitry 716 updates is table(s) to reflect the usage of SDC.

Once an application is running in SDC mode, it is monitored (e.g., by the thread runtime telemetry circuitry 716 and/or OS) to determine if the application needs to be switched back to a conventional core. In some examples, the OS determines if the application is complete at 2310. Note this determination may happen continually, periodically, after a set number of instructions have been executed, upon a change in one or more of the other cores (e.g., a request to use one of the SDC cores has been made), etc. If the application has completed, then the super core is released at 2315.

If the application has not completed, a switch may be needed if the application suffers a high amount of branch misprediction due to a program phase change or loses ILP; there are many outstanding threads in the system which need independent cores (e.g., the system requires more cores rather than larger cores) at 2311.

In the above scenarios mentioned, the OS and/or the thread runtime telemetry circuitry 716 can decide to migrate and application back from the SDC mode to a conventional core. The thread runtime telemetry circuitry 716, which already monitors the IPC of each application, will be aware of all threads that are using the SDC mode and will select the least beneficial SDC thread out of them all at 2313 and will recommend the OS to migrate this application back to a conventional core. The OS will release the SDC and free up one or more cores for the outstanding threads at 2315.

Some examples utilize instruction formats described herein. Some examples are implemented in one or more computer architectures, cores, accelerators, etc. Some examples are generated or are IP cores. Some examples utilize emulation and/or translation.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

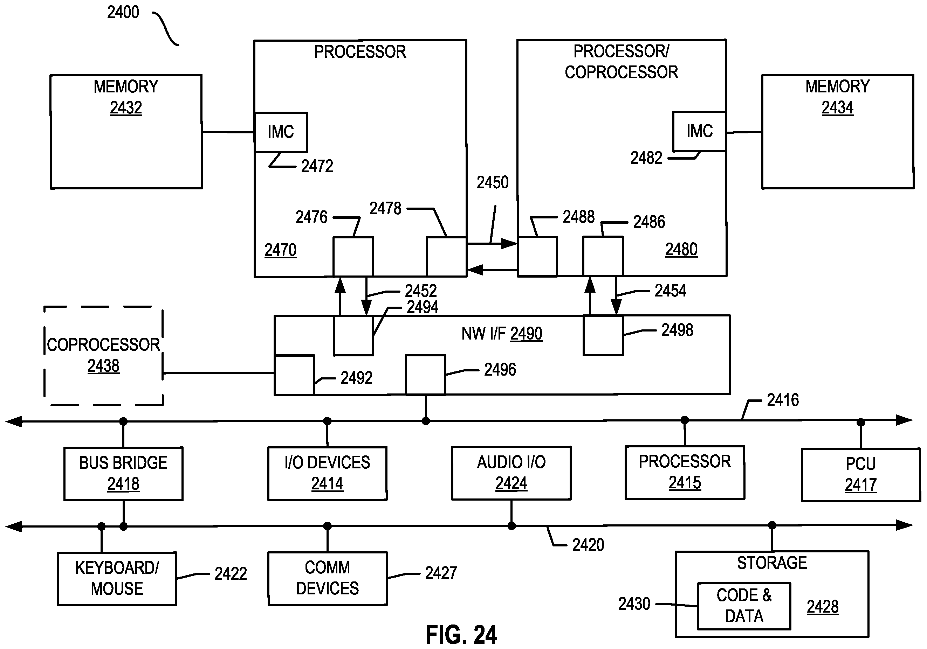

FIG. 24 illustrates an example computing system. Multiprocessor system 2400 is an interfaced system and includes a plurality of processors or cores including a first processor 2470 and a second processor 2480 coupled via an interface 2450 such as a point-to-point (P-P) interconnect, a fabric, and/or bus. In some examples, the first processor 2470 and the second processor 2480 are homogeneous. In some examples, first processor 2470 and the second processor 2480 are heterogenous. Though the example multiprocessor system 2400 is shown to have two processors, the system may have three or more processors, or may be a single processor system. In some examples, the computing system is a system on a chip (SoC).

Processors 2470 and 2480 are shown including integrated memory controller (IMC) circuitry 2472 and 2482, respectively. Processor 2470 also includes interface circuits 2476 and 2478; similarly, second processor 2480 includes interface circuits 2486 and 2488. Processors 2470, 2480 may exchange information via the interface 2450 using interface circuits 2478, 2488. IMCs 2472 and 2482 couple the processors 2470, 2480 to respective memories, namely a memory 2432 and a memory 2434, which may be portions of main memory locally attached to the respective processors.

Processors 2470, 2480 may each exchange information with a network interface (NW I/F) 2490 via individual interfaces 2452, 2454 using interface circuits 2476, 2494, 2486, 2498. The network interface 2490 (e.g., one or more of an interconnect, bus, and/or fabric, and in some examples is a chipset) may optionally exchange information with a co-processor 2438 via an interface circuit 2492. In some examples, the co-processor 2438 is a special-purpose processor, such as, for example, a high-throughput processor, a network or communication processor, a compression engine, a graphics processor, a general purpose graphics processing unit (GPGPU), a neural-network processing unit (NPU), an embedded processor, a security processor, a cryptographic accelerator, a matrix accelerator, an in-memory analytics accelerator, , a data streaming accelerator, data graph operations, or the like.

A shared cache (not shown) may be included in either processor 2470, 2480 or outside of both processors, yet connected with the processors via an interface such as P-P interconnect, such that either or both processors' local cache information may be stored in the shared cache if a processor is placed into a low power mode.

Network interface 2490 may be coupled to a first interface 2416 via interface circuit 2496. In some examples, first interface 2416 may be an interface such as a Peripheral Component Interconnect (PCI) interconnect, a PCI Express interconnect or another I/O interconnect. In some examples, first interface 2416 is coupled to a power control unit (PCU) 2417, which may include circuitry, software, and/or firmware to perform power management operations with regard to the processors 2470, 2480 and/or co-processor 2438. PCU 2417 provides control information to a voltage regulator (not shown) to cause the voltage regulator to generate the appropriate regulated voltage. PCU 2417 also provides control information to control the operating voltage generated. In various examples, PCU 2417 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 2417 is illustrated as being present as logic separate from the processor 2470 and/or processor 2480. In other cases, PCU 2417 may execute on a given one or more of cores (not shown) of processor 2470 or 2480. In some cases, PCU 2417 may be implemented as a microcontroller (dedicated or general-purpose) or other control logic configured to execute its own dedicated power management code, sometimes referred to as P-code. In yet other examples, power management operations to be performed by PCU 2417 may be implemented externally to a processor, such as by way of a separate power management integrated circuit (PMIC) or another component external to the processor. In yet other examples, power management operations to be performed by PCU 2417 may be implemented within BIOS or other system software.

Various I/O devices 2414 may be coupled to first interface 2416, along with a bus bridge 2418 which couples first interface 2416 to a second interface 2420. In some examples, one or more additional processor(s) 2415, such as co-processors, high throughput many integrated core (MIC) processors, GPGPUs, accelerators (such as graphics accelerators or digital signal processing (DSP) units), field programmable gate arrays (FPGAs), or any other processor, are coupled to first interface 2416. In some examples, second interface 2420 may be a low pin count (LPC) interface. Various devices may be coupled to second interface 2420 including, for example, a keyboard and/or mouse 2422, communication devices 2427 and storage circuitry 2428. Storage circuitry 2428 may be one or more non-transitory machine-readable storage media as described below, such as a disk drive or other mass storage device which may include instructions/code and data 2430 and may implement the storage in some examples. Further, an audio I/O 2424 may be coupled to second interface 2420. Note that other architectures than the point-to-point architecture described above are possible. For example, instead of the point-to-point architecture, a system such as multiprocessor system 2400 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a co-processor including one or more special purpose cores intended primarily for graphics and/or scientific (throughput) computing. Such different processors lead to different computer system architectures, which may include: 1) the co-processor on a separate chip from the CPU; 2) the co-processor on a separate die in the same package as a CPU; 3) the co-processor on the same die as a CPU (in which case, such a co-processor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described co-processor, and additional functionality. Example core architectures are described next, followed by descriptions of example processors and computer architectures.

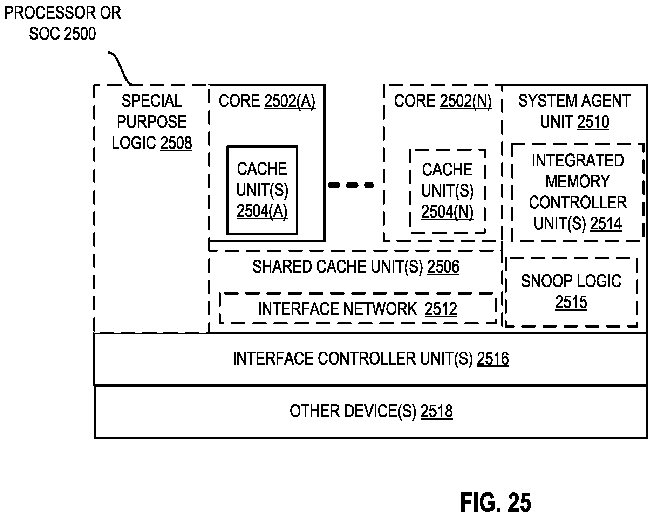

FIG. 25 illustrates a block diagram of an example processor and/or SoC 2500 that may have one or more cores and an integrated memory controller. The solid lined boxes illustrate a processor and/or SoC 2500 with a single core 2502(A), system agent unit circuitry 2510, and a set of one or more interface controller unit(s) circuitry 2516, while the optional addition of the dashed lined boxes illustrates an alternative processor and/or SoC 2500 with multiple cores 2502(A)-(N), a set of one or more integrated memory controller unit(s) circuitry 2514in the system agent unit circuitry 2510, and special purpose logic 2508, as well as a set of one or more interface controller unit(s) circuitry 2516. Note that the processor and/or SoC 2500 may be one of the processors 2470 or 2480, or co-processor 2438 or 2415 of FIG. 24.

Thus, different implementations of the processor and/or SoC 2500 may include: 1) a CPU with the special purpose logic 2508 being a high-throughput processor, a network or communication processor, a compression engine, a graphics processor, a general purpose graphics processing unit (GPGPU), a neural-network processing unit (NPU), an embedded processor, a security processor, a matrix accelerator, an in-memory analytics accelerator, a compression accelerator, a data streaming accelerator, data graph operations, or the like (which may include one or more cores, not shown), and the cores 2502(A)-(N) being one or more general purpose cores (e.g., general purpose in-order cores, general purpose out-of-order cores, or a combination of the two); 2) a co-processor with the cores 2502(A)-(N) being a large number of special purpose cores intended primarily for graphics and/or scientific (throughput); and 3) a co-processor with the cores 2502(A)-(N) being a large number of general purpose in-order cores. Thus, the processor and/or SoC 2500 may be a general-purpose processor, co-processor or special-purpose processor, such as, for example, a network or communication processor, compression engine, graphics processor, GPGPU (general purpose graphics processing unit), a high throughput many integrated core (MIC) co-processor (including 30 or more cores), embedded processor, or the like. The processor may be implemented on one or more chips. The processor and/or SoC 2500 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 2504(A)-(N) within the cores 2502(A)-(N), a set of one or more shared cache unit(s) circuitry 2506, and external memory (not shown) coupled to the set of integrated memory controller unit(s) circuitry 2514. The set of one or more shared cache unit(s) circuitry 2506 may include one or more mid-level caches, such as level 2 (L2), level 3 (L3), level 4 (L4), or other levels of cache, such as a last level cache (LLC), and/or combinations thereof. While in some examples interface network circuitry 2512 (e.g., a ring interconnect) interfaces the special purpose logic 2508 (e.g., integrated graphics logic), the set of shared cache unit(s) circuitry 2506, and the system agent unit circuitry 2510, alternative examples use any number of well-known techniques for interfacing such units. In some examples, coherency is maintained between one or more of the shared cache unit(s) circuitry 2506 and cores 2502(A)-(N). In some examples, interface controller unit(s) circuitry 2516 couple the cores 2502(A)-(N) to one or more other devices 2518 such as one or more I/O devices, storage, one or more communication devices (e.g., wireless networking, wired networking, etc.), etc. In some examples, the system agent includes snoop logic 2515.

In some examples, one or more of the cores 2502(A)-(N) are capable of multi-threading. The system agent unit circuitry 2510 includes those components coordinating and operating cores 2502(A)-(N). The system agent unit circuitry 2510 may include, for example, power control unit (PCU) circuitry and/or display unit circuitry (not shown). The PCU may be or may include logic and components needed for regulating the power state of the cores 2502(A)-(N) and/orthe special purpose logic 2508 (e.g., integrated graphics logic). The display unit circuitry is for driving one or more externally connected displays.

The cores 2502(A)-(N) may be homogenous in terms of instruction set architecture (ISA). Alternatively, the cores 2502(A)-(N) may be heterogeneous in terms of ISA; that is, a subset of the cores 2502(A)-(N) may be capable of executing an ISA, while other cores may be capable of executing only a subset of that ISA or another ISA.

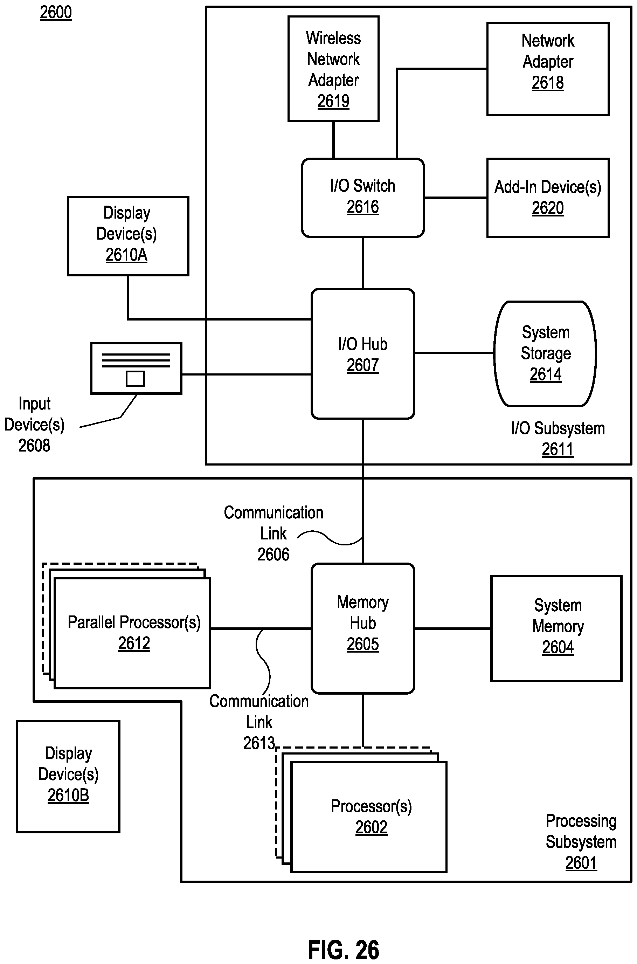

FIG. 26 is a block diagram illustrating a computing system 2600 configured to implement one or more aspects of the examples described herein. The computing system 2600 includes a processing subsystem 2601 having one or more processor(s) 2602 and a system memory 2604 communicating via an interconnection path that may include a memory hub 2605. The memory hub 2605 may be a separate component within a chipset component or may be integrated within the one or more processor(s) 2602. The memory hub 2605 couples with an I/O subsystem 2611 via a communication link 2606. The I/O subsystem 2611 includes an I/O hub 2607 that can enable the computing system 2600 to receive input from one or more input device(s) 2608. Additionally, the I/O hub 2607 can enable a display controller, which may be included in the one or more processor(s) 2602, to provide outputs to one or more display device(s) 2610A. In some examples the one or more display device(s) 2610A coupled with the I/O hub 2607 can include a local, internal, or embedded display device.

The processing subsystem 2601, for example, includes one or more parallel processor(s) 2612 coupled to memory hub 2605 via a bus or communication link 2613. The communication link 2613 may be one of any number of standards-based communication link technologies or protocols, such as, but not limited to PCI Express, or may be a vendor specific communications interface or communications fabric. The one or more parallel processor(s) 2612 may form a computationally focused parallel or vector processing system that can include a large number of processing cores and/or processing clusters, such as a many integrated core (MIC) processor. For example, the one or more parallel processor(s) 2612 form a graphics processing subsystem that can output pixels to one of the one or more display device(s) 2610A coupled via the I/O hub 2607. The one or more parallel processor(s) 2612 can also include a display controller and display interface (not shown) to enable a direct connection to one or more display device(s) 2610B.

Within the I/O subsystem 2611, a system storage unit 2614 can connect to the I/O hub 2607 to provide a storage mechanism for the computing system 2600. An I/O switch 2616 can be used to provide an interface mechanism to enable connections between the I/O hub 2607 and other components, such as a network adapter 2618 and/or wireless network adapter 2619 that may be integrated into the platform, and various other devices that can be added via one or more add-in device(s) 2620. The add-in device(s) 2620 may also include, for example, one or more external graphics processor devices, graphics cards, and/or compute accelerators. The network adapter 2618 can be an Ethernet adapter or another wired network adapter. The wireless network adapter 2619 can include one or more of a Wi-Fi, Bluetooth, near field communication (NFC), or other network device that includes one or more wireless radios.

The computing system 2600 can include other components not explicitly shown, including USB or other port connections, optical storage drives, video capture devices, and the like, which may also be connected to the I/O hub 2607. Communication paths interconnecting the various components in FIG. 26 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP LongTerm Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 2612 may incorporate circuitry optimized for graphics and video processing, including, for example, video output circuitry, and constitutes a graphics processing unit (GPU). Alternatively or additionally, the one or more parallel processor(s) 2612 can incorporate circuitry optimized for general purpose processing, while preserving the underlying computational architecture, described in greater detail herein. Components of the computing system 2600 may be integrated with one or more other system elements on a single integrated circuit. For example, the one or more parallel processor(s) 2612, memory hub 2605, processor(s) 2602, and I/O hub 2607 can be integrated into a system on chip (SoC) integrated circuit. Alternatively, the components of the computing system 2600 can be integrated into a single package to form a system in package (SIP) configuration. In some examples at least a portion of the components of the computing system 2600 can be integrated into a multi-chip module (MCM), which can be interconnected with other multi-chip modules into a modular computing system.

It will be appreciated that the computing system 2600 shown herein is illustrative and that variations and modifications are possible. The connection topology, including the number and arrangement of bridges, the number of processor(s) 2602, and the number of parallel processor(s) 2612, may be modified as desired. For instance, system memory 2604 can be connected to the processor(s) 2602 directly rather than through a bridge, while other devices communicate with system memory 2604 via the memory hub 2605 and the processor(s) 2602. In other alternative topologies, the parallel processor(s) 2612 are connected to the I/O hub 2607 or directly to one of the one or more processor(s) 2602, rather than to the memory hub 2605. In other examples, the I/O hub 2607 and memory hub 2605 may be integrated into a single chip. It is also possible that two or more sets of processor(s) 2602 are attached via multiple sockets, which can couple with two or more instances of the parallel processor(s) 2612.

Some of the particular components shown herein are optional and may not be included in all implementations of the computing system 2600. For example, any number of add-in cards or peripherals may be supported, or some components may be eliminated. Furthermore, some architectures may use different terminology for components similar to those illustrated in FIG. 26. For example, the memory hub 2605 may be referred to as a Northbridge in some architectures, while the I/O hub 2607 may be referred to as a Southbridge.

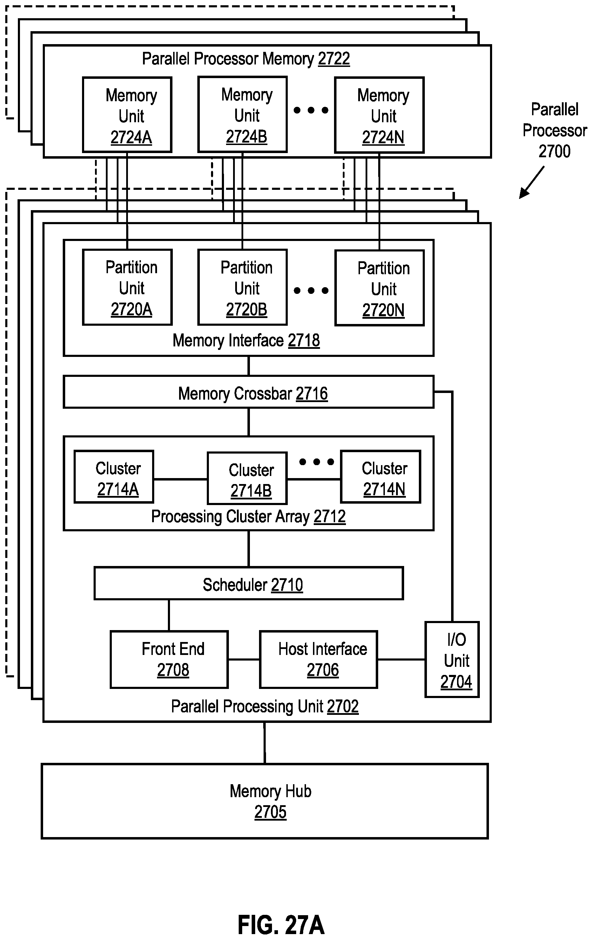

FIG. 27A illustrates examples of a parallel processor 2700. The parallel processor 2700 may be a GPU, GPGPU or the like as described herein. The various components of the parallel processor 2700 may be implemented using one or more integrated circuit devices, such as programmable processors, application specific integrated circuits (ASICs), or field programmable gate arrays (FPGA). The parallel processor 2700 may be one or more of the parallel processor(s) 2612 shown in FIG. 26.

The parallel processor 2700 includes a parallel processing unit 2702. The parallel processing unit includes an I/O unit 2704 that enables communication with other devices, including other instances of the parallel processing unit 2702. The I/O unit 2704 may be directly connected to other devices. For instance, the I/O unit 2704 connects with other devices via the use of a hub or switch interface, such as memory hub 2605. The connections between the memory hub 2605 and the I/O unit 2704 form a communication link 2613. Within the parallel processing unit 2702, the I/O unit 2704 connects with a host interface 2706 and a memory crossbar 2716, where the host interface 2706 receives commands directed to performing processing operations and the memory crossbar 2716 receives commands directed to performing memory operations.

When the host interface 2706 receives a command buffer via the I/O unit 2704, the host interface 2706 can direct work operations to perform those commands to a front end 2708. In some examples the front end 2708 couples with a scheduler 2710, which is configured to distribute commands or other work items to a processing cluster array 2712. The scheduler 2710 ensures that the processing cluster array 2712 is properly configured and in a valid state before tasks are distributed to the processing clusters of the processing cluster array 2712. The scheduler 2710 may be implemented via firmware logic executing on a microcontroller. The microcontroller implemented scheduler 2710 is configurable to perform complex scheduling and work distribution operations at coarse and fine granularity, enabling rapid preemption and context switching of threads executing on the processing cluster array 2712. Preferably, the host software can prove workloads for scheduling on the processing cluster array 2712 via one of multiple graphics processing doorbells. In other examples, polling for new workloads or interrupts can be used to identify or indicate availability of work to perform. The workloads can then be automatically distributed across the processing cluster array 2712 by the scheduler 2710 logic within the scheduler microcontroller.

The processing cluster array 2712 can include up to "N" processing clusters (e.g., cluster 2714A, cluster 2714B, through cluster 2714N). Each cluster 2714A-2714N of the processing cluster array 2712 can execute a large number of concurrent threads. The scheduler 2710 can allocate work to the clusters 2714A-2714N of the processing cluster array 2712 using various scheduling and/or work distribution algorithms, which may vary depending on the workload arising for each type of program or computation. The scheduling can be handled dynamically by the scheduler 2710 or can be assisted in part by compiler logic during compilation of program logic configured for execution by the processing cluster array 2712. Optionally, different clusters 2714A-2714N of the processing cluster array 2712 can be allocated for processing different types of programs or for performing different types of computations.

The processing cluster array 2712 can be configured to perform various types of parallel processing operations. For example, the processing cluster array 2712 is configured to perform general-purpose parallel compute operations. For example, the processing cluster array 2712 can include logic to execute processing tasks including filtering of video and/or audio data, performing modeling operations, including physics operations, and performing data transformations.

The processing cluster array 2712 is configured to perform parallel graphics processing operations. In such examples in which the parallel processor 2700 is configured to perform graphics processing operations, the processing cluster array 2712 can include additional logic to support the execution of such graphics processing operations, including, but not limited to texture sampling logic to perform texture operations, as well as tessellation logic and other vertex processing logic. Additionally, the processing cluster array 2712 can be configured to execute graphics processing related shader programs such as, but not limited to vertex shaders, tessellation shaders, geometry shaders, and pixel shaders. The parallel processing unit 2702 can transfer data from system memory via the I/O unit 2704 for processing. During processing the transferred data can be stored to on-chip memory (e.g., parallel processor memory 2722) during processing, then written back to system memory.

In examples in which the parallel processing unit 2702 is used to perform graphics processing, the scheduler 2710 may be configured to divide the processing workload into approximately equal sized tasks, to better enable distribution of the graphics processing operations to multiple clusters 2714A-2714N of the processing cluster array 2712. In some of these examples, portions of the processing cluster array 2712 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 2714A-2714N may be stored in buffers to allow the intermediate data to be transmitted between clusters 2714A-2714N for further processing.

During operation, the processing cluster array 2712 can receive processing tasks to be executed via the scheduler 2710, which receives commands defining processing tasks from front end 2708. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 2710 may be configured to fetch the indices corresponding to the tasks or may receive the indices from the front end 2708. The front end 2708 can be configured to ensure the processing cluster array 2712 is configured to a valid state before the workload specified by incoming command buffers (e.g., batch-buffers, push buffers, etc.) is initiated.

Each of the one or more instances of the parallel processing unit 2702 can couple with parallel processor memory 2722. The parallel processor memory 2722 can be accessed via the memory crossbar 2716, which can receive memory requests from the processing cluster array 2712 as well as the I/O unit 2704. The memory crossbar 2716 can access the parallel processor memory 2722 via a memory interface 2718. The memory interface 2718 can include multiple partition units (e.g., partition unit 2720A, partition unit 2720B, through partition unit 2720N) that can each couple to a portion (e.g., memory unit) of parallel processor memory 2722. The number of partition units 2720A-2720N may be configured to be equal to the number of memory units, such that a first partition unit 2720A has a corresponding first memory unit 2724A, a second partition unit 2720B has a corresponding second memory unit 2724B, and an Nth partition unit 2720N has a corresponding Nth memory unit 2724N. In other examples, the number of partition units 2720A-2720N may not be equal to the number of memory devices.

The memory units 2724A-2724N can include various types of memory devices, including dynamic random-access memory (DRAM) or graphics random access memory, such as synchronous graphics random access memory (SGRAM), including graphics double data rate (GDDR) memory. Optionally, the memory units 2724A-2724N may also include 3D stacked memory, including but not limited to high bandwidth memory (HBM). Persons skilled in the art will appreciate that the specific implementation of the memory units 2724A-2724N can vary and can be selected from one of various conventional designs. Render targets, such as frame buffers or texture maps may be stored across the memory units 2724A-2724N, allowing partition units 2720A-2720N to write portions of each render target in parallel to efficiently use the available bandwidth of parallel processor memory 2722. In some examples, a local instance of the parallel processor memory 2722 may be excluded in favor of a unified memory design that utilizes system memory in conjunction with local cache memory.

Optionally, any one of the clusters 2714A-2714N of the processing cluster array 2712 has the ability to process data that will be written to any of the memory units 2724A-2724N within parallel processor memory 2722. The memory crossbar 2716 can be configured to transfer the output of each cluster 2714A-2714N to any partition unit 2720A-2720N or to another cluster 2714A-2714N, which can perform additional processing operations on the output. Each cluster 2714A-2714N can communicate with the memory interface 2718 through the memory crossbar 2716 to read from or write to various external memory devices. In one of the examples with the memory crossbar 2716 the memory crossbar 2716 has a connection to the memory interface 2718 to communicate with the I/O unit 2704, as well as a connection to a local instance of the parallel processor memory 2722, enabling the processing units within the different processing clusters 2714A-2714N to communicate with system memory or other memory that is not local to the parallel processing unit 2702. Generally, the memory crossbar 2716 may, for example, be able to use virtual channels to separate traffic streams between the clusters 2714A-2714N and the partition units 2720A-2720N.

While a single instance of the parallel processing unit 2702 is illustrated within the parallel processor 2700, any number of instances of the parallel processing unit 2702 can be included. For example, multiple instances of the parallel processing unit 2702 can be provided on a single add-in card, or multiple add-in cards can be interconnected. For example, the parallel processor 2700 can be an add-in device, such as add-in device(s) 2620 of FIG. 26, which may be a graphics card such as a discrete graphics card that includes one or more GPUs, one or more memory devices, and device-to-device or network or fabric interfaces. The different instances of the parallel processing unit 2702 can be configured to inter-operate even if the different instances have different numbers of processing cores, different amounts of local parallel processor memory, and/or other configuration differences. Optionally, some instances of the parallel processing unit 2702 can include higher precision floating point units relative to other instances. Systems incorporating one or more instances of the parallel processing unit 2702 or the parallel processor 2700 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 2702 can be partitioned into multiple instances. Those multiple instances can be configured to execute workloads associated with different clients in an isolated manner, enabling a pre-determined quality of service to be provided for each client. For example, each cluster 2714A-2714N can be compartmentalized and isolated from other clusters, allowing the processing cluster array 2712 to be divided into multiple compute partitions or instances. In such configuration, workloads that execute on an isolated partition are protected from faults or errors associated with a different workload that executes on a different partition. The partition units 2720A-2720N can be configured to enable a dedicated and/or isolated path to memory for the clusters 2714A-2714N associated with the respective compute partitions. This datapath isolation enables the compute resources within a partition can communicate with one or more assigned memory units 2724A-2724N without being subjected to inference by the activities of other partitions.

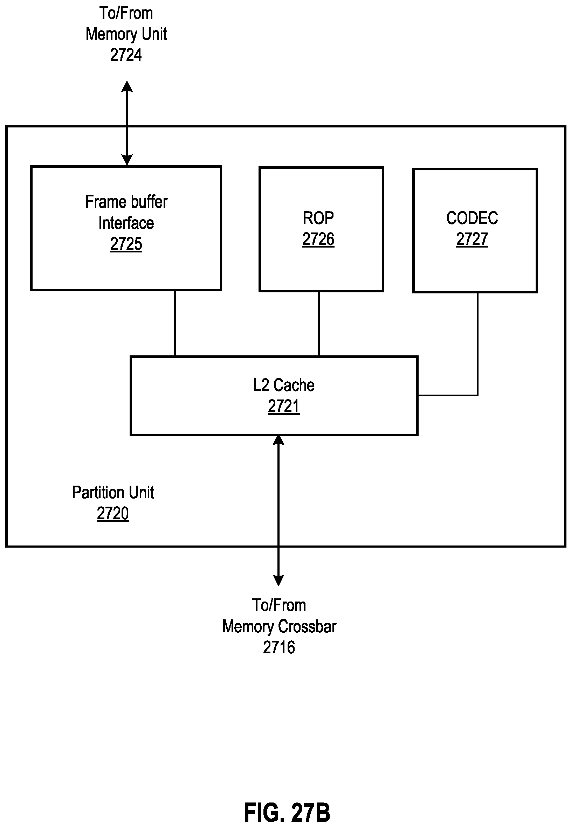

FIG. 27B is a block diagram of a partition unit 2720. The partition unit 2720 may be an instance of one of the partition units 2720A-2720N of FIG. 27A. As illustrated, the partition unit 2720 includes an L2 cache 2721, a frame buffer interface 2725, and a ROP 2726 (raster operations unit). The L2 cache 2721 is a read/write cache that is configured to perform load and store operations received from the memory crossbar 2716 and ROP 2726. Read misses and urgent write-back requests are output by L2 cache 2721 to frame buffer interface 2725 for processing. Updates can also be sent to the frame buffer via the frame buffer interface 2725 for processing. In some examples the frame buffer interface 2725 interfaces with one of the memory units in parallel processor memory, such as the memory units 2724A-2724N of FIG. 27A (e.g., within parallel processor memory 2722). The partition unit 2720 may additionally or alternatively also interface with one of the memory units in parallel processor memory via a memory controller (not shown).

In graphics applications, the ROP 2726 is a processing unit that performs raster operations such as stencil, z test, blending, and the like. The ROP 2726 then outputs processed graphics data that is stored in graphics memory. In some examples the ROP 2726 includes or couples with a CODEC 2727 that includes compression logic to compress depth or color data that is written to memory or the L2 cache 2721 and decompress depth or color data that is read from memory or the L2 cache 2721. The compression logic can be lossless compression logic that makes use of one or more of multiple compression algorithms. The type of compression that is performed by the CODEC 2727 can vary based on the statistical characteristics of the data to be compressed. For example, in some examples, delta color compression is performed on depth and color data on a per-tile basis. In some examples the CODEC 2727 includes compression and decompression logic that can compress and decompress compute data associated with machine learning operations. The CODEC 2727 can, for example, compress sparse matrix data for sparse machine learning operations. The CODEC 2727 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 2726 may be included within each processing cluster (e.g., cluster 2714A-2714N of FIG. 27A) instead of within the partition unit 2720. In such example, read and write requests for pixel data are transmitted over the memory crossbar 2716 instead of pixel fragment data. The processed graphics data may be displayed on a display device, such as one of the one or more display device(s) 2610A-2610B of FIG. 26, routed for further processing by the processor(s) 2602, or routed for further processing by one of the processing entities within the parallel processor 2700 of FIG. 27A.

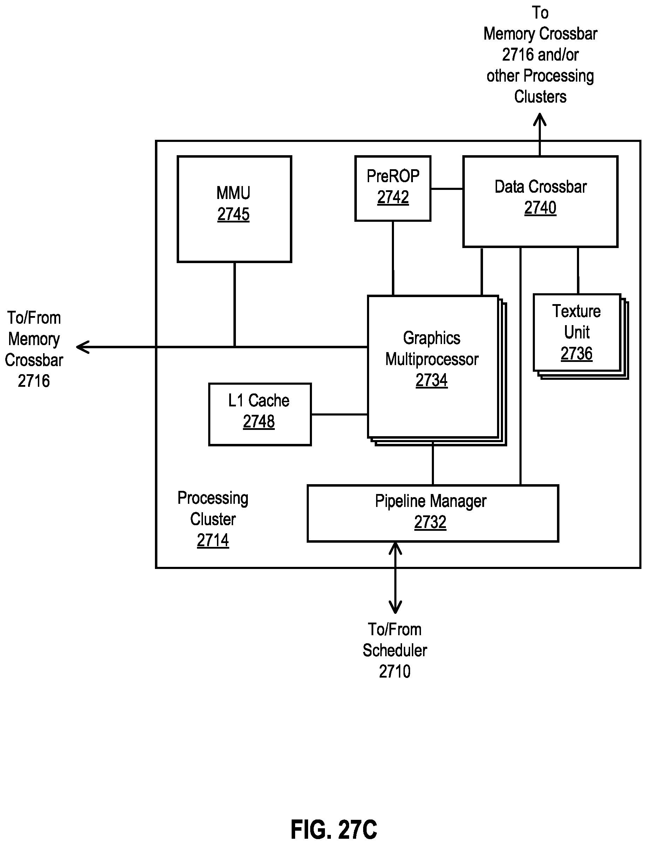

FIG. 27C is a block diagram of a processing cluster 2714 within a parallel processing unit. For example, the processing cluster is an instance of one of the processing clusters 2714A-2714N of FIG. 27A. The processing cluster 2714 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple-thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 2714 can be controlled via a pipeline manager 2732 that distributes processing tasks to SIMT parallel processors. The pipeline manager 2732 receives instructions from the scheduler 2710 of FIG. 27A and manages execution of those instructions via a graphics multiprocessor 2734 and/or a texture unit 2736. The graphics multiprocessor 2734 is an exemplary instance of a SIMT parallel processor. However, various types of SIMT parallel processors of differing architectures may be included within the processing cluster 2714. One or more instances of the graphics multiprocessor 2734 can be included within a processing cluster 2714. The graphics multiprocessor 2734 can process data and a data crossbar 2740 can be used to distribute the processed data to one of multiple possible destinations, including other shader units. The pipeline manager 2732 can facilitate the distribution of processed data by specifying destinations for processed data to be distributed via the data crossbar 2740.

Each graphics multiprocessor 2734 within the processing cluster 2714 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 2714 constitute a thread. A set of threads executing across the set of parallel processing engines is a thread group. A thread group executes the same program on different input data. Each thread within a thread group can be assigned to a different processing engine within a graphics multiprocessor 2734. A thread group may include fewer threads than the number of processing engines within the graphics multiprocessor 2734. When a thread group includes fewer threads than the number of processing engines, one or more of the processing engines may be idle during cycles in which that thread group is being processed. A thread group may also include more threads than the number of processing engines within the graphics multiprocessor 2734. When the thread group includes more threads than the number of processing engines within the graphics multiprocessor 2734, processing can be performed over consecutive clock cycles. Optionally, multiple thread groups can be executed concurrently on the graphics multiprocessor 2734.

The graphics multiprocessor 2734 may include an internal cache memory to perform load and store operations. Optionally, the graphics multiprocessor 2734 can forego an internal cache and use a cache memory (e.g., level 1 (L1) cache 2748) within the processing cluster 2714. Each graphics multiprocessor 2734 also has access to level 2 (L2) caches within the partition units (e.g., partition units 2720A-2720N of FIG. 27A) that are shared among all processing clusters 2714 and may be used to transfer data between threads. The graphics multiprocessor 2734 may also access off-chip global memory, which can include one or more of local parallel processor memory and/or system memory. Any memory external to the parallel processing unit 2702 may be used as global memory. Embodiments in which the processing cluster 2714 includes multiple instances of the graphics multiprocessor 2734 can share common instructions and data, which may be stored in the L1 cache 2748.

Each processing cluster 2714 may include an MMU 2745 (memory management unit) that is configured to map virtual addresses into physical addresses. In other examples, one or more instances of the MMU 2745 may reside within the memory interface 2718 of FIG. 27A. The MMU 2745 includes a set of page table entries (PTEs) used to map a virtual address to a physical address of a tile and optionally a cache line index. The MMU 2745 may include address translation lookaside buffers (TLB) or caches that may reside within the graphics multiprocessor 2734 or the L1 cache 2748 of processing cluster 2714. The physical address is processed to distribute surface data access locality to allow efficient request interleaving among partition units. The cache line index may be used to determine whether a request for a cache line is a hit or miss.

In graphics and computing applications, a processing cluster 2714 may be configured such that each graphics multiprocessor 2734 is coupled to a texture unit 2736 for performing texture mapping operations, e.g., determining texture sample positions, reading texture data, and filtering the texture data. Texture data is read from an internal texture L1 cache (not shown) or in some examples from the L1 cache within graphics multiprocessor 2734 and is fetched from an L2 cache, local parallel processor memory, or system memory, as needed. Each graphics multiprocessor 2734 outputs processed tasks to the data crossbar 2740 to provide the processed task to another processing cluster 2714 for further processing or to store the processed task in an L2 cache, local parallel processor memory, or system memory via the memory crossbar 2716. A preROP 2742 (pre-raster operations unit) is configured to receive data from graphics multiprocessor 2734, direct data to ROP units, which may be located with partition units as described herein (e.g., partition units 2720A-2720N of FIG. 27A). The preROP 2742 unit can perform optimizations for color blending, organize pixel color data, and perform address translations.

It will be appreciated that the core architecture described herein is illustrative and that variations and modifications are possible. Any number of processing units, e.g., graphics multiprocessor 2734, texture units 2736, preROPs 2742, etc., may be included within a processing cluster 2714. Further, while only one processing cluster 2714 is shown, a parallel processing unit as described herein may include any number of instances of the processing cluster 2714. Optionally, each processing cluster 2714 can be configured to operate independently of other processing clusters 2714 using separate and distinct processing units, L1 caches, L2 caches, etc.

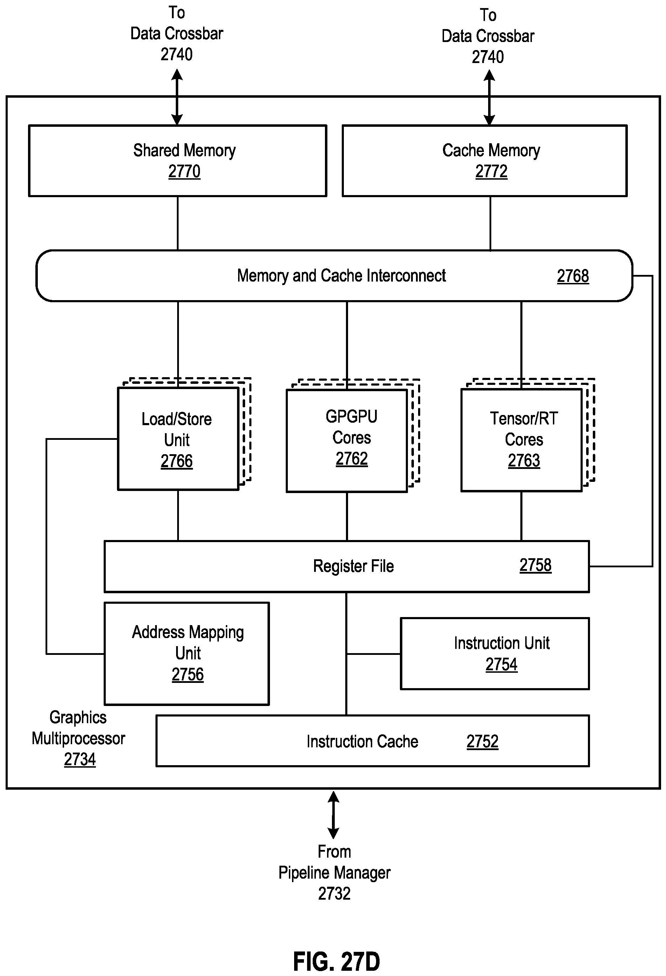

FIG. 27D shows an example of the graphics multiprocessor 2734 in which the graphics multiprocessor 2734 couples with the pipeline manager 2732 of the processing cluster 2714. The graphics multiprocessor 2734 has an execution pipeline including but not limited to an instruction cache 2752, an instruction unit 2754, an address mapping unit 2756, a register file 2758, one or more general purpose graphics processing unit (GPGPU) cores 2762, and one or more load/store units 2766. The GPGPU cores 2762 and load/store units 2766 are coupled with cache memory 2772 and shared memory 2770 via a memory and cache interconnect 2768. The graphics multiprocessor 2734 may additionally include tensor and/or ray-tracing cores 2763 that include hardware logic to accelerate matrix and/or ray-tracing operations.

The instruction cache 2752 may receive a stream of instructions to execute from the pipeline manager 2732. The instructions are cached in the instruction cache 2752 and dispatched for execution by the instruction unit 2754. The instruction unit 2754 can dispatch instructions as thread groups (e.g., warps), with each thread of the thread group assigned to a different execution unit within GPGPU core 2762. An instruction can access any of a local, shared, or global address space by specifying an address within a unified address space. The address mapping unit 2756 can be used to translate addresses in the unified address space into a distinct memory address that can be accessed by the load/store units 2766.

The register file 2758 provides a set of registers for the functional units of the graphics multiprocessor 2734. The register file 2758 provides temporary storage for operands connected to the data paths of the functional units (e.g., GPGPU cores 2762, load/store units 2766) of the graphics multiprocessor 2734. The register file 2758 may be divided between each of the functional units such that each functional unit is allocated a dedicated portion of the register file 2758. For example, the register file 2758 may be divided between the different warps being executed by the graphics multiprocessor 2734.

The GPGPU cores 2762 can each include floating point units (FPUs) and/or integer arithmetic logic units (ALUs) that are used to execute instructions of the graphics multiprocessor 2734. In some implementations, the GPGPU cores 2762 can include hardware logic that may otherwise reside within the tensor and/or ray-tracing cores 2763. The GPGPU cores 2762 can be similar in architecture or can differ in architecture. For example and in some examples, a first portion of the GPGPU cores 2762 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 2734 can additionally include one or more fixed function or special function units to perform specific functions such as copy rectangle or pixel blending operations. One or more of the GPGPU cores can also include fixed or special function logic.

The GPGPU cores 2762 may include SIMD logic capable of performing a single instruction on multiple sets of data. Optionally, GPGPU cores 2762 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 2768 is an interconnect network that connects each of the functional units of the graphics multiprocessor 2734 to the register file 2758 and to the shared memory 2770. For example, the memory and cache interconnect 2768 is a crossbar interconnect that allows the load/store unit 2766 to implement load and store operations between the shared memory 2770 and the register file 2758. The register file 2758 can operate at the same frequency as the GPGPU cores 2762, thus data transfer between the GPGPU cores 2762 and the register file 2758 is very low latency. The shared memory 2770 can be used to enable communication between threads that execute on the functional units within the graphics multiprocessor 2734. The cache memory 2772 can be used as a data cache for example, to cache texture data communicated between the functional units and the texture unit 2736. The shared memory 2770 can also be used as a program managed cached. The shared memory 2770 and the cache memory 2772 can couple with the data crossbar 2740 to enable communication with other components of the processing cluster. Threads executing on the GPGPU cores 2762 can programmatically store data within the shared memory in addition to the automatically cached data that is stored within the cache memory 2772.

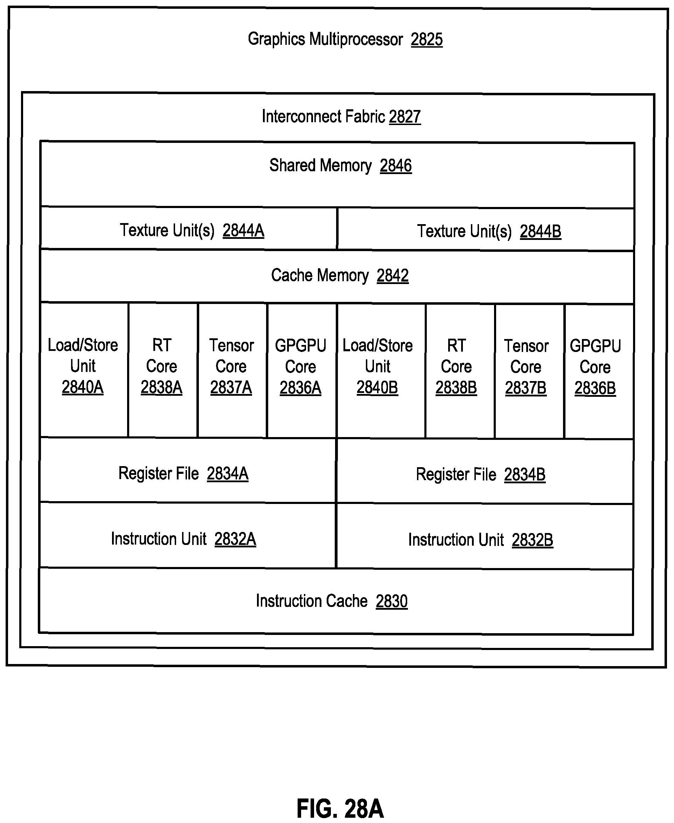

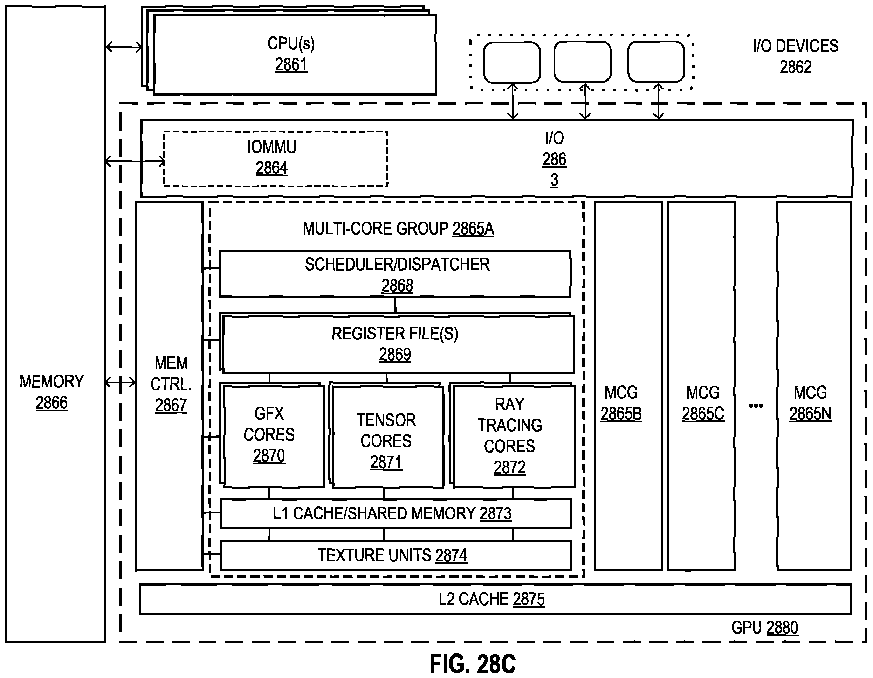

FIGS. 28A-28C illustrate additional graphics multiprocessors, according to examples. FIG. 28A-28B illustrate graphics multiprocessors 2825, 2850, which are related to the graphics multiprocessor 2734 of FIG. 27C and may be used in place of one of those. Therefore, the disclosure of any features in combination with the graphics multiprocessor 2734 herein also discloses a corresponding combination with the graphics multiprocessors 2825, 2850, but is not limited to such. FIG. 28C illustrates a graphics processing unit (GPU) 2880 which includes dedicated sets of graphics processing resources arranged into multi-core groups 2865A-2865N, which correspond to the graphics multiprocessors 2825, 2850. The illustrated graphics multiprocessors 2825, 2850 and the multi-core groups 2865A-2865N can be streaming multiprocessors (SM) capable of simultaneous execution of a large number of execution threads.

The graphics multiprocessor 2825 of FIG. 28A includes multiple additional instances of execution resource units relative to the graphics multiprocessor 2734 of FIG. 27D. For example, the graphics multiprocessor 2825 can include multiple instances of the instruction unit 2832A-2832B, register file 2834A-2834B, and texture unit(s) 2844A-2844B. The graphics multiprocessor 2825 also includes multiple sets of graphics or compute execution units (e.g., GPGPU core 2836A-2836B, tensor core 2837A-2837B, ray-tracing core 2838A-2838B) and multiple sets of load/store units 2840A-2840B. The execution resource units have a common instruction cache 2830, texture and/or data cache memory 2842, and shared memory 2846.

The various components can communicate via an interconnect fabric 2827. The interconnect fabric 2827 may include one or more crossbar switches to enable communication between the various components of the graphics multiprocessor 2825. The interconnect fabric 2827 may be a separate, high-speed network fabric layer upon which each component of the graphics multiprocessor 2825 is stacked. The components of the graphics multiprocessor 2825 communicate with remote components via the interconnect fabric 2827. For example, the cores 2836A-2836B, 2837A-2837B, and 2838A-2838B can each communicate with shared memory 2846 via the interconnect fabric 2827. The interconnect fabric 2827 can arbitrate communication within the graphics multiprocessor 2825 to ensure a fair bandwidth allocation between components.

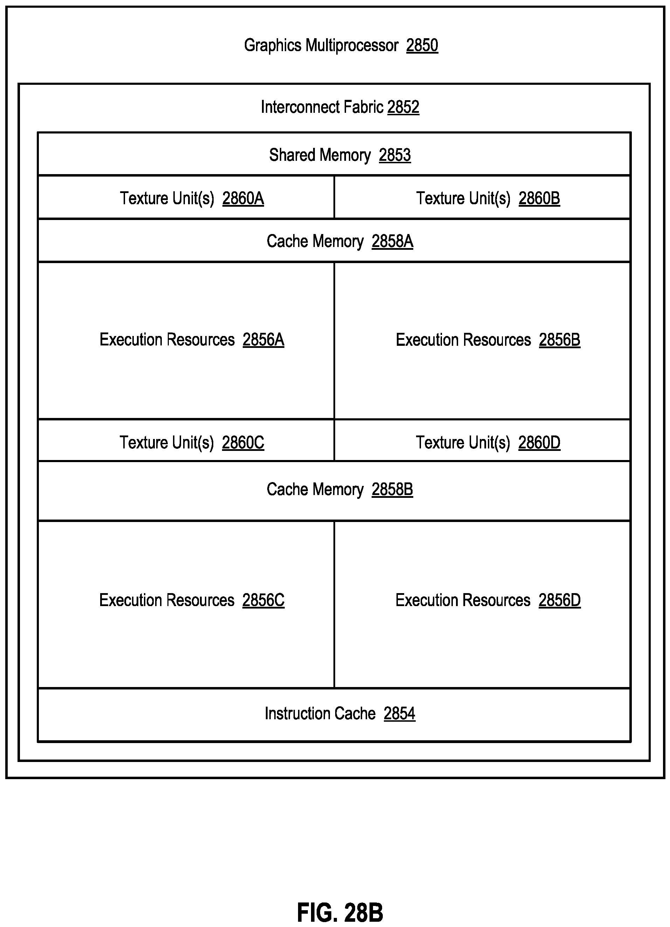

The graphics multiprocessor 2850 of FIG. 28B includes multiple sets of execution resources 2856A-2856D, where each set of execution resource includes multiple instruction units, register files, GPGPU cores, and load store units, as illustrated in FIG. 27D and FIG. 28A. The execution resources 2856A-2856D can work in concert with texture unit(s) 2860A-2860D for texture operations, while sharing an instruction cache 2854, and shared memory 2853. For example, the execution resources 2856A-2856D can share an instruction cache 2854 and shared memory 2853, as well as multiple instances of a texture and/or data cache memory 2858A-2858B. The various components can communicate via an interconnect fabric 2852 similar to the interconnect fabric 2827 of FIG. 28A.

Persons skilled in the art will understand that the architecture described in FIG. 1, 27A-27D, and 28A-28B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 2702 of FIG. 27A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 28C illustrates a graphics processing unit (GPU) 2880 which includes dedicated sets of graphics processing resources arranged into multi-core groups 2865A-2865N. While the details of only a single multi-core group 2865A are provided, it will be appreciated that the other multi-core groups 2865B-2865N may be equipped with the same or similar sets of graphics processing resources. Details described with respect to the multi-core groups 2865A-2865N may also apply to any graphics multiprocessor 2825, 2850 described herein.

As illustrated, a multi-core group 2865A may include a set of graphics cores 2870, a set of tensor cores 2871, and a set of ray tracing cores 2872. A scheduler/dispatcher2868 schedules and dispatches the graphics threads for execution on the various cores 2870, 2871, 2872. A set of register files 2869 store operand values used by the cores 2870, 2871, 2872 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 2873 store graphics data such as texture data, vertex data, pixel data, ray data, boundingvolume data, etc., locally within each multi-core group 2865A. One or more texture units 2874 can also be used to perform texturing operations, such as texture mapping and sampling. A Level 2 (L2) cache 2875 shared by all or a subset of the multi-core groups 2865A-2865N stores graphics data and/or instructions for multiple concurrent graphics threads. As illustrated, the L2 cache 2875 may be shared across a plurality of multi-core groups 2865A-2865N. One or more memory controllers 2867 couple the GPU 2880 to a memory 2866 which may be a system memory (e.g., DRAM) and/or a dedicated graphics memory (e.g., GDDR6 memory).

Input/output (I/O) circuitry 2863 couples the GPU 2880 to one or more I/O devices 2862 such as digital signal processors (DSPs), network controllers, or user input devices. An on-chip interconnect may be used to couple the I/O devices 2862 to the GPU 2880 and memory 2866. One or more I/O memory management units (IOMMUs) 2864 of the I/O circuitry 2863 couple the I/O devices 2862 directly to the system memory 2866. Optionally, the IOMMU 2864 manages multiple sets of page tables to map virtual addresses to physical addresses in system memory 2866. The I/O devices 2862, CPU(s) 2861, and GPU(s) 2880 may then share the same virtual address space.

In one implementation of the IOMMU 2864, the IOMMU 2864 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 2866). The base addresses of each of the first and second sets of page tables may be stored in control registers and swapped out on a context switch (e.g., so that the new context is provided with access to the relevant set of page tables). While not illustrated in FIG. 28C, each of the cores 2870, 2871, 2872 and/or multi-core groups 2865A-2865N may include translation lookaside buffers (TLBs) to cache guest virtual to guest physical translations, guest physical to host physical translations, and guest virtual to host physical translations.

The CPU(s) 2861, GPUs 2880, and I/O devices 2862 may be integrated on a single semiconductor chip and/or chip package. The illustrated memory 2866 may be integrated on the same chip or may be coupled to the memory controllers 2867 via an off-chip interface. In one implementation, the memory 2866 comprises GDDR6 memory which shares the same virtual address space as other physical system-level memories, although the underlying principles described herein are not limited to this specific implementation.

The tensor cores 2871 may include a plurality of execution units specifically designed to perform matrix operations, which are the fundamental compute operation used to perform deep learning operations. For example, simultaneous matrix multiplication operations may be used for neural network training and inferencing. The tensor cores 2871 may perform matrix processing using a variety of operand precisions including single precision floating-point (e.g., 32 bits), half-precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 2871. The training of neural networks, in particular, requires a significant number of matrix dot product operations. In order to process an inner-product formulation of an N × N × N matrix multiply, the tensor cores 2871 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 2871 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 2871 support a sparse mode of operation for matrices in which the vast majority of values are zero. The tensor cores 2871 include support for sparse input matrices that are encoded in a sparse matrix representation (e.g., coordinate list encoding (COO), compressed sparse row (CSR), compress sparse column (CSC), etc.). The tensor cores 2871 also include support for compressed sparse matrix representations in the event that the sparse matrix representation may be further compressed. Compressed, encoded, and/or compressed and encoded matrix data, along with associated compression and/or encoding metadata, can be read by the tensor cores 2871 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 2871, output matrix C may be output in a compressed format, a sparse encoding, or a compressed sparse encoding.

The ray tracing cores 2872 may accelerate ray tracing operations for both real-time ray tracing and non-real-time ray tracing implementations. In particular, the ray tracing cores 2872 may include ray traversal/intersection circuitry for performing ray traversal using bounding volume hierarchies (BVHs) and identifying intersections between rays and primitives enclosed within the BVH volumes. The ray tracing cores 2872 may also include circuitry for performing depth testing and culling (e.g., using a Z buffer or similar arrangement). In one implementation, the ray tracing cores 2872 perform traversal and intersection operations in concert with the image denoising techniques described herein, at least a portion of which may be executed on the tensor cores 2871. For example, the tensor cores 2871 may implement a deep learning neural network to perform denoising of frames generated by the ray tracing cores 2872. However, the CPU(s) 2861, graphics cores 2870, and/or ray tracing cores 2872 may also implement all or a portion of the denoising and/or deep learning algorithms.

In addition, as described above, a distributed approach to denoising may be employed in which the GPU 2880 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 2872 may process all BVH traversal and/or ray-primitive intersections, saving the graphics cores 2870 from being overloaded with thousands of instructions per ray. For example, each ray tracing core 2872 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 2865A can simply launch a ray probe, and the ray tracing cores 2872 independently perform ray traversal and intersection and return hit data (e.g., a hit, no hit, multiple hits, etc.) to the thread context. The other cores 2870, 2871 are freed to perform other graphics or compute work while the ray tracing cores 2872 perform the traversal and intersection operations.

Optionally, each ray tracing core 2872 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 2870 and tensor cores 2871) are freed to perform other forms of graphics work.

In some examples described below, a hybrid rasterization/ray tracing approach is used in which work is distributed between the graphics cores 2870 and ray tracing cores 2872.

The ray tracing cores 2872 (and/or other cores 2870, 2871) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 2872, graphics cores 2870 and tensor cores 2871 is Vulkan API (e.g., Vulkan version 1.1.85 and later). Note, however, that the underlying principles described herein are not limited to any particular ray tracing ISA.

In general, the various cores 2872, 2871, 2870 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit Indicates the child volumes a ray will traverse.
- Exceptions - Includes various types of exception handlers (e.g., invoked for various error conditions).

In some examples the ray tracing cores 2872 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 2872 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 2872 can also be used to perform computations that are not directly analogous to ray tracing. For example, mesh projection, mesh refinement, and volume sampling computations can be accelerated using the ray tracing cores 2872. Generic coordinate space calculations, such as nearest neighbor calculations can also be performed. For example, the set of points near a given point can be discovered by defining a bounding box in the coordinate space around the point. BVH and ray probe logic within the ray tracing cores 2872 can then be used to determine the set of point intersections within the bounding box. The intersections constitute the origin point and the nearest neighbors to that origin point. Computations that are performed using the ray tracing cores 2872 can be performed in parallel with computations performed on the graphics cores 2872 and tensor cores 2871. A shader compiler can be configured to compile a compute shader or other general-purpose graphics processing program into low level primitives that can be parallelized across the graphics cores 2870, tensor cores 2871, and ray tracing cores 2872.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Embodiments described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

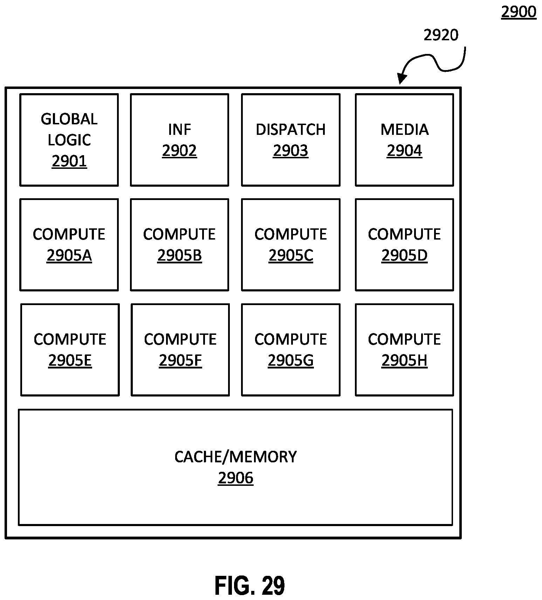

FIG. 29 shows a parallel compute system 2900, according to some examples. In some examples the parallel compute system 2900 includes a parallel processor 2920, which can be a graphics processor or compute accelerator as described herein. The parallel processor 2920 includes a global logic unit 2901, an interface 2902, a thread dispatcher 2903, a media unit 2904, a set of compute units 2905A-2905H, and a cache/memory units 2906. The global logic unit 2901, in some examples, includes global functionality for the parallel processor2920, including device configuration registers, global schedulers, power management logic, and the like. The interface 2902 can include a front-end interface for the parallel processor 2920. The thread dispatcher 2903 can receive workloads from the interface 2902 and dispatch threads for the workload to the compute units 2905A-2905H. If the workload includes any media operations, at least a portion of those operations can be performed by the media unit 2904. The media unit can also offload some operations to the compute units 2905A-2905H. The cache/memory units 2906 can include cache memory (e.g., L3 cache) and local memory (e.g., HBM, GDDR) for the parallel processor 2920. Compute units 2905 may include units for one or more of a network or communication processor, a core, a graphics processor, a general purpose graphics processing unit (GPGPU), a neural-network processing unit (NPU), an embedded processor, a security processor, a cryptographic accelerator, a matrix accelerator, an in-memory analytics accelerator, a compression accelerator, a data streaming accelerator, or the like.

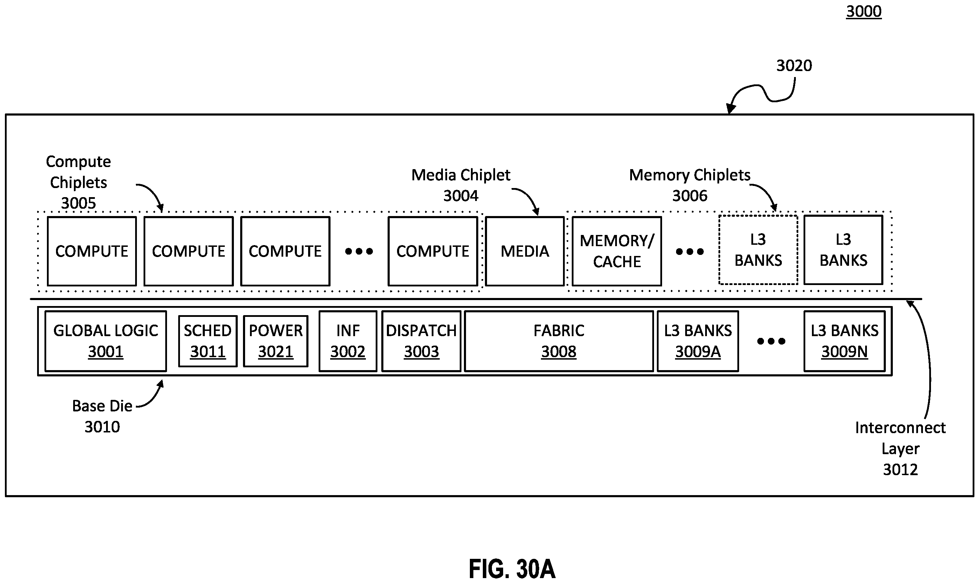

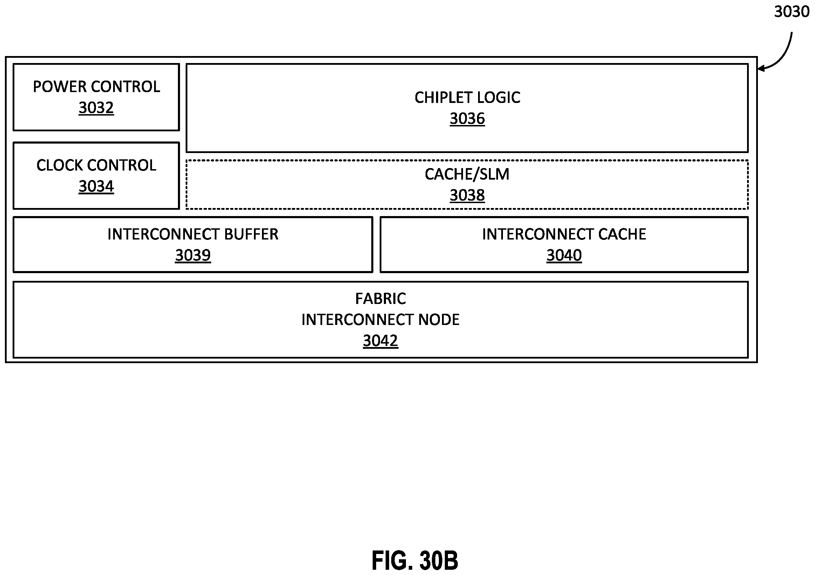

FIGS. 30A-30B illustrate a hybrid logical/physical view of a disaggregated parallel processor, according to examples described herein. FIG. 30A illustrates a disaggregated parallel compute system 3000. FIG. 30B illustrates a chiplet 3030 of the disaggregated parallel compute system 3000.

As shown in FIG. 30A, a disaggregated parallel compute system 3000 can include a parallel processor 3020 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 3005, a media chiplet 3004, and memory chiplets 3006. Each chiplet can be separately manufactured using different process technologies. For example, compute chiplets 3005 may be manufactured using the smallest or most advanced process technology available at the time of fabrication, while memory chiplets 3006 or other chiplets (e.g., I/O, networking, etc.) may be manufactured using a larger or less advanced process technologies.

The various chiplets can be bonded to a base die 3010 and configured to communicate with each other and logic within the base die 3010 via an interconnect layer 3012. In some examples, the base die 3010 can include global logic 3001, which can include scheduler 3011 and power management 3021 logic units, an interface 3002, a dispatch unit 3003, and an interconnect fabric 3008 coupled with or integrated with one or more L3 cache banks 3009A-3009N. The interconnect fabric 3008 can be an inter-chiplet fabric that is integrated into the base die 3010. Logic chiplets can use the fabric 3008 to relay messages between the various chiplets. Additionally, L3 cache banks 3009A-3009N in the base die and/or L3 cache banks within the memory chiplets 3006 can cache data read from and transmitted to DRAM chiplets within the memory chiplets 3006 and to system memory of a host.

In some examples the global logic 3001 is a microcontroller that can execute firmware to perform scheduler 3011 and power management 3021 functionality for the parallel processor 3020. The microcontroller that executes the global logic can be tailored for the target use case of the parallel processor 3020. The scheduler 3011 can perform global scheduling operations for the parallel processor 3020. The power management 3021 functionality can be used to enable or disable individual chiplets within the parallel processor when those chiplets are not in use.

The various chiplets of the parallel processor 3020 can be designed to perform specific functionality that, in existing designs, would be integrated into a single die. A set of compute chiplets 3005 can include clusters of compute units (e.g., execution units, streaming multiprocessors, etc.) that include programmable logic to execute compute or graphics shader instructions. A media chiplet 3004 can include hardware logic to accelerate media encode and decode operations. Memory chiplets 3006 can include volatile memory (e.g., DRAM) and one or more SRAM cache memory banks (e.g., L3 banks).

As shown in FIG. 30B, each chiplet 3030 can include common components and application specific components. Chiplet logic 3036 within the chiplet 3030 can include the specific components of the chiplet, such as an array of streaming multiprocessors, compute units, or execution units described herein. The chiplet logic 3036 can couple with an optional cache or shared local memory 3038 or can include a cache or shared local memory within the chiplet logic 3036. The chiplet 3030 can include a fabric interconnect node 3042 that receives commands via the inter-chiplet fabric. Commands and data received via the fabric interconnect node 3042 can be stored temporarily within an interconnect buffer 3039. Data transmitted to and received from the fabric interconnect node 3042 can be stored in an interconnect cache 3040. Power control 3032 and clock control 3034 logic can also be included within the chiplet. The power control 3032 and clock control 3034 logic can receive configuration commands via the fabric can configure dynamic voltage and frequency scaling for the chiplet 3030. In some examples, each chiplet can have an independent clock domain and power domain and can be clock gated and power gated independently of other chiplets.

At least a portion of the components within the illustrated chiplet 3030 can also be included within logic embedded within the base die 3010 of FIG. 30A. For example, logic within the base die that communicates with the fabric can include a version of the fabric interconnect node 3042. Base die logic that can be independently clock or power gated can include a version of the power control 3032 and/or clock control 3034 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Example Execution Unit(s) Circuitry.

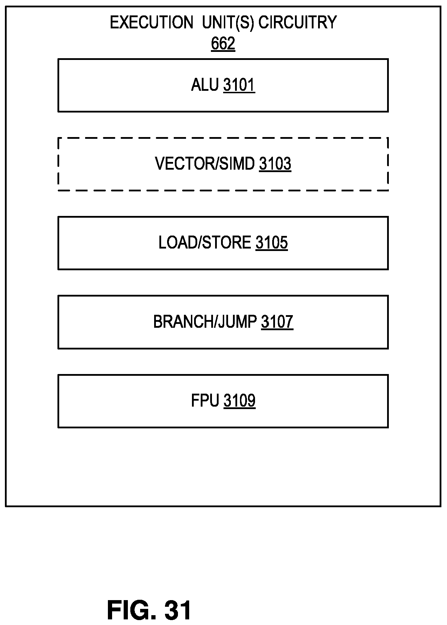

FIG. 31 illustrates examples of execution unit(s) circuitry, such as execution unit(s) circuitry 662 of FIG. 6(B). As illustrated, execution unit(s) circuitry 662 may include one or more ALU circuits 3101, optional vector/single instruction multiple data (SIMD) circuits 3103, load/store circuits 3105, branch/jump circuits 3107, and/or Floating-point unit (FPU) circuits 3109. ALU circuits 3101 perform integer arithmetic and/or Boolean operations. Vector/SIMD circuits 3103 perform vector/SIMD operations on packed data (such as SIMD/vector registers). Load/store circuits 3105 execute load and store instructions to load data from memory into registers or store from registers to memory. Load/store circuits 3105 may also generate addresses. Branch/jump circuits 3107 cause a branch or jump to a memory address depending on the instruction. FPU circuits 3109 perform floating-point arithmetic. The width of the execution unit(s) circuitry 662 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

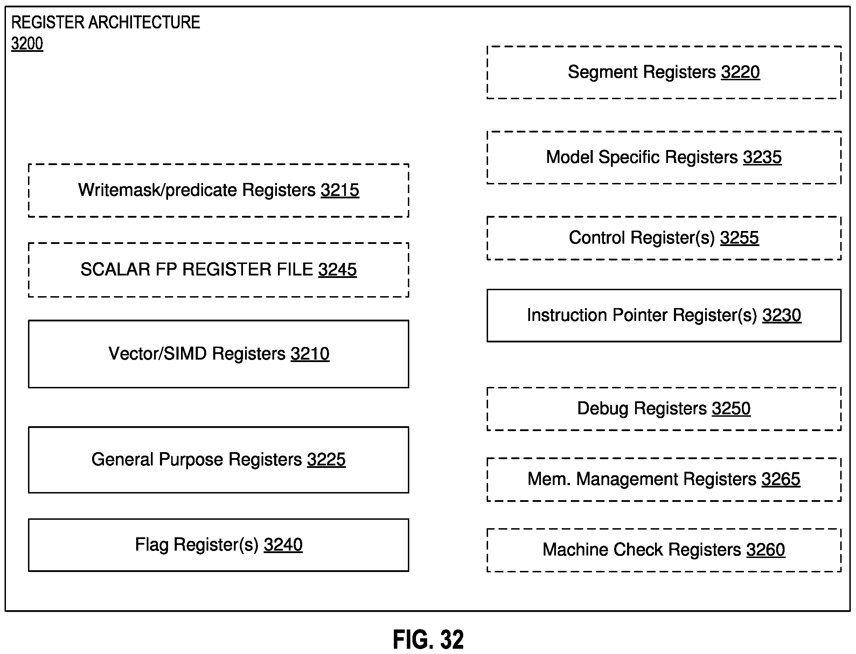

FIG. 32 is a block diagram of a register architecture 3200 according to some examples. As illustrated, the register architecture 3200 includes vector/SIMD registers 3210 that vary from 128-bit to 1,024 bits width. In some examples, the vector/SIMD registers 3210 are physically 512-bits and, depending upon the mapping, only some of the lower bits are used. For example, in some examples, the vector/SIMD registers 3210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 3200 includes writemask/predicate registers 3215. For example, in some examples, there are 8 writemask/predicate registers (sometimes called k0 through k7) that are each 16-bit, 32-bit, 64-bit, or 128-bit in size. Writemask/predicate registers 3215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 3215 corresponds to a data element position of the destination. In other examples, the writemask/predicate registers 3215 are scalable and consists of a set number of enable bits for a given vector element (e.g., 8 enable bits per 64-bit vector element).

The register architecture 3200 includes a plurality of general-purpose registers 3225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 3200 includes scalar floating-point (FP) register file 3245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 3240 (e.g., EFLAGS, RFLAGS, etc.) store status and control information for arithmetic, compare, and system operations. For example, the one or more flag registers 3240 may store condition code information such as carry, parity, auxiliary carry, zero, sign, and overflow. In some examples, the one or more flag registers 3240 are called program status and control registers.

Segment registers 3220 contain segment points for use in accessing memory. In some examples, these registers are referenced by the names CS, DS, SS, ES, FS, and GS.

Model specific registers or machine specific registers (MSRs) 3235 control and report on processor performance. Most MSRs 3235 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 3260 consist of control, status, and error reporting MSRs that are used to detect and report on hardware errors. Control register(s) 3255 (e.g., CR0-CR4) determine the operating mode of a processor (e.g., processor 2470, 2480, 2438, 2415, and/or 2500) and the characteristics of a currently executing task. In some examples, MSRs 3235 are a subset of control registers 3255.

One or more instruction pointer register(s) 3230 store an instruction pointer value. Debug registers 3250 control and allow for the monitoring of a processor or core's debugging operations.

Memory (mem) management registers 3265 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 3200 may, for example, be used in register file / memory, or physical register file(s) circuitry 6 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

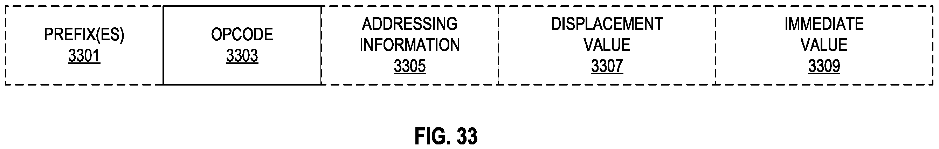

FIG. 33 illustrates examples of an instruction format. As illustrated, an instruction may include multiple components including, but not limited to, one or more fields for: one or more prefixes , an opcode , addressing information (e.g., register identifiers, memory addressing information, etc.), a displacement value, and/or an immediate value. Note that some instructions utilize some or all the fields of the format whereas others may only use the field for the opcode 3303. In some examples, the order illustrated is the order in which these fields are to be encoded, however, it should be appreciated that in other examples these fields may be encoded in a different order, combined, etc.

The prefix(es) f 3301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 3303 is used to at least partially define the operation to be performed upon a decoding of the instruction. In some examples, a primary opcode encoded in the opcode field 3303 is one, two, or three bytes in length. In other examples, a primary opcode can be a different length. An additional 3-bit opcode field is sometimes encoded in another field.

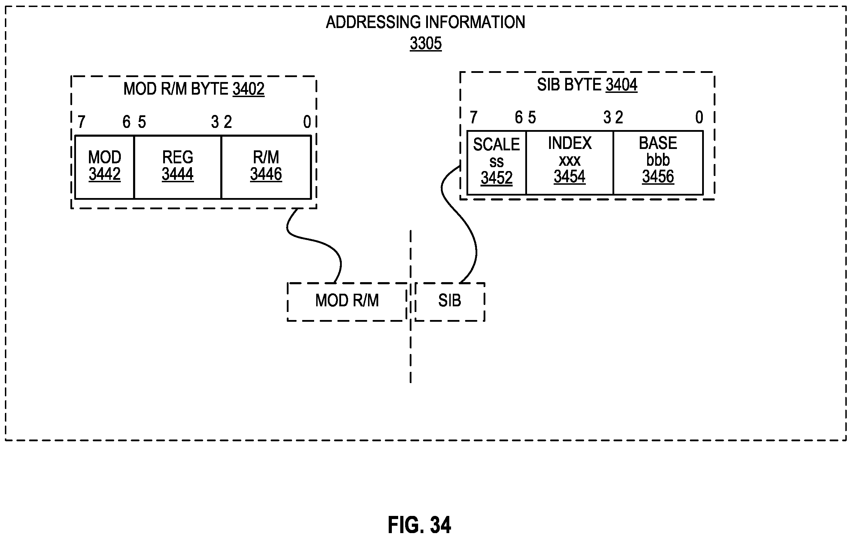

The addressing information field 3305 is used to address one or more operands of the instruction, such as a location in memory or one or more registers. FIG. 34 illustrates examples of the addressing information field 3305. In this illustration, an optional MOD R/M byte 3402 and an optional Scale, Index, Base (SIB) byte 3404 are shown. The MOD R/M byte 3402 and the SIB byte 3404 are used to encode up to two operands of an instruction, each of which is a direct register or effective memory address. Note that both of these fields are optional in that not all instructions include one or more of these fields. The MOD R/M byte 3402 includes a MOD field 3442, a register (reg) field 3444, and R/M field 3446.

The content of the MOD field 3442 distinguishes between memory access and non-memory access modes. In some examples, when the MOD field 3442 has a binary value of 11 (11b), a register-direct addressing mode is utilized, and otherwise a register-indirect addressing mode is used.

The register field 3444 may encode either the destination register operand or a source register operand or may encode an opcode extension and not be used to encode any instruction operand. The content of register field 3444, directly or through address generation, specifies the locations of a source or destination operand (either in a register or in memory). In some examples, the register field 3444 is supplemented with an additional bit from a prefix (e.g., prefix 3301) to allow for greater addressing.

The R/M field 3446 may be used to encode an instruction operand that references a memory address or may be used to encode either the destination register operand or a source register operand. Note the R/M field 3446 may be combined with the MOD field 3442 to dictate an addressing mode in some examples.

The SIB byte 3404 includes a scale field 3452, an index field 3454, and a base field 3456 to be used in the generation of an address. The scale field 3452 indicates a scaling factor. The index field 3454 specifies an index register to use. In some examples, the index field 3454 is supplemented with an additional bit from a prefix (e.g., prefix 3301) to allow for greater addressing. The base field 3456 specifies a base register to use. In some examples, the base field 3456 is supplemented with an additional bit from a prefix (e.g., prefix 3301) to allow for greater addressing. In practice, the content of the scale field 3452 allows for the scaling of the content of the index field 3454 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 3307 provides this value. Additionally, in some examples, a displacement factor usage is encoded in the MOD field of the addressing information field 3305 that indicates a compressed displacement scheme for which a displacement value is calculated and stored in the displacement field 3307.

In some examples, the immediate value field 3309 specifies an immediate value for the instruction. An immediate value may be encoded as a 1-byte value, a 2-byte value, a 4-byte value, etc.

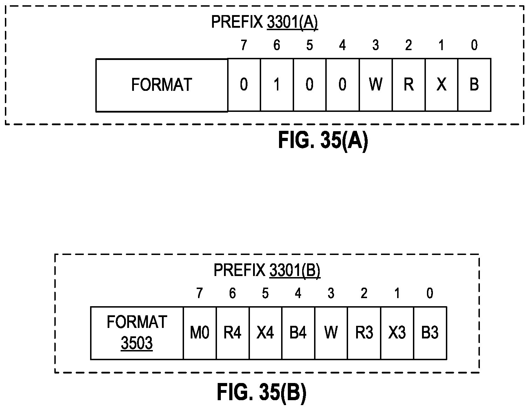

FIGS. 35(A)-(B) illustrates examples of a first prefix 3301(A). FIG. 35(A) illustrates first examples of the first prefix 3301(A). In some examples, the first prefix 3301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 3301(A) may specify up to three registers using 3-bit fields depending on the format: 1) using the reg field 3444 and the R/M field 3446 of the MOD R/M byte 3402; 2) using the MOD R/M byte 3402 with the SIB byte 3404 including using the reg field 3444 and the base field 3456 and index field 3454; or 3) using the register field of an opcode.

In the first prefix 3301(A), bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 3444 and MOD R/M R/M field 3446 alone can each only address 8 registers.

In the first prefix 3301(A), bit position 2 (R) may be an extension of the MOD R/M reg field 3444 and may be used to modify the MOD R/M reg field 3444 when that field encodes a general-purpose register, a 64-bit packed data register (e.g., a SSE register), or a control or debug register. R is ignored when MOD R/M byte 3402 specifies other registers or defines an extended opcode.

Bit position 1 (X) may modify the SIB byte index field 3454.

Bit position 0 (B) may modify the base in the MOD R/M R/M field 3446 or the SIB byte base field 3456; or it may modify the opcode register field used for accessing general purpose registers (e.g., general purpose registers 3225).

FIG. 35(B) illustrates second examples of the first prefix 3301(A). In some examples, the prefix 3301(A) supports addressing 32 general purpose registers. In some examples, this prefix is called REX2.

In some examples, one or more of instructions for increment, decrement, negation, addition, subtraction, AND, OR, XOR, shift arithmetically left, shift logically left, shift arithmetically right, shift logically right, rotate left, rotate right, multiply, divide, population count, leading zero count, total zero count, etc. support flag suppression.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, leading zero count, total zero count, unsinged integer addition of two operands with carry flag, unsinged integer addition of two operands with overflow flag, conditional move, pop, push, etc. support REX2.

As shown, REX2 has a format field 3503 in a first byte and 8 bits in a second byte (e.g., a payload byte). In some examples, the format field 303 has a value of 0xD5. In some examples, 0xD5 encodes an ASCIII Adjust AX Before Division (AAD) instruction in a 32-bit mode. In those examples, in a 64-bit mode it is used as the first byte of the prefix of FIG. 35(B).

The payload byte includes several bits.

Bit position 0 (B3) may modify the base in the MOD R/M R/M field 3446 or the SIB byte base field 3456; or it may modify the opcode register field used for accessing general purpose registers (e.g., general purpose registers 3225).

Bit position 1 (X3) may modify the SIB byte index field 3454.

Bit position 2 (R3) may be used as an extension of the MOD R/M reg field 3444 and may be used to modify the MOD R/M reg field 3444 when that field encodes a general-purpose register, a 64-bit packed data register (e.g., an SSE register), or a control or debug register. R3 may be ignored when MOD R/M byte 3402 specifies other registers or defines an extended opcode.

Bit position 3 (W) can be used to determine an operand size, but may not solely determine operand width. As such, when W = 0, the operand size is determined by a code segment descriptor (CS.D) and when W = 1, the operand size is 64-bit.

Bit position 4 (B4) may further (along with B3) modify the base in the MOD R/M R/M field 3446 or the SIB byte base field 3456; or it may modify the opcode register field used for accessing general purpose registers (e.g., general purpose registers 3225).

Bit position 5 (X4) may further (along with X3) modify the SIB byte index field 3454.

Bit position 6 (R4) may further (along with R3) be used as an extension of the MOD R/M reg field 3444 and may be used to modify the MOD R/M reg field 3444 when that field encodes a general-purpose register, a 64-bit packed data register (e.g., an SSE register), or a control or debug register.

In some examples, bit position 7 (M0) indicates an opcode map (e.g., 0 or 1).

R3, R4, X3, X4, B3, and B4 allow for the addressing of 32 GPRs. That is an R, X or B register identifier is extended by the R3, X3, and B3 and R4, X4, and B4 bits in a REX2 prefix when and only when it encodes a GPR register. In some examples, the vector (or any other type of) registers are not encoded using those bits.

In some examples, REX2 must be the last prefix and the byte following it is interpreted as the main opcode byte in the opcode map indicated by M0. The 0x0F escape byte is neither needed nor allowed. In some examples, prefixes which may precede the REX2 prefix are LOCK (0xF0), REPE/REP/REPZ (0xF3), REPNE/REPNZ (0xF2), operand-size override (0x66), address-size override (0x67), and segment overrides.

In general, when any of the bits in REX2 R4, X4, B4, R3, X3, and B3 are not used they are ignored. For example, when there is no index register, X4 and X3 are both ignored. Similarly, when the R, X, or B register identifier encodes a vector register, the R4, X4, or B4 bit is ignored. There are, however, in some examples, one or two exceptions to this general rule: 1) an attempt to access a non-existent control register or debug register will trigger #UD and 2) instructions with opcodes 0x50 0x5F(including POP and PUSH) use R4 to encode a push-pop acceleration hint.

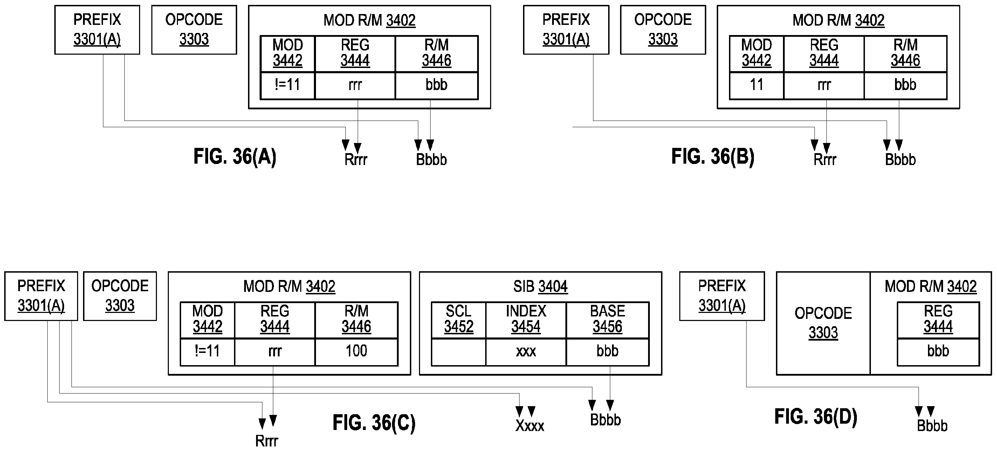

FIGS. 36(A)-(D) illustrate examples of how the R, X, and B fields of the first prefix 3301(A) are used. FIG. 36(A) illustrates R and B from the first prefix 3301(A) being used to extend the reg field 3444 and R/M field 3446 of the MOD R/M byte 3402 when the SIB byte 34 04 is not used for memory addressing. FIG. 36(B) illustrates R and B from the first prefix 3301(A) being used to extend the reg field 3444 and R/M field 3446 of the MOD R/M byte 3402 when the SIB byte 34 04 is not used (register-register addressing). FIG. 36(C) illustrates R, X, and B from the first prefix 3301(A) being used to extend the reg field 3444 of the MOD R/M byte 3402 and the index field 3454 and base field 3456 when the SIB byte 34 04 being used for memory addressing. FIG. 36(D) illustrates B from the first prefix 3301(A) being used to extend the reg field 3444 of the MOD R/M byte 3402 when a register is encoded in the opcode 3303. The R4 and R3 values of FIG. 35(B) can be used to expand rrr, B4 and B3 can be used to expand bbb, and X4 and X3 can be used to expand xxx.

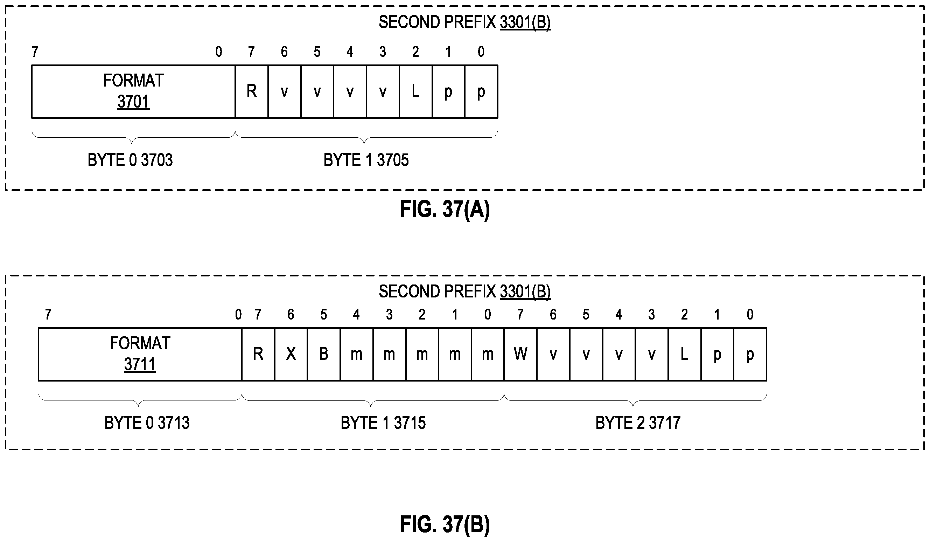

FIGS. 37(A)-(B) illustrate examples of a second prefix 3301(B). In some examples, the second prefix 3301(B) is an example of a VEX prefix. The second prefix 3301(B) encoding allows instructions to have more than two operands, and allows SIMD vector registers (e.g., vector/SIMD registers 3210) to be longer than 64-bits (e.g., 128-bit and 256-bit). The use of the second prefix 3301(B) provides for three-operand (or more) syntax. For example, previous two-operand instructions performed operations such as A = A + B, which overwrites a source operand. The use of the second prefix 3301(B) enables operands to perform nondestructive operations such as A = B + C.

In some examples, the second prefix 3301(B) comes in two forms - a two-byte form and a three-byte form. The two-byte second prefix 3301(B) is used mainly for 128-bit, scalar, and some 256-bit instructions; while the three-byte second prefix 3301(B) provides a compact replacement of the first prefix 3301(A) and 3-byte opcode instructions.

FIG. 37(A) illustrates examples of a two-byte form of the second prefix 3301(B). In some examples, a format field 3701 (byte 0 3703) contains the value C5H. In some examples, byte 1 3705 includes an "R" value in bit[7]. This value is the complement of the "R" value of the first prefix 3301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 3446 to encode the instruction operand that references a memory address or encode either the destination register operand or a source register operand.

Instructions that use this prefix may use the MOD R/M reg field 3444 to encode either the destination register operand or a source register operand, or to be treated as an opcode extension and not used to encode any instruction operand.

For instruction syntax that support four operands, ww, the MOD R/M R/M field 3446 and the MOD R/M reg field 3444 encode three of the four operands. Bits[7:4] of the immediate value field 3309 are then used to encode the third source register operand.

FIG. 37(B) illustrates examples of a three-byte form of the second prefix 3301(B). In some examples, a format field 3711 (byte 0 3713) contains the value C4H. Byte 1 3715 includes in bits[7:5] "R," "X," and "B" which are the complements of the same values of the first prefix 3301(A). Bits[4:0] of byte 1 3715 (shown as mmmmm) include contentto encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 3717 is used similarto W of the first prefix 3301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 3446 to encode the instruction operand that references a memory address or encode either the destination register operand or a source register operand.

Instructions that use this prefix may use the MOD R/M reg field 3444 to encode either the destination register operand or a source register operand, or to be treated as an opcode extension and not used to encode any instruction operand.

For instruction syntax that support four operands, ww, the MOD R/M R/M field 3446, and the MOD R/M reg field 3444 encode three of the four operands. Bits[7:4] of the immediate value field 3309 are then used to encode the third source register operand.

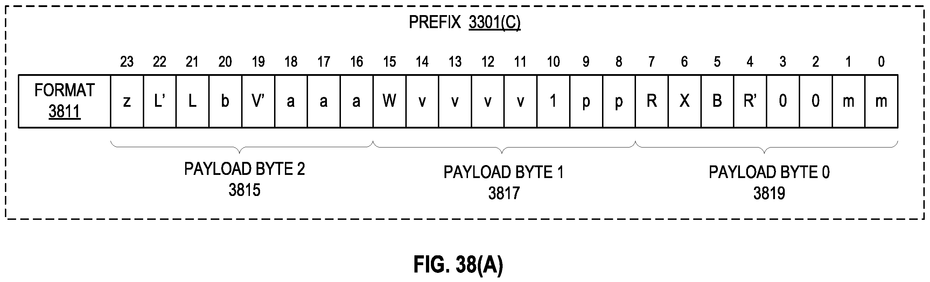

FIGS. 38(A)-(E) illustrates examples of a third prefix 3301(C). FIG. 38(A) illustrates first examples of the third prefix. In some examples, the third prefix 3301(C) is an example of an EVEX prefix. The third prefix 3301(C) is a four-byte prefix.

The third prefix 3301(C) can encode 32 vector registers (e.g., 128-bit, 256-bit, and 512-bit registers) in 64-bit mode. In some examples, instructions that utilize a writemask/opmask (see discussion of registers in a previous figure, such as FIG. 32) or predication utilize this prefix. Opmask register allow for conditional processing or selection control. Opmask instructions, whose source/destination operands are opmask registers and treat the content of an opmask register as a single value, are encoded using the second prefix 3301(B).

The third prefix 3301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 3301(C) is a format field 3811 that has a value, in some examples, of 62H. Subsequent bytes are referred to as payload bytes 3815-3819 and collectively form a 24-bit value of P[23:0] providing specific capability in the form of one or more fields (detailed herein).

In some examples, P[1:0] of payload byte 3819 are identical to the low two mm bits. P[3:2] are reserved in some examples. Bit P[4] (R') allows access to the high 16 vector register set when combined with P[7] and the MOD R/M reg field 3444. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 3444 and MOD R/M R/M field 3446. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 3301(A) and second prefix 3311(B) and may serve as an opcode extension bit or operand size promotion.

P[18:16] specify the index of a register in the opmask (writemask) registers (e.g., writemask/predicate registers 3215). In some examples, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 3301(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | ww | | GPR, Vector | 2nd Source or Destination |
| RM | X | B | MOD R/M | GPR, Vector | 1st Source or Destination |
| | | | R/M | | |
| BASE | 0 | B | MOD R/M | GPR | Memory addressing |
| | | | R/M | | |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

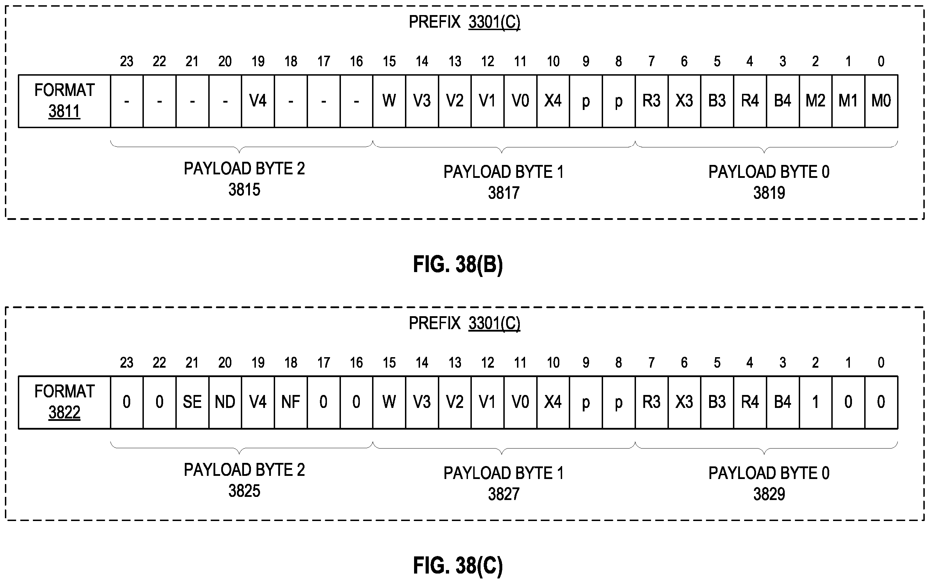

FIG. 38(B) illustrates second examples of the third prefix. In some examples, the prefix 34K01(B) is an example of an EVEX2 prefix. The EVEX2 prefix 3301(C) is a four-byte prefix.

In some examples, one or more of instructions for increment, decrement, NOT, negation, addition, add with carry, integer subtraction with borrow, subtraction, AND, OR, XOR, shift arithmetically left, shift logically left, shift arithmetically right, shift logically right, rotate left, rotate right, multiply, divide, population count, pop, push, leading zero count, total zero count, unsinged integer addition of two operands with carry flag, unsinged integer addition of two operands with overflow flag, conditional move, etc. support EVEX2.

For these instructions there it should be noted that NDD may or may not be used depending on the settings of the prefix of those instructions.

The extended EVEX prefix is an extension of a 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix ' BKP01(B) can encode 32 vector registers (e.g., 128-bit, 256-bit, and 512-bit registers) in 64-bit mode and/or 32 general purpose registers.

The EVEX2 prefix 'BKP01(B) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 'BKP01(B) is a format field ' BKP11 that has a value, in some examples, of 0x62. Subsequent bytes are referred to as payload bytes 'BKP15-'BKP19 and collectively form a 24-bit value of P[23:0] providing specific capability in the form of one or more fields (detailed herein).

Bits 0:2 (M0, M1, and M2) of a first payload byte (payload byte 0) 3817 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bit 19 can be combined with bits 14:11 to encode a register in a new data destination.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that atX4 is 1.)

Example examples of source and/or destination encoding in instructions using the EVEX2 prefix 3301(C) are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M | GPR | 1st Source or Destination |
| | | | R/M | | |
| BASE | B4 | B3 | MOD R/M | GPR | Memory addressing |
| | | | R/M | | |
| INDEX | X4 | X3 | SIB.index | GPR | Memory addressing |

FIG. 38(C) illustrates third examples of the third prefix. In some examples, the prefix 3301(C) is an example of an EVEX2 prefix. The EVEX2 prefix 3301(C) is a four-byte prefix.

The EVEX2 prefix 3301(C) can encode at least 32 vector registers (e.g., 128-bit, 256-bit, and 512-bit registers) in 64-bit mode and/or up to 64 general purpose registers.

The EVEX2 prefix 3301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 3301(C) is a format field 3822 that has a value, in one example, of 0x62. Subsequent bytes are referred to as payload bytes 555-3829 and collectively form a 24-bit value of P[23:0] providing specific capability in the form of one or more fields (detailed herein).

Bits 0:1 are set to zero and bit 2 is set to 1.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11,shown as V3V2V1 V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated. In some examples, instructions for increment, decrement, negation, addition, subtraction, AND, OR, shift arithmetically left, shift logically left, shift arithmetically right, shift logically right, rotate left, rotate right, multiply, divide, population count, leading zero count, total zero count, etc. support flag suppression.

Bit 19 can be combined with bits 14:11 to encode a register in a new data destination.

Bit 20 indicates a NDD in some examples. In some examples, if EVEX2.ND = 0, there is no NDD and EVEX2.[V4,V3,V2,V1,V0] must be all zero. In some examples, if EVEX2.ND = 1, there is an NDD whose register ID is encoded by EVEX2.[V4,V3,V2,V1,V0]. Although some instructions do not support NDD, the EVEX2.ND bit may be used to control whether its destination register has its upper bits (namely, bits [63:operand size]) zeroed when operand size is 8-bit or 16-bit. That is, if EVEX2.ND = 1, the upper bits are always zeroed; otherwise, they keep the old values when operand size is 8-bit or 16-bit. For these instructions, EVEX2.[V4,V3,V2,V1,V0] is all zero.

Bit 21 is used in some examples to indicate exceptions are to be suppressed.

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that atX4 is 1.)

Example examples of source and/or destination encoding in instructions using the EVEX2 prefix 3301(C) are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M | GPR | 1st Source or Destination |
| | | | R/M | | |
| BASE | B4 | B3 | MOD R/M | GPR | Memory addressing |
| | | | R/M | | |
| INDEX | X4 | X3 | SIB.index | GPR | Memory addressing |

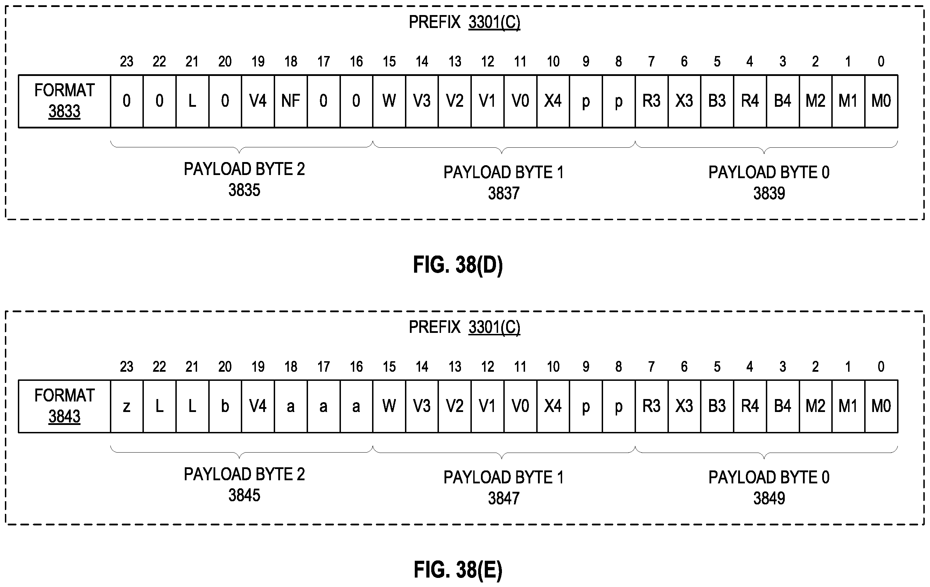

FIG. 38(D) illustrates fourth examples of the third prefix. In some examples, the prefix 3301(C) is an example of an EVEX2 prefix. The EVEX2 prefix 3301(C) is a four-byte prefix.

The extended EVEX prefix is an extension of the current 4-byte EVEX prefix and is used to provide APX features for legacy instructions which cannot be provided by the REX2 prefix (in particular, the new data destination) and APX extensions of VEX and EVEX instructions. Most bits in the third payload byte (except for the V4 bit) are left unspecified because the payload bit assignment depends on whether the EVEX prefix is used to provide APX extension to a legacy, VEX, or EVEX instruction, the details of which will be given in the subsections below. The byte following the extended EVEX prefix is always interpreted as the main opcode byte. Escape sequences 0x0F, 0x0F38 and 0x0F3A are neither needed nor allowed.

The EVEX2 prefix 3301(C) can encode 32 vector registers (e.g., 128-bit, 256-bit, and 512-bit registers) in 64-bit mode and/or 32 general purpose registers.

The EVEX2 prefix 3301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 3301(C) is a format field 3833 that has a value, in some examples, of 0x62. Subsequent bytes are referred to as payload bytes 3835-3839 and collectively form a 24-bit value of P[23:0] providing specific capability in the form of one or more fields (detailed herein).

Bits 0:2 (M0, M1, and M2) of a first payload byte (payload byte 0) 3839 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:17 are zero.

Bit 18 is used to indicate a flags update suppression in most examples. When set to 1, the carry, sign, zero, adjust, overflow, and parity bits are not updated.

Bit 19 can be combined with bits 14:11 to encode a register in a new data destination.

Bits 20, 22, and 23 are zero.

Bit 21 is a length specifier field

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that atX4 is 1.)

Example examples of source and/or destination encoding in instructions using the EVEX2 prefix 3301(C) are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M | GPR | 1st Source or Destination |
| | | | R/M | | |
| BASE | B4 | B3 | MOD R/M | GPR | Memory addressing |
| | | | R/M | | |
| INDEX | X4 | X3 | SIB.index | GPR | Memory addressing |

FIG. 38(E) illustrates fifth examples of the third prefix. In some examples, the prefix 3301(C) is an example of an EVEX2 prefix. The EVEX2 prefix 3301(C) is a four-byte prefix.

The EVEX2 prefix 3301(C) can encode at least 32 vector registers (e.g., 128-bit, 256-bit, and 512-bit registers) in 64-bit mode and/or up to 64 general purpose registers. I

The EVEX2 prefix 3301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the EVEX2 prefix 3301(C) is a format field 3843 that has a value, in one example, of 0x62. Subsequent bytes are referred to as payload bytes 3845-3849 and collectively form a 24-bit value of P[23:0] providing specific capability in the form of one or more fields (detailed herein).

Bits 0:2 (M0, M1, and M2) of a first payload byte (payload byte 0) 3839 are used to provide an opcode map identification. Note that this is limited to 8 maps.

Bit 3 (B4) provides the fifth bit and most significant bit for the B register identifier.

Bit 4 (R4) provides the fifth bit and most significant bit for the R register identifier.

Bit 5 (B3), bit 6 (X3), and bit 7 (R3) provide the fourth bit for the B, X, and R register identifiers respectively when combined with a MOD R/M register field (R register), a MOD R/M R/M field (B register), and/or a SIB.INDEX field (X register).

Bits 9:8 provide opcode extensionality equivalent to some legacy prefixes (e.g., 00 = no prefix, 01 = 66H, 10 = F3H, and 11 = F2H).

Bit 10 (X4) provides the fifth bit and most significant bit for the X register identifier.

Bits 14:11, shown as V3V2V1V0 may be used to: 1) encode the first source register operand, specified in inverted (1s complement) form and valid for instructions with 2 or more source operands; 2) encode a new data destination register operand, specified in 1s complement form for certain vector shifts; or 3) not encode any operand, the field is reserved and should contain a certain value, such as 1111b.

Bit 15 (W) may serve as an opcode extension bit or operand size promotion.

Bits 16:18 specify the index of a register in the opmask (writemask) registers (e.g., writemask/predicate registers). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

Bit 19 can be combined with bits 14:11 to encode a register in a new data destination.

Bit 20 encodes multiple functionalities, which differ across different classes of instructions and can affect the meaning of the vector length/ rounding control specifier field bits 21:22]).

Bit 23 indicates support for merging-writemasking (e.g., when set to 0) or support for zeroing and merging-writemasking (e.g., when set to 1).

In some examples, R3, R4, B3, X3, X4, V3, V2, V1, V0 are inverted. In some examples, B4 and X5 are repurposed reserved bits of an existing prefix that are used to provide the fifth and most significant bits of the B and X register identifiers. Their polarities are chosen so that the current fixed values at those two locations encode logical 0 after the repurposing. (In other words, the current fixed value at B4 is 0 and that atX4 is 1.)

Example examples of source and/or destination encoding in instructions using the EVEX2 prefix 3301(C) are detailed in the following table.

| | **4** | **3** | **[2:0]** | **REG. TYPE** | **COMMON USAGES** |
|---|---|---|---|---|---|
| R register | R4 | R3 | MOD R/M reg | GPR | Destination or Source |
| B register | B4 | B3 | MOD R/M reg | GPR | Destination or Source |
| V register | V4 | V3V2V1V0 | | GPR | 2nd Source or Destination |
| RM | B4 | B3 | MOD R/M | GPR | 1st Source or Destination |
| | | | R/M | | |
| BASE | B4 | B3 | MOD R/M | GPR | Memory addressing |
| | | | R/M | | |
| INDEX | X4 | X3 | SIB.index | GPR | Memory addressing |

The table below illustrates the new prefixes and how they differ from at least one legacy format. Note that OP is an operation to be performed.

| **Legacy Format** | **APX REX2 (No-NDD) Prefix** | **APX EVEX2 (NDD) Prefix** |
|---|---|---|
| OP R/M, Reg | OP R/M, Reg | V = OP R/M, Reg |
| OP Reg, R/M | OP Reg, R/M | V = OP Reg, R/M |
| OP R/M, Imm | OP R/M, Imm | V = OP R/M, Imm |
| OP R/M | OP R/M | V = OP R/M |

### Graphics Execution Units

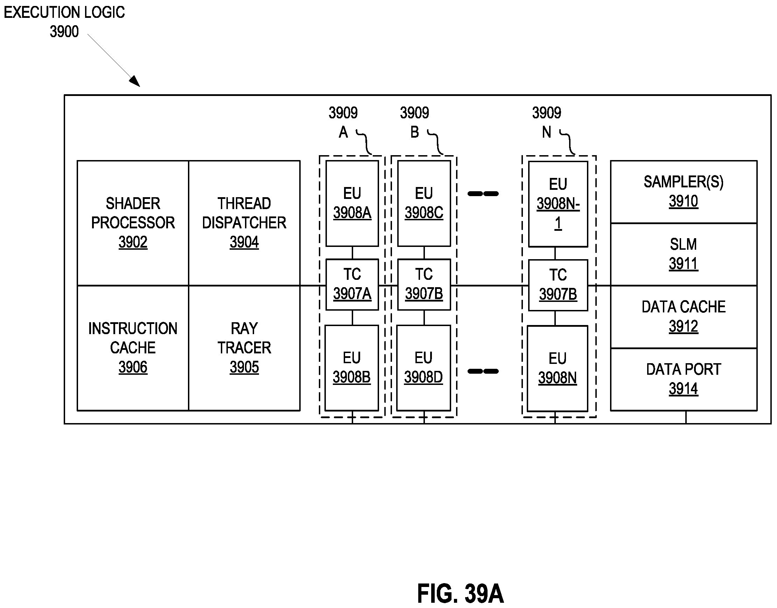

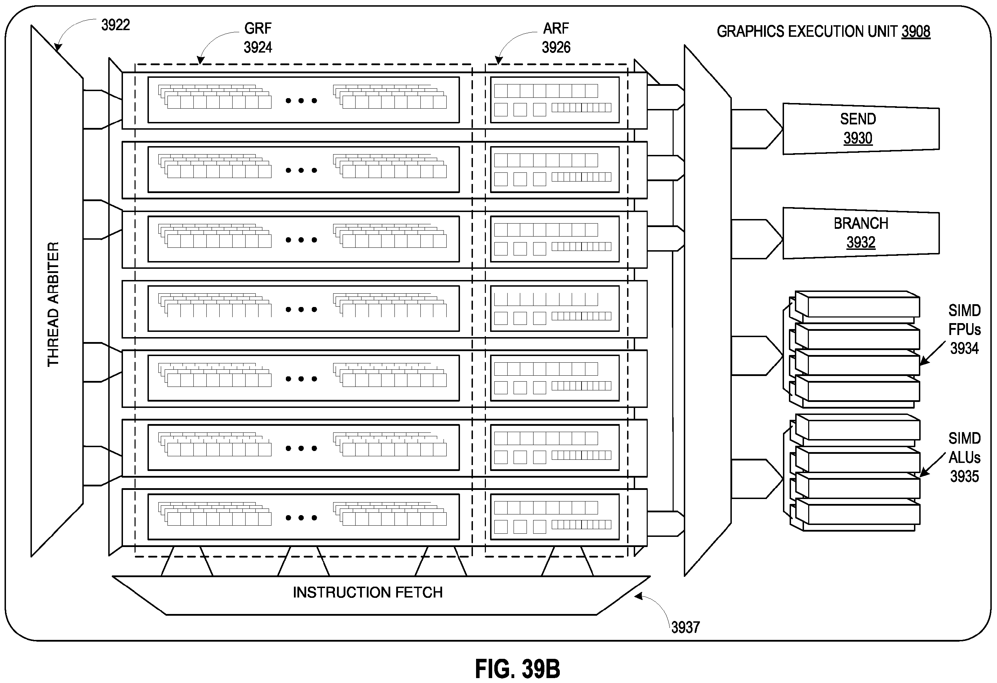

FIGS. 39A-39B illustrate thread execution logic 3900 including an array of processing elements employed in a graphics processor core according to examples described herein. Elements of FIGS. 39A-39B having the same reference numbers (or names) as the elements of any other figure herein can operate or function in any manner similar to that described elsewhere herein, but are not limited to such. FIG. 39A is representative of an execution unit within a general-purpose graphics processor, while FIG. 39B is representative of an execution unit that may be used within a compute accelerator.

As illustrated in FIG. 39A, in some examples thread execution logic 3900 includes a shader processor 3902, a thread dispatcher 3904, instruction cache 3906, a scalable execution unit array including a plurality of execution units 3908A-3908N, a sampler 3910, shared local memory 3911, a data cache 3912, and a data port 3914. In some examples the scalable execution unit array can dynamically scale by enabling or disabling one or more execution units (e.g., any of execution units 3908A, 3908B, 3908C, 3908D, through 3908N 1 and 3908N) based on the computational requirements of a workload. In some examples the included components are interconnected via an interconnect fabric that links to each of the components. In some examples, thread execution logic 3900 includes one or more connections to memory, such as system memory or cache memory, through one or more of instruction cache 3906, data port 3914, sampler3910, and execution units 3908A-3908N. In some examples, each execution unit (e.g. 3908A) is a stand-alone programmable general-purpose computational unit that is capable of executing multiple simultaneous hardware threads while processing multiple data elements in parallel for each thread. In various examples, the array of execution units 3908A-3908N is scalable to include any number individual execution units.

In some examples, the execution units 3908A-3908N are primarily used to execute shader programs. A shader processor 3902 can process the various shader programs and dispatch execution threads associated with the shader programs via a thread dispatcher 3904. In some examples the thread dispatcher includes logic to arbitrate thread initiation requests from the graphics and media pipelines and instantiate the requested threads on one or more execution unit in the execution units 3908A-3908N. For example, a geometry pipeline can dispatch vertex, tessellation, or geometry shaders to the thread execution logic for processing. In some examples, thread dispatcher 3904 can also process runtime thread spawning requests from the executing shader programs.

In some examples, the execution units 3908A-3908N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 3908A-3908N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 3908A-3908N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 3908A-3908N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 3908A-3908N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused graphics execution unit 3909A-3909N having thread control logic (3907A-3907N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 3909A-3909N includes at least two execution units. For example, fused execution unit 3909A includes a first EU 3908A, second EU 3908B, and thread control logic 3907A that is common to the first EU 3908A and the second EU 3908B. The thread control logic 3907A controls threads executed on the fused graphics execution unit 3909A, allowing each EU within the fused execution units 3909A-3909N to execute using a common instruction pointer register.

One or more internal instruction caches (e.g., 3906) are included in the thread execution logic 3900 to cache thread instructions for the execution units. In some examples, one or more data caches (e.g., 3912) are included to cache thread data during thread execution. Threads executing on the thread execution logic 3900 can also store explicitly managed data in the shared local memory 3911. In some examples, a sampler 3910 is included to provide texture sampling for 3D operations and media sampling for media operations. In some examples, sampler 3910 includes specialized texture or media sampling functionality to process texture or media data during the sampling process before providing the sampled data to an execution unit.

During execution, the graphics and media pipelines send thread initiation requests to thread execution logic 3900 via thread spawning and dispatch logic. Once a group of geometric objects has been processed and rasterized into pixel data, pixel processor logic (e.g., pixel shader logic, fragment shader logic, etc.) within the shader processor 3902 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 3902 then executes an application programming interface (API)-supplied pixel or fragment shader program. To execute the shader program, the shader processor 3902 dispatches threads to an execution unit (e.g., 3908A) via thread dispatcher 3904. In some examples, shader processor 3902 uses texture sampling logic in the sampler 3910 to access texture data in texture maps stored in memory. Arithmetic operations on the texture data and the input geometry data compute pixel color data for each geometric fragment, or discards one or more pixels from further processing.

In some examples, the data port 3914 provides a memory access mechanism for the thread execution logic 3900 to output processed data to memory for further processing on a graphics processor output pipeline. In some examples, the data port 3914 includes or couples to one or more cache memories (e.g., data cache 3912) to cache data for memory access via the data port.

In some examples, the execution logic 3900 can also include a ray tracer 3905 that can provide ray tracing acceleration functionality. The ray tracer 3905 can support a ray tracing instruction set that includes instructions/functions for ray generation.

FIG. 39B illustrates exemplary internal details of an execution unit 3908, according to examples. A graphics execution unit 3908 can include an instruction fetch unit 3937, a general register file array (GRF) 3924, an architectural register file array (ARF) 3926, a thread arbiter 3922, a send unit 3930, a branch unit 3932, a set of SIMD floating point units (FPUs) 3934, and in some examples a set of dedicated integer SIMD ALUs 3935. The GRF 3924 and ARF 3926 includes the set of general register files and architecture register files associated with each simultaneous hardware thread that may be active in the graphics execution unit 3908. In some examples, per thread architectural state is maintained in the ARF 3926, while data used during thread execution is stored in the GRF 3924. The execution state of each thread, including the instruction pointers for each thread, can be held in thread-specific registers in the ARF 3926.

In some examples the graphics execution unit 3908 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 3908 is not limited to the number of hardware threads, and multiple logical threads can be assigned to each hardware thread.

In some examples, the graphics execution unit 3908 can co-issue multiple instructions, which may each be different instructions. The thread arbiter 3922 of the graphics execution unit thread 3908 can dispatch the instructions to one of the send unit 3930, branch unit 3932, or SIMD FPU(s) 3934 for execution. Each execution thread can access 128 general-purpose registers within the GRF 3924, where each register can store 32 bytes, accessible as a SIMD 8-element vector of 32-bit data elements. In some examples, each execution unit thread has access to 4 Kbytes within the GRF 3924, although examples are not so limited, and greater or fewer register resources may be provided in other examples. In some examples the graphics execution unit 3908 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 3924 can store a total of 28 Kbytes. Where 16 threads may access 4Kbytes, the GRF 3924 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 3930. In some examples, branch instructions are dispatched to a dedicated branch unit 3932 to facilitate SIMD divergence and eventual convergence.

In some examples the graphics execution unit 3908 includes one or more SIMD FPU(s) 3934 to perform floating-point operations. In some examples, the FPU(s) 3934 also support integer computation. In some examples the FPU(s) 3934 can SIMD execute up to *M* number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 3935 are also present, and may be specifically optimized to perform operations associated with machine learning computations.

In some examples, arrays of multiple instances of the graphics execution unit 3908 can be instantiated in a graphics sub-core grouping (e.g., a sub-slice). For scalability, product architects can choose the exact number of execution units per sub-core grouping. In some examples the execution unit 3908 can execute instructions across a plurality of execution channels. In a further example, each thread executed on the graphics execution unit 3908 is executed on a different channel.

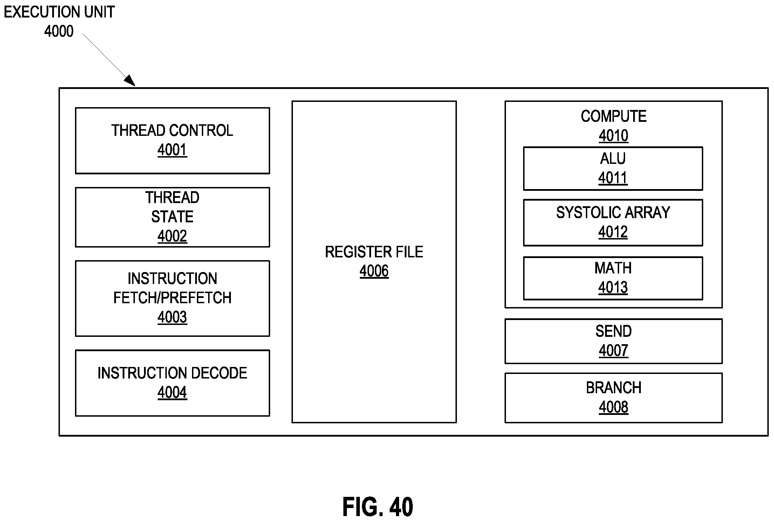

FIG. 40 illustrates an additional execution unit 4000, according to an example. In some examples, the execution unit 4000 includes a thread control unit 4001, a thread state unit 4002, an instruction fetch/prefetch unit 4003, and an instruction decode unit 4004. The execution unit 4000 additionally includes a register file 4006 that stores registers that can be assigned to hardware threads within the execution unit. The execution unit 4000 additionally includes a send unit 4007 and a branch unit 4008. In some examples, the send unit 4007 and branch unit 4008 can operate similarly as the send unit 3930 and a branch unit 3932 of the graphics execution unit 3908 of FIG. 39B.

The execution unit 4000 also includes a compute unit 4010 that includes multiple different types of functional units. In some examples the compute unit 4010 includes an ALU unit 4011 that includes an array of arithmetic logic units. The ALU unit 4011 can be configured to perform 64-bit, 32-bit, and 16-bit integer and floating point operations. Integer and floating point operations may be performed simultaneously. The compute unit 4010 can also include a systolic array 4012, and a math unit 4013. The systolic array 4012 includes a *W* wide and D deep network of data processing units that can be used to perform vector or other data-parallel operations in a systolic manner. In some examples the systolic array 4012 can be configured to perform matrix operations, such as matrix dot product operations. In some examples the systolic array 4012 support 16-bit floating point operations, as well as 8-bit and 4-bit integer operations. In some examples the systolic array 4012 can be configured to accelerate machine learning operations. In such examples, the systolic array 4012 can be configured with support for the bfloat 16-bit floating point format. In some examples, a math unit 4013 can be included to perform a specific subset of mathematical operations in an efficient and lower-power manner than the ALU unit 4011. The math unit 4013 can include a variant of math logic that may be found in shared function logic of a graphics processing engine provided by other examples . In some examples the math unit 4013 can be configured to perform 32-bit and 64-bit floating point operations.

The thread control unit 4001 includes logic to control the execution of threads within the execution unit. The thread control unit 4001 can include thread arbitration logic to start, stop, and preempt execution of threads within the execution unit 4000. The thread state unit 4002 can be used to store thread state for threads assigned to execute on the execution unit 4000. Storing the thread state within the execution unit 4000 enables the rapid pre-emption of threads when those threads become blocked or idle. The instruction fetch/prefetch unit 4003 can fetch instructions from an instruction cache of higher level execution logic (e.g., instruction cache 3906 as in FIG. 39A). The instruction fetch/prefetch unit 4003 can also issue prefetch requests for instructions to be loaded into the instruction cache based on an analysis of currently executing threads. The instruction decode unit 4004 can be used to decode instructions to be executed by the compute units. In some examples, the instruction decode unit 4004 can be used as a secondary decoder to decode complex instructions into constituent micro-operations.

The execution unit 4000 additionally includes a register file 4006 that can be used by hardware threads executing on the execution unit 4000. Registers in the register file 4006 can be divided across the logic used to execute multiple simultaneous threads within the compute unit 4010 of the execution unit 4000. The number of logical threads that may be executed by the execution unit 4000 is not limited to the number of hardware threads, and multiple logical threads can be assigned to each hardware thread. The size of the register file 4006 can vary across examples based on the number of supported hardware threads. In some examples, register renaming may be used to dynamically allocate registers to hardware threads.

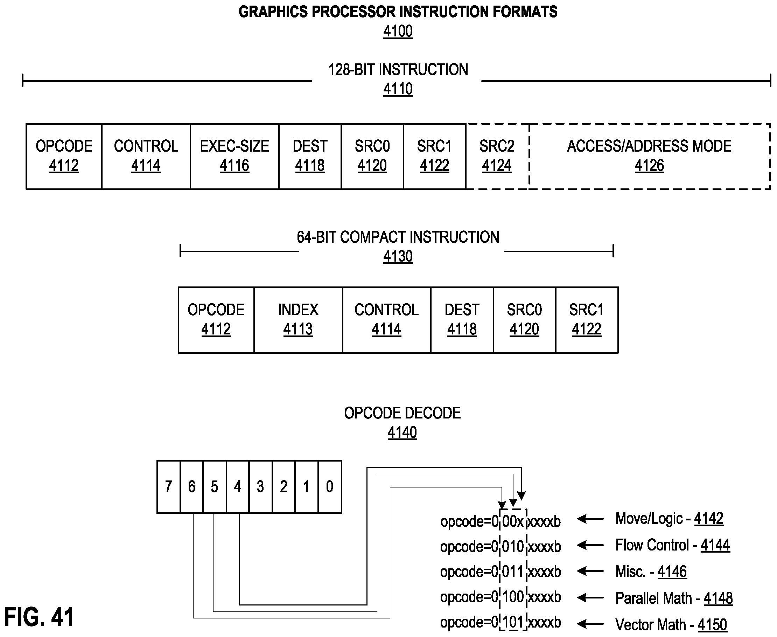

FIG. 41 is a block diagram illustrating a graphics processor instruction formats 4100 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 4100 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 4110. A 64-bit compacted instruction format 4130 is available for some instructions based on the selected instruction, instruction options, and number of operands. The native 128-bit instruction format 4110 provides access to all instruction options, while some options and operations are restricted in the 64-bit compacted format 4130. The native instructions available in the 64-bit compacted format 4130 vary by example. In some examples, the instruction is compacted in part using a set of index values in an index field 4113. The execution unit hardware references a set of compaction tables based on the index values and uses the compaction table outputs to reconstruct a native instruction in the 128-bit instruction format 4110. Other sizes and formats of instruction can be used.

For each format, instruction opcode 4112 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 4114 enables control over certain execution options, such as channels selection (e.g., predication) and data channel order (e.g., swizzle). For instructions in the 128-bit instruction format 4110 an exec-size field 4116 limits the number of data channels that will be executed in parallel. In some examples, exec-size field 4116 is not available for use in the 64-bit compact instruction format 4130.

Some execution unit instructions have up to three operands including two source operands, src0 4120, src1 4122, and one destination 4118. In some examples, the execution units support dual destination instructions, where one of the destinations is implied. Data manipulation instructions can have a third source operand (e.g., SRC2 4124), where the instruction opcode 4112 determines the number of source operands. An instruction's last source operand can be an immediate (e.g., hard-coded) value passed with the instruction.

In some examples, the 128-bit instruction format 4110 includes an access/address mode field 4126 specifying, for example, whether direct register addressing mode or indirect register addressing mode is used. When direct register addressing mode is used, the register address of one or more operands is directly provided by bits in the instruction.

In some examples, the 128-bit instruction format 4110 includes an access/address mode field 4126, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 4126 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 4112 bit-fields to simplify Opcode decode 4140. For an 8-bit opcode, bits 4, 5, and 6 allow the execution unit to determine the type of opcode. The precise opcode grouping shown is merely an example. In some examples, a move and logic opcode group 4142 includes data movement and logic instructions (e.g., move (mov), compare (cmp)). In some examples, move and logic opcode group 4142 shares the five most significant bits (MSB), where move (mov) instructions are in the form of 0000xxxxb and logic instructions are in the form of 0001xxxxb. A flow control instruction group 4144 (e.g., call, jump (jmp)) includes instructions in the form of 0010xxxxb (e.g., 0x20). A miscellaneous instruction group 4146 includes a mix of instructions, including synchronization instructions (e.g., wait, send) in the form of 0011xxxxb (e.g., 0x30). A parallel math instruction group 4148 includes component-wise arithmetic instructions (e.g., add, multiply (mul)) in the form of 0100xxxxb (e.g., 0x40). The parallel math instruction group 4148 performs the arithmetic operations in parallel across data channels. The vector math group 4150 includes arithmetic instructions (e.g., dp4) in the form of 0101xxxxb (e.g., 0x50). The vector math group performs arithmetic such as dot product calculations on vector operands. The illustrated opcode decode 4140, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

### Graphics Pipeline

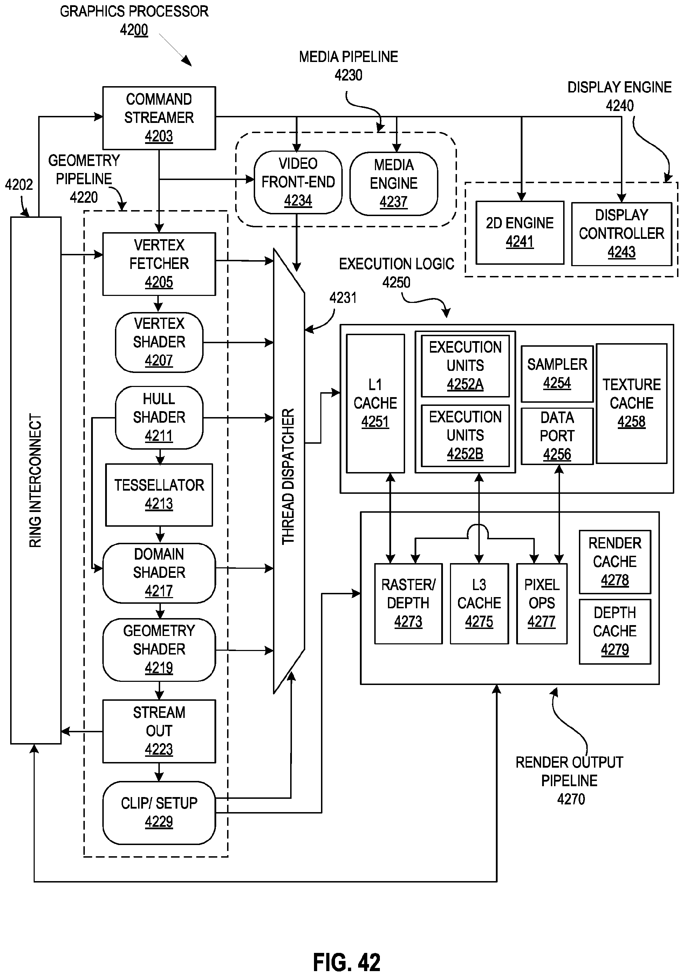

FIG. 42 is a block diagram of another example of a graphics processor 4200. Elements of FIG. 42 having the same reference numbers (or names) as the elements of any other figure herein can operate or function in any manner similar to that described elsewhere herein, but are not limited to such.

In some examples, graphics processor 4200 includes a geometry pipeline 4220, a media pipeline 4230, a display engine 4240, thread execution logic 4250, and a render output pipeline 4270. In some examples, graphics processor 4200 is a graphics processor within a multi-core processing system that includes one or more general-purpose processing cores. The graphics processor is controlled by register writes to one or more control registers (not shown) or via commands issued to graphics processor 4200 via a ring interconnect 4202. In some examples, ring interconnect 4202 couples graphics processor 4200 to other processing components, such as other graphics processors or general-purpose processors. Commands from ring interconnect 4202 are interpreted by a command streamer 4203, which supplies instructions to individual components of the geometry pipeline 4220 or the media pipeline 4230.

In some examples, command streamer 4203 directs the operation of a vertex fetcher 4205 that reads vertex data from memory and executes vertex-processing commands provided by command streamer 4203. In some examples, vertex fetcher 4205 provides vertex data to a vertex shader 4207, which performs coordinate space transformation and lighting operations to each vertex. In some examples, vertex fetcher 4205 and vertex shader 4207 execute vertex-processing instructions by dispatching execution threads to execution units 4252A-4252B via a thread dispatcher 4231.

In some examples, execution units 4252A-4252B are an array of vector processors having an instruction set for performing graphics and media operations. In some examples, execution units 4252A-4252B have an attached L1 cache 4251 that is specific for each array or shared between the arrays. The cache can be configured as a data cache, an instruction cache, or a single cache that is partitioned to contain data and instructions in different partitions.

In some examples, geometry pipeline 4220 includes tessellation components to perform hardware-accelerated tessellation of 3D objects. In some examples, a programmable hull shader 4211 configures the tessellation operations. A programmable domain shader 4217 provides back-end evaluation of tessellation output. A tessellator 4213 operates at the direction of hull shader 4211 and contains special purpose logic to generate a set of detailed geometric objects based on a coarse geometric model that is provided as input to geometry pipeline 4220. In some examples, if tessellation is not used, tessellation components (e.g., hull shader 4211, tessellator4213, and domain shader 4217) can be bypassed.

In some examples, complete geometric objects can be processed by a geometry shader 4219 via one or more threads dispatched to execution units 4252A-4252B, or can proceed directly to the clipper 4229. In some examples, the geometry shader operates on entire geometric objects, rather than vertices or patches of vertices as in previous stages of the graphics pipeline. If the tessellation is disabled the geometry shader 4219 receives input from the vertex shader 4207. In some examples, geometry shader 4219 is programmable by a geometry shader program to perform geometry tessellation if the tessellation units are disabled.

Before rasterization, a clipper 4229 processes vertex data. The clipper 4229 may be a fixed function clipper or a programmable clipper having clipping and geometry shader functions. In some examples, a rasterizer and depth test component 4273 in the render output pipeline 4270 dispatches pixel shaders to convert the geometric objects into per pixel representations. In some examples, pixel shader logic is included in thread execution logic 4250. In some examples, an application can bypass the rasterizer and depth test component 4273 and access un-rasterized vertex data via a stream out unit 4223.

The graphics processor 4200 has an interconnect bus, interconnect fabric, or some other interconnect mechanism that allows data and message passing amongst the major components of the processor. In some examples, execution units 4252A-4252B and associated logic units (e.g., L1 cache 4251, sampler 4254, texture cache 4258, etc.) interconnect via a data port 4256 to perform memory access and communicate with render output pipeline components of the processor. In some examples, sampler 4254, caches 4251, 4258 and execution units 4252A-4252B each have separate memory access paths. In some examples the texture cache 4258 can also be configured as a sampler cache.

In some examples, render output pipeline 4270 contains a rasterizer and depth test component 4273 that converts vertex-based objects into an associated pixel-based representation. In some examples, the rasterizer logic includes a windower/masker unit to perform fixed function triangle and line rasterization. An associated render cache 4278 and depth cache 4279 are also available in some examples. A pixel operations component 4277 performs pixel-based operations on the data, though in some instances, pixel operations associated with 2D operations (e.g. bit block image transfers with blending) are performed by the 2D engine 4241, or substituted at display time by the display controller 4243 using overlay display planes. In some examples, a shared L3 cache 4275 is available to all graphics components, allowing the sharing of data without the use of main system memory.

In some examples, media pipeline 4230 includes a media engine 4237 and a video front-end 4234. In some examples, video front-end 4234 receives pipeline commands from the command streamer 4203. In some examples, media pipeline 4230 includes a separate command streamer. In some examples, video front-end 4234 processes media commands before sending the command to the media engine 4237. In some examples, media engine 4237 includes thread spawning functionality to spawn threads for dispatch to thread execution logic 4250 via thread dispatcher 4231.

In some examples, graphics processor 4200 includes a display engine 4240. In some examples, display engine 4240 is external to graphics processor 4200 and couples with the graphics processor via the ring interconnect 4202, or some other interconnect bus or fabric. In some examples, display engine 4240 includes a 2D engine 4241 and a display controller 4243. In some examples, display engine 4240 contains special purpose logic capable of operating independently of the 3D pipeline. In some examples, display controller 4243 couples with a display device (not shown), which may be a system integrated display device, as in a laptop computer, or an external display device attached via a display device connector.

In some examples, the geometry pipeline 4220 and media pipeline 4230 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/orVulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming

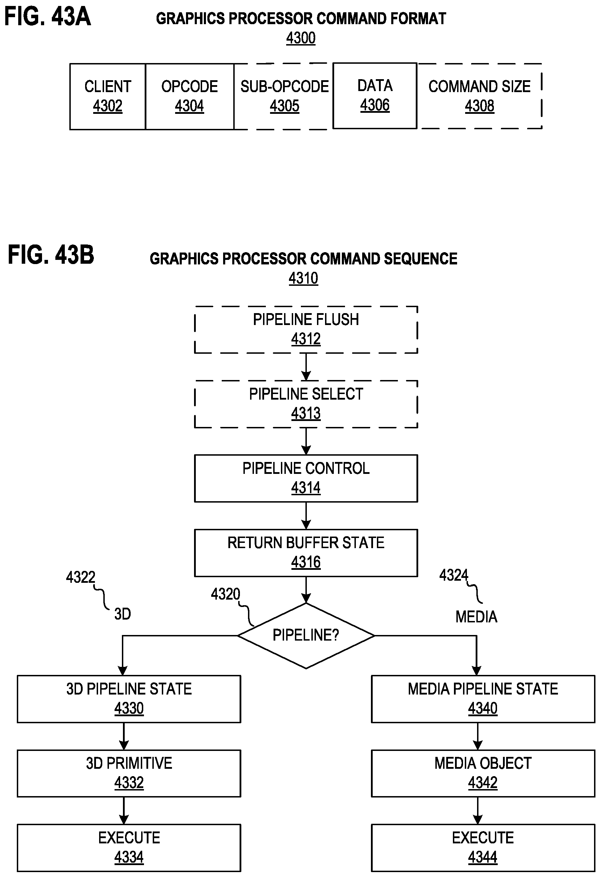

FIG. 43A is a block diagram illustrating a graphics processor command format 4300 according to some examples. FIG. 43B is a block diagram illustrating a graphics processor command sequence 4310 according to an example. The solid lined boxes in FIG. 43A illustrate the components that are generally included in a graphics command while the dashed lines include components that are optional or that are only included in a sub-set of the graphics commands. The graphics processor command format 4300 of FIG. 43A includes data fields to identify a client 4302, a command operation code (opcode) 4304, and data 4306 for the command. A sub-opcode 4305 and a command size 4308 are also included in some commands.

In some examples, client 4302 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 4304 and, if present, sub-opcode 4305 to determine the operation to perform. The client unit performs the command using information in data field 4306. For some commands an explicit command size 4308 is expected to specify the size of the command. In some examples, the command parser automatically determines the size of at least some of the commands based on the command opcode. In some examples commands are aligned via multiples of a double word. Other command formats can be used.

The flow diagram in FIG. 43B illustrates a graphics processor command sequence 4310. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 4310 may begin with a pipeline flush command 4312 to cause any active graphics pipeline to complete the currently pending commands for the pipeline. In some examples, the 3D pipeline 4322 and the media pipeline 4324 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 4312 can be used for pipeline synchronization or before placing the graphics processor into a low power state.

In some examples, a pipeline select command 4313 is used when a command sequence requires the graphics processor to explicitly switch between pipelines. In some examples, a pipeline select command 4313 is required only once within an execution context before issuing pipeline commands unless the context is to issue commands for both pipelines. In some examples, a pipeline flush command 4312 is required immediately before a pipeline switch via the pipeline select command 4313.

In some examples, a pipeline control command 4314 configures a graphics pipeline for operation and is used to program the 3D pipeline 4322 and the media pipeline 4324. In some examples, pipeline control command 4314 configures the pipeline state for the active pipeline. In some examples, the pipeline control command 4314 is used for pipeline synchronization and to clear data from one or more cache memories within the active pipeline before processing a batch of commands.

In some examples, return buffer state commands 4316 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state includes selecting the size and number of return buffers to use for a set of pipeline operations.

The remaining commands in the command sequence differ based on the active pipeline for operations. Based on a pipeline determination 4320, the command sequence is tailored to the 3D pipeline 4322 beginning with the 3D pipeline state 4330 or the media pipeline 4324 beginning at the media pipeline state 4340.

The commands to configure the 3D pipeline state 4330 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 4330 commands are also able to selectively disable or bypass certain pipeline elements if those elements will not be used.

In some examples, 3D primitive 4332 command is used to submit 3D primitives to be processed by the 3D pipeline. Commands and associated parameters that are passed to the graphics processor via the 3D primitive 4332 command are forwarded to the vertex fetch function in the graphics pipeline. The vertex fetch function uses the 3D primitive 4332 command data to generate vertex data structures. The vertex data structures are stored in one or more return buffers. In some examples, 3D primitive 4332 command is used to perform vertex operations on 3D primitives via vertex shaders. To process vertex shaders, 3D pipeline 4322 dispatches shader execution threads to graphics processor execution units.

In some examples, 3D pipeline 4322 is triggered via an execute 4334 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 4310 follows the media pipeline 4324 path when performing media operations. In general, the specific use and manner of programming for the media pipeline 4324 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 4324 is configured in a similar manner as the 3D pipeline 4322. A set of commands to configure the media pipeline state 4340 are dispatched or placed into a command queue before the media object commands 4342. In some examples, commands for the media pipeline state 4340 include data to configure the media pipeline elements that will be used to process the media objects. This includes data to configure the video decode and video encode logic within the media pipeline, such as encode or decode format. In some examples, commands for the media pipeline state 4340 also support the use of one or more pointers to "indirect" state elements that contain a batch of state settings.

In some examples, media object commands 4342 supply pointers to media objects for processing by the media pipeline. The media objects include memory buffers containing video data to be processed. In some examples, all media pipeline states must be valid before issuing a media object command 4342. Once the pipeline state is configured and media object commands 4342 are queued, the media pipeline 4324 is triggered via an execute command 4344 or an equivalent execute event (e.g., register write). Output from media pipeline 4324 may then be post processed by operations provided by the 3D pipeline 4322 or the media pipeline 4324. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

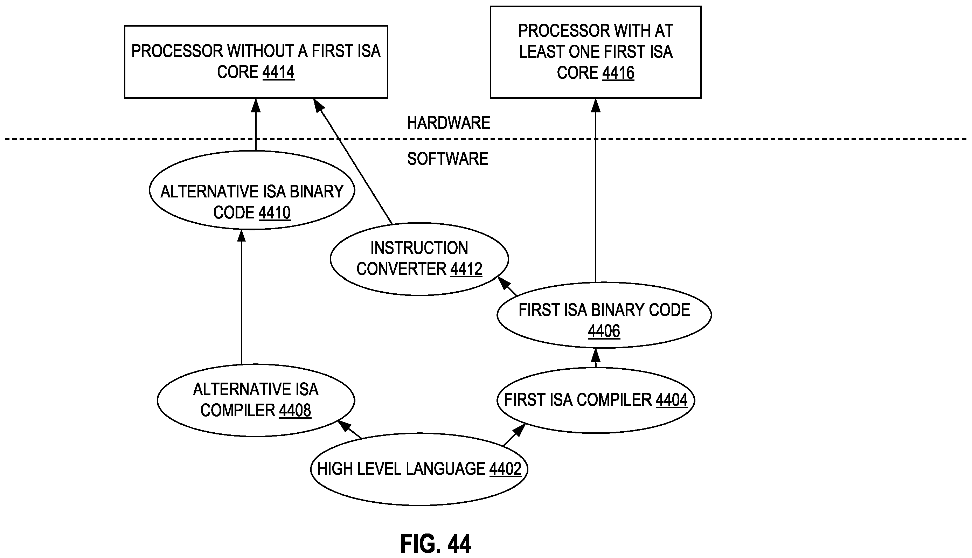

FIG. 44 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 44 shows a program in a high-level language 4402 may be compiled using a first ISA compiler 4404 to generate first ISA binary code 4406 that may be natively executed by a processor with at least one first ISA core 4416. The processor with at least one first ISA core 4416 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 4404 represents a compiler that is operable to generate first ISA binary code 4406 (e.g., object code) that can, with or without additional linkage processing, be executed on the processor with at least one first ISA core 4416. Similarly, FIG. 44 shows the program in the high-level language 4402 may be compiled using an alternative ISA compiler 4408 to generate alternative ISA binary code 4410 that may be natively executed by a processor without a first ISA core 4414. The instruction converter 4412 is used to convert the first ISA binary code 4406 into code that may be natively executed by the processor without a first ISA core 4414. This converted code is not necessarily to be the same as the alternative ISA binary code 4410; however, the converted code will accomplish the general operation and be made up of instructions from the alternative ISA. Thus, the instruction converter 4412 represents software, firmware, hardware, or a combination thereof that, through emulation, simulation or any other process, allows a processor or other electronic device that does not have a first ISA processor or core to execute the first ISA binary code 4406.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

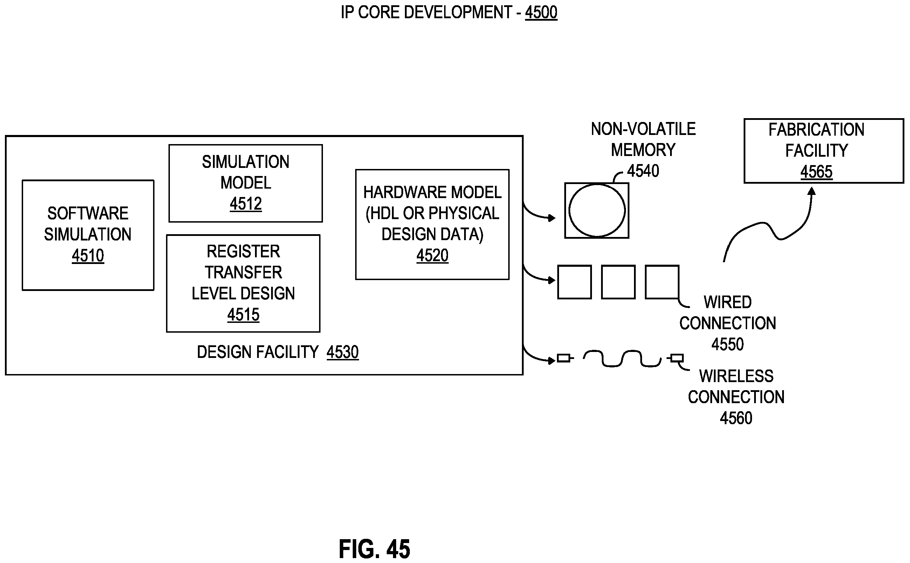

FIG. 45 is a block diagram illustrating an IP core development system 4500 that may be used to manufacture an integrated circuit to perform operations according to some examples. The IP core development system 4500 may be used to generate modular, reusable designs that can be incorporated into a larger design or used to construct an entire integrated circuit (e.g., an SOC integrated circuit). A design facility 4530 can generate a software simulation 4510 of an IP core design in a high-level programming language (e.g., C/C++). The software simulation 4510 can be used to design, test, and verify the behavior of the IP core using a simulation model 4512. The simulation model 4512 may include functional, behavioral, and/or timing simulations. A register transfer level (RTL) design 4515 can then be created or synthesized from the simulation model 4512. The RTL design 4515 is an abstraction of the behavior of the integrated circuit that models the flow of digital signals between hardware registers, including the associated logic performed using the modeled digital signals. In addition to an RTL design 4515, lower-level designs at the logic level or transistor level may also be created, designed, or synthesized. Thus, the particular details of the initial design and simulation may vary.

The RTL design 4515 or equivalent may be further synthesized by the design facility into a hardware model 4520, which may be in a hardware description language (HDL), or some other representation of physical design data. The HDL may be further simulated or tested to verify the IP core design. The IP core design can be stored for delivery to a fabrication facility 4565 using non-volatile memory 4540 (e.g., hard disk, flash memory, or any non-volatile storage medium). Alternatively, the IP core design may be transmitted (e.g., via the Internet) over a wired connection 4550 or wireless connection 4560. The fabrication facility 4565 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include, but are not limited to:
1. An apparatus comprising:
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate as a single virtual core to execute the first set of instruction segments of the single threaded program and the second set of instruction segments of the single threaded program concurrently using a shared memory space.
2. The apparatus of example 1, wherein the first processor core is to support a synchronization store instruction to store at least register data in a memory location that is accessible to the second processor core.
3. The apparatus of any of examples 1-2, wherein the second processor core is to support a synchronization load instruction to load at least register data from the memory location.
4. The apparatus of any of examples 1-3, wherein the first and second processor cores are physically adjacent to each other.
5. The apparatus of any of examples 1-3, wherein the first and second processor cores are not physically adjacent to each other.
6. The apparatus of any of examples 1-5, wherein each instruction segment comprises a same number of instructions.
7. The apparatus of any of examples 1-6, wherein an instruction segment begins with a synchronization load instruction to load at least register data from an internal memory location of a different processor core and ends with a synchronization store instruction to store at least register data to an internal memory location accessible to the different processor core.
8. The apparatus of any of examples 1-7, wherein the shared memory space is not accessible to the single threaded program.
9. The apparatus of any of examples 1-8, wherein the shared memory space is accessible to an operating system.
10. The apparatus of any of examples 1-9, wherein core-to-core data transfers are to use the shared memory space.
11. The apparatus of any of examples 1-10, wherein the first processor core and the second processor core are homogeneous.
12. The apparatus of any of examples 1-11, wherein registers of the first and second processor cores are to have dedicated memory addresses in the shared memory space.
13. A system comprising:
   memory to store an operating system and a single threaded program;
   a first processor core to execute a first set of instruction segments of the single threaded program; and
   a second processor core to execute a second set of instruction segments of the single threaded program, wherein each of the first processor core and the second processor core is to include circuitry to support the first and the second processor core to operate as a single virtual core enabled by the operating system to execute the first set of instruction segments of the single threaded program and the second set of instruction segments of the single threaded program concurrently using a shared memory space.
14. The system of example 13, wherein the first processor core is to support a synchronization store instruction to store at least register data in an internal memory location that is accessible to the second processor core.
15. The system of any of examples 13-14, wherein the second processor core is to support a synchronization load instruction to load at least register data in the internal memory location of the first processor core.
16. The system of any of examples 13-15, wherein the first and second processor cores are physically adjacent to each other.
17. The system of any of examples 13-16, wherein an instruction segment begins with a synchronization load instruction to load at least register data from an internal memory location of a different processor core and ends with a synchronization store instruction to store at least register data to an internal memory location accessible to the different processor core.
18. The system of any of examples 13-17, wherein the shared memory space is not accessible to the single threaded program.
19. The system of any of examples 13-18, wherein the shared memory space is accessible to an operating system.
20. The system of any of examples 13-19, wherein core-to-core data transfers are to use the shared memory space.
21. An apparatus comprising:
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate as a single virtual core to fetch the first set of instruction segments of the single threaded program and the second set of instruction segments of the single threaded program concurrently using program concurrently using flow control instructions inserted into the single threaded program.
22. The apparatus of example 21, wherein the first processor core is to support a synchronization store instruction to store at least register data in an internal memory location that is accessible to the second processor core.
23. The apparatus of any of examples 21-22, wherein the second processor core is to support a synchronization load instruction to load at least register data in the internal memory location of the first processor core.
24. The apparatus of any of examples 21-23, wherein the first and second processor cores are physically adjacent to each other.
25. The apparatus of any of examples 21-23, wherein the first and second processor cores are not physically adjacent to each other.
26. The apparatus of any of examples 21-25, wherein the first and second processor core each further comprise a branch prediction unit to predict an address for at least a proper subset of the inserted flow control instructions.
27. The apparatus of example 26, wherein a branch target buffer of a branch prediction units is to record where potential splits for instruction segments occur.
28. The apparatus of any of examples 21-27, wherein splits for instruction segments occur at branch exits.
29. A method comprising:
   fetching a first block of a plurality of instruction blocks from a first memory address and executing the first block of the plurality of instruction blocks in a first processor core operating in a virtual single core mode;
   fetching a second block of the plurality of instruction blocks from a second memory address and executing the second block of the plurality of instruction blocks in a second processor core in the virtual single core mode; and
   upon completion of the first block of the plurality of instruction blocks by the first processor core, providing an indication of a stopping point of the first block of the plurality of instruction blocks to the second processor core wherein the second processor core is to use the indication of a stopping point to determine correctness of the fetching of the second block of the plurality of instruction blocks.
30. The method of example 29, wherein the second memory address is predicted by a branch prediction unit of the second processor core.
31. The method of any of examples 29-30, wherein the second memory address is not correct and further comprising:
   clearing a pipeline of the second processor core and fetching a second block of the plurality of instruction blocks based at least in part on the stopping point.
32. The method of any of examples 29-31, wherein the second memory address is correct and further comprising:
   providing an indication of a stopping point of the second block of the plurality of instruction blocks to the first processor core.
33. The method of any of examples 29-32, further comprising:
   updating a branch target buffer in the first processor core upon completion of the first block of the plurality of instruction blocks by the first processor core.
34. A system comprising:
   memory to store an operating system and a single threaded program;
   a first processor core to execute a first set of instruction segments of the single threaded program; and
   a second processor core to execute a second set of instruction segments of the single threaded program, wherein each of the first processor core and the second processor core is to include circuitry to support the first and the second processor core to operate as a single virtual core enabled by the operating system to fetch the first set of instruction segments of the single threaded program and the second set of instruction segments of the single threaded program concurrently using flow control instructions inserted into the single threaded program.
35. The system of example 34, wherein the first processor core is to support a synchronization store instruction to store at least register data in an internal memory location that is accessible to the second processor core.
36. The system of any of examples 34-35, wherein the second processor core is to support a synchronization load instruction to load at least register data in the internal memory location of the first processor core.
37. The system of any of examples 34-35, wherein the first and second processor cores are physically adjacent to each other.
38. The system of any of examples 34-35, wherein the first and second processor core each further comprise a branch prediction unit to predict an address for at least a proper subset of the inserted flow control instructions.
39. The system of example 38, wherein a branch target buffer of the branch prediction units is to record where potential splits for instruction segments occur.
40. The system of any of examples 34-39, wherein splits for instruction segments occur at branch exits.
41. An apparatus comprising:
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate as a single virtual core to execute the first set of instruction segments of the single threaded program and the second set of instruction segments of the single threaded program concurrently, and wherein each of the first processor core and the second processor core is to record a respective list of registers modified during execution of their respective instruction segments.
42. The apparatus of example 41, wherein the list of registers recorded by the first processor core is to be recorded by a rename stage of the first processor core and the list of registers recorded by the second processor core is to be recorded by a rename stage of the second processor core.
43. The apparatus of any of examples 41-42, wherein the second processor core is to predict the list of registers of the first processor core and is to execute the second set of instruction segments of the single threaded program based at least in part on the predicted list of registers.
44. The apparatus of example 43, wherein the first processor core is to provide the second processor core with its respective list of registers modified during execution of the first set of instruction segments of the single threaded program.
45. The apparatus of example 44, wherein the second processor core is to determine when corrective action is needed based at least in part on the predicted list of registers of the first processor core.
46. The apparatus of example 45, wherein a register alias table of the second processor core is to be used to determine when corrective action is needed based at least in part on the predicted list of registers of the first processor core.
47. The apparatus of any of examples 41-46, wherein the list of registers modified during execution of the first set of instruction segments of the single threaded program is to be provided using a memory space shared by the first and second processor cores.
48. The apparatus of example 47, wherein the shared memory space is accessible to an operating system.
49. A method comprising:
   fetching of a first block of a plurality of instruction blocks and executing the first block using a first processor core;
   recording registers modified during the executing of the first block to a data structure;
   predicting, by a second processor core, a list of registers to be modified by the first processor core;
   fetching of a second block of the plurality of instruction blocks and executing the second block using the second processor core;
   communicating the recorded registers data structure to the second processor core; and
   performing corrective action in the second processor core dependent on the recorded registers data structure.
50. The method of example 49, wherein the corrective action is to clear the second processor core, receive the written to registers, and re-fetch the second block of the plurality of instruction blocks.
51. The method of any of examples 49-50, wherein the recorded registers data structure is compared to a register alias table of the second processor core to determine if corrective action is to be performed.
52. The method of any of examples 49-51, further comprising:
   recording registers written during the executing of the second block to a data structure when corrective action is to not be performed.
53. A system comprising:
   memory to store an operating system and a single threaded program;
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate as a single virtual core as configured by the operating system to execute the first set of instruction segments of the single threaded program and the second set of instruction segments of the single threaded program concurrently, and wherein each of the first processor core and the second processor core is to record a respective list of registers modified during execution of their respective instruction segments.
54. The system of example 53, wherein the list of registers recorded by the first processor core is to be recorded by a rename stage of the first processor core and the list of registers recorded by the second processor core is to be recorded by a rename stage of the second processor core.
55. The system of any of examples 53-54, wherein the second processor core is to predict the list of registers of the first processor core and is to execute the second set of instruction segments of the single threaded program based at least in part on the predicted list of registers.
56. The system of example 55, wherein the first processor core is to provide the second processor core with the list of registers modified during execution of the first set of instruction segments of the single threaded program.
57. The system of example 56, wherein the second processor core is to determine when corrective action is needed based at least in part on the predicted list of registers of the first processor core.
58. The system of example 57, wherein a register alias table of the second processor core is to be used to determine when corrective action is needed based at least in part on the predicted list of registers of the first processor core.
59. The system of any of examples 53-58, wherein the list of registers written to during execution of the first set of instruction segments of the single threaded program is to be provided using a memory space shared by the first and second processor cores.
60. The system of any of examples 53-59, wherein the list of registers is to be made available in a memory space shared by the first and second processor cores.
61. An apparatus comprising:
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate as a single virtual core to execute the first set of instruction segments of the single threaded program and the second set of instruction segments of the single threaded program concurrently, wherein each of the first and second processor cores is to include a shadow store buffer to track store addresses of the other core.
62. The apparatus of example 61, wherein each of the first and second processor cores is to include a store buffer to track its own store addresses.
63. The apparatus of example 62, wherein the first processor core is to check a load against its own store buffer and the shadow store bufferto determine if there is a conflicting store in either the first or the second processor core.
64. The apparatus of example 63, wherein when there is a conflicting store in the shadow store buffer a pull request is made by the first processor core to obtain data of the conflicting store from the second processor core.
65. The apparatus of example 64, wherein when the load is to be stalled until the data of the conflicting store from the second processor core is obtained.
66. The apparatus of any of examples 61-65, wherein when an entry, associated with a store instruction, in the shadow store buffer is to be updated a check is made to determine there is a conflicting younger load than the store instruction and perform a nuke for the conflicting younger load.
67. The apparatus of any of examples 61-65, wherein store information is to be exchanged using a shared memory location.
68. A method comprising:
   receiving store information from a second processor core;
   updating a shadow store buffer with the received store information
   receiving a load to be performed;
   comparing the load against the shadow store buffer and a store buffer;
   determining there is a conflict with a store instruction of the shadow store buffer;
   requesting data for the conflicting store from the second processor core;
   receiving data for the conflicting store from the second processor core; and
   processing the load using the received data.
69. The method of example 68, wherein updating a shadow store buffer with the received store information comprises nuking conflicting load instructions.
70. The method of any of examples 68-69, further comprising: stalling execution of the load until the data for the conflicting store from the second processor core is received.
71. The method of any of examples 68-70, wherein the shadow store buffer is to only store address information for stores.
72. The method of any of examples 68-71, wherein the store buffer is to be updated based on stores of a first processor core.
73. A system comprising:
   memory to store an operating system and a single threaded program;
   a first processor core to execute a first set of instruction segments of the single threaded program; and
   a second processor core to execute a second set of instruction segments of the single threaded program, wherein each of the first processor core and the second processor core is to include circuitry to support the first and the second processor core to operate as a single virtual core as configured by the operating system to execute the first set of instruction segments of the single threaded program and the second set of instruction segments of the single threaded program concurrently, wherein each of the first and second processor cores is to include a shadow store buffer to track store addresses of the other core.
74. The system of example 73, wherein each of the first and second processor cores is to include a store buffer to track its own store addresses.
75. The system of example 74, wherein the first processor core is to check a load against its own store buffer and the shadow store buffer to determine if there is a conflicting store in either the first or the second processor core.
76. The system of example 75, wherein when there is a conflicting store in the shadow store buffer a pull request is made by the first processor core to obtain data of the conflicting store from the second processor core.
77. The system of example 76, wherein when the load is to be stalled until the data of the conflicted store from the second processor core is obtained.
78. The system of any of examples 73-77, wherein when an entry, associated with a store instruction, in the shadow store buffer is to be updated a check is made to determine there is a conflicting younger load than the store instruction and perform a nuke for the conflicting younger load.
79. The system of any of examples 73-78, wherein store information is to be exchanged using a shared memory location.
80. The system of example 79, wherein shared memory location is accessible to the operating system and not accessible to a user thread.
81. An apparatus comprising:
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate as a single virtual core to execute the first set of instruction segments of the single threaded program and the second set of instruction segments of the single threaded program concurrently using a shared memory space, wherein the instruction segments are to include one or more of a store instruction to store live register data to be shared with another core and a load instruction to load live register data shared by another core.
82. The apparatus of example 81, wherein live register data is data that another core requires to execute an instruction segment.
83. The apparatus of any of examples 81-82, wherein each register to be stored has a unique address in the shared memory space.
84. The apparatus of any of examples 81-83, wherein each register to be loaded has a unique address in the shared memory space.
85. The apparatus of any of examples 81-84, wherein a store instruction to store live register data to be shared with another core is to be executed after all instructions of an instruction segment have been processed.
86. The apparatus of any of examples 81-85, wherein a load instruction to load live register data to be shared with another core is to be executed before instructions of an instruction segment have started.
87. The apparatus of any of examples 81-86, wherein a load instruction to load live register data shared by another core does not perform a store check.
88. The apparatus of any of examples 81-87, wherein addressing information of a store instruction to store live register data is not exposed to another core.
89. An apparatus comprising:
   decoder circuitry of a first core to decode an instance of a single instruction, the instance of the single instruction to include fields for an opcode and one or more fields to identify a register whose contents are to be retrieved from a second core; and
   execution circuitry of the first core to execute the decoded instance of the single instruction to retrieve data of the identified register from the second core.
90. The apparatus of example 89, wherein the one or more fields to identify a register to retrieve from the second core comprise memory addressing fields.
91. The apparatus of any of examples 89-90, wherein the one or more fields to identify a register to retrieve from the second core comprise register identifying information.
92. The apparatus of any of examples 89-91, wherein data of the retrieved identified register is to be stored in a corresponding local register of the first core.
93. A system comprising:
   memory to store an operating system and a single threaded program;
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate as a single virtual core as configured by the operating system to execute the first set of instruction segments of the single threaded program and the second set of instruction segments of the single threaded program concurrently using a shared memory space, wherein the instruction segments are to include one or more of a store instruction to store live register data to be shared with another core and a load instruction to load live register data shared by another core.
94. The system of example 93, wherein live register data is data that another core requires to execute an instruction segment
95. The system of any of examples 93-94, wherein each register to be stored has a unique address in the shared memory space.
96. The system of any of examples 93-95, wherein each register to be loaded has a unique address in the shared memory space.
97. The system of any of examples 93-96, wherein a store instruction to store live register data to be shared with another core is to be executed after all instructions of an instruction segment have been processed.
98. The system of any of examples 93-97, wherein a load instruction to load live register data to be shared with another core is to be executed before instructions of an instruction segment have started.
99. The system of any of examples 93-98, wherein a load instruction to load live register data shared by the another does not perform a store check.
100. The system of any of examples 93-99, wherein addressing information of a store instruction to store live register data is not exposed to another core.
101. An apparatus comprising:
   a first processor core to execute a first set of instruction segments of a single threaded program, wherein the first processor core is to include a disambiguation predictor to predict a disambiguation of a load for the first processor core against older stores of the second processor core; and
   a second processor core to execute a second set of instruction segments of the single threaded program.
102. The apparatus of example 101, wherein when the disambiguation predictor for a second processor core is to predict that a memory location associated with a load instruction in the first processor core may match a memory location associated with a store instruction in the second processor core, the load is to be forwarded to the second processor core.
103. The apparatus of example 102, wherein the second processor core is to determine if the forwarded load instruction matches an older store and is further to retrieve data from a matching store instruction.
104. The apparatus of example 102, wherein the second processor core is to stall the execution of the load instruction when there is an invalid store to be resolved.
105. The apparatus of any of examples 101-104, wherein when the disambiguation predictor for a second processor core is to predict that a load in the first processor core does not match a store in the second processor core, the load is to be speculatively completed.
106. The apparatus of example 105, wherein the speculatively completed load is to by nuked when a senior store snoop from the second processor core matches an address of the speculatively completed load.
107. The apparatus of any of examples 101-106, wherein in response to a snoop to check for a conflicting load address, the first processor core is to scan its load buffer for a matching address to an executed store of the second processor core.
108. The apparatus of example 107, wherein the snoop is to include a store identifier of the executed store instruction.
109. The apparatus of any of examples 101-108, wherein the disambiguation predictor is a part of a memory execution unit.
110. The apparatus of any of examples 101-109, wherein the load instruction is a livein load instruction to load register data from the second processor core.
111. A system comprising:
   memory to store an operating system and a single threaded program;
   a first processor core to execute a first set of instruction segments of the single threaded program, wherein the first processor core is to include a disambiguation predictor for a second processor core to predict a disambiguation of a load for the first processor core against older stores of the second processor core; and
   a second processor core to execute a second set of instruction segments of the single threaded program, wherein the first and second processor cores are to operate as a virtual single core configured by the operating system.
112. The system of example 111, wherein when the disambiguation predictor for a second processor core is to predict that a memory location associated with a load instruction in the first processor core may match a memory location associated with a store instruction in the second processor core, the load is to be forwarded to the second processor core.
113. The system of example 112, wherein the second processor core is to determine if the forwarded load instruction matches an older store and is further to retrieve data from a matching store instruction.
114. The system of example 112, wherein the second processor core is to stall the execution of the load instruction when there is an invalid store to be resolved.
115. The system of any of examples 111-114, wherein when the disambiguation predictor for a second processor core is to predict that a load in the first processor core does not match a store in the second processor core, the load is to be speculatively completed.
116. The system of example 115, wherein the speculatively completed load is to by nuked when a senior store snoop from the second processor core matches an address of the speculatively completed load.
117. The system of any of examples 111-116, wherein in response to a snoop to check for a conflicting load address, the first processor core is to scan its load buffer for a matching address to an executed store of the second processor core.
118. The system of example 117, wherein the snoop is to include a store identifier of the executed store instruction.
119. The system of any of examples 111-118, wherein the disambiguation predictor is a part of a memory execution unit.
120. The system of any of examples 111-119, wherein the load is a livein load instruction to load register data from the second processor core.
121. An apparatus comprising:
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate as a single virtual core to execute the first set of instruction segments of the single threaded program and the second set of instruction segments of the single threaded program concurrently, wherein the single virtual core is to support at least one of performance throttling or power throttling.
122. The apparatus of example 121, further comprising:
   at least one hardware storage to store a count of branch mispredictions for a first number of instructions of the single threaded program, wherein performance throttling is based, at least in part, on the count of branch mispredictions.
123. The apparatus of example 122, wherein the single virtual core is to support the performance throttling by returning execution of the single threaded program to a single core.
124. The apparatus of example 123, wherein each of the first and second processor cores are to store their context to a memory and the single core is to restart execution using the stored contexts.
125. The apparatus of example 123, wherein at least one of the first and second cores is to be nuked to stop execution of an instruction segment.
126. The apparatus of any of examples 122-125, wherein the single virtual core is to be performance throttled when the count of branch mispredictions exceeds a threshold value.
127. The apparatus of any of examples 122-126, wherein the performance throttling is to end after a number of instructions have executed.
128. The apparatus of any of examples 121-127, further comprising:
   at least one hardware storage to store a a first count of total branch mispredictions;
   at least one hardware storage to store aa second count of total memory stalls; and
   at least one hardware storage to store aa third count of total dependence stalls, wherein the power throttling is based at least in part on values of the first, second and third counts.
129. The apparatus of example 128, wherein the power throttling comprises to lower a frequency.
130. The apparatus of example 128, wherein the power throttling comprises to lower a voltage.
131. A system comprising:
   memory to store an operating system and a single threaded program;
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate in a single virtual core as configured by the operating system to execute the first set of instruction segments of the single threaded program and the second set of instruction segments of the single threaded program concurrently, wherein the single virtual core is to support at least one of performance throttling or power throttling.
132. The system of example 131, further comprising:
   at least one hardware storage to store a count of branch mispredictions for a first number of instructions of the single threaded program, wherein performance throttling is based, at least in part, on the count of branch mispredictions.
133. The system of example 132, wherein the single virtual core is to support the performance throttling by returning execution of the single threaded program to a single core.
134. The system of example 133, wherein each of the first and second processor cores are to store their context to a memory and the single core is to restart execution using the stored contexts.
135. The system of example 133, wherein at least one of the first and second cores is to be nuked to stop execution of an instruction segment.
136. The system of any of examples 132-135, wherein the single virtual core is to be performance throttled when the count of branch mispredictions exceeds a threshold value.
137. The system of any of examples 132-136, wherein the performance throttling is to end after a number of instructions have executed.
138. The system of any of examples 132-137, further comprising:
   at least one hardware storage to store a a first count of total branch mispredictions;
   at least one hardware storage to store aa second count of total memory stalls; and
   at least one hardware storage to store aa third count of total dependence stalls, wherein the power throttling is based at least in part on values of the first, second and third counts.
139. The system of example 138, wherein power throttling comprises to lower a frequency.
140. The system of example 138, wherein power throttling comprises to lower a voltage.
141. An apparatus comprising:
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate in a single virtual core as configured by an operating system to execute the first set of instruction segments of the single threaded program and the second set of instruction segments of the single threaded program concurrently.
142. The apparatus of example 141, wherein to enter into the single virtual core, the first processor core is to start execution of a first instruction segment of the first set of instruction segments at a program counter value that indicates the beginning of the single threaded program and the second processor core is to start at a specified code segment.
143. The apparatus of example 142, wherein the second processor core comprises a micro-sequencer to direct the second processor core to a particular instruction of a second instruction segment of the second set of instruction segments to speculatively execute an instruction segment of the second set of instruction segments.
144. The apparatus of example 143, wherein the particular instruction of the second set of instruction segments is predicted by a branch predictor unit of the second processor core.
145. The apparatus of example 143, wherein the first processor core is to share an indication of a stopping point of the first instruction segment of the first set of instruction segments to the second processor core and the second processor core is to use the indication of the stopping point to determine if the speculative execution was correct.
146. The apparatus of example 145, wherein, responsive to incorrect speculative execution, the second processor core is to clear its pipeline and start processing of the second instruction segment based on the indication of the stopping point.
147. The apparatus of any of examples 141-146, wherein to enter into the single virtual core, the first processor core is to resume execution of the single threaded program at a saved program counter.
148. The apparatus of any of examples 141-147, wherein to exit from the single virtual core the first and second processor cores are to save their register state to memory.
149. The apparatus of example 148, wherein the register state is a merged register state.
150. The apparatus of example 148, wherein a program counter of each processor core is to be saved in memory upon exit from the single virtual core.
151. A system comprising:
   memory to store an operating system and a single threaded program;
   a first processor core to execute a first set of instruction segments of a single threaded program; and
   a second processor core to execute a second set of instruction segments of the single threaded program, wherein each of the first processor core and the second processor core is to include circuitry to support the first and the second processor core to operate in a single virtual core as configured by the operating system to execute the first set of instruction segments of the single threaded program and the second set of instruction segments of the single threaded program concurrently.
152. The system of example 151, wherein to enter into the single virtual core, the first processor core is to start execution of a first instruction segment of the first set of instruction segments at a program counter value that indicates the beginning of the single threaded program and the second processor core is to start at a specified code segment.
153. The system of example 152, wherein the second processor core comprises a micro-sequencer to direct the second processor core to a particular instruction of a second instruction segment of the second set of instruction segments to speculatively execute an instruction segment of the second set of instruction segments.
154. The system of example 153, wherein the particular instruction of the second set of instruction segments is predicted by a branch predictor unit of the second processor core.
155. The system of example 153, wherein the first processor core is to share an indication of a stopping point of the first instruction segment of the first set of instruction segments to the second processor core and the second processor core is to use the indication of the stopping point to determine if the speculative execution was correct.
156. The system of example 155, wherein, responsive to incorrect speculative execution, the second processor core is to clear its pipeline and start processing of the second instruction segment based on the indication of the stopping point.
157. The system of any of examples 151-156, wherein to enter into the single virtual core, the first processor core is to resume execution of the single threaded program at a saved program counter.
158. The system of any of examples 151-157, wherein to exit from the single virtual core the first and second processor cores are to save their register state to memory.
159. The system of example 158, wherein the register state is a merged register state.
160. The system of example 158, wherein a program counter of each processor core is to be saved in memory upon exit from the single virtual core.
161. An apparatus comprising:
   a first processor core to execute a first set of instruction segments of a single threaded program;
   a second processor core to execute a second set of instruction segments of the single threaded program, wherein each of the first processor core and the second processor core is to include circuitry to support the first and the second processor core to operate in a single virtual core as configured by an operating system to execute the first set of instruction segments of the single threaded program and the second set of instruction segments of the single threaded program concurrently; and
   thread runtime telemetry circuitry to at least provide a recommendation to the operating system to operate in the single virtual core .
162. The apparatus of example 161, wherein the thread runtime telemetry circuitry is to monitor threads executing on processor cores and operational modes of the processor cores.
163. The apparatus of any of examples 161-162, wherein the thread runtime telemetry circuitry is to provide the recommendation to the operating system to operate in the single virtual core based at least in part on an instruction per cycle count for the single threaded program.
164. The apparatus of any of examples 161-162, wherein the thread runtime telemetry circuitry is to provide the recommendation to the operating system to operate in the single virtual core based at least in part on an indication that the single threaded program has an amount of instruction level parallelism to support the single virtual core.
165. The apparatus of example 164, wherein the amount of instruction level parallelism to support the single virtual core is to be determined based on profiling.
166. The apparatus of any of examples 161-162, wherein the thread runtime telemetry circuitry is to provide the recommendation to the operating system to operate in the single virtual core based at least in part on a voltage and frequency of a core to execute the single threaded program.
167. The apparatus of any of examples 161-166, wherein the thread runtime telemetry circuitry is to determine a thread to release from the single virtual core upon a request from the operating system.
168. The apparatus of example 167, wherein the thread to release is a least beneficial thread to operate in the single virtual core.
169. A system comprising:
   memory to store an operating system;
   a first processor core to execute a first set of instruction segments of a single threaded program;
   a second processor core to execute a second set of instruction segments of the single threaded program, wherein each of the first processor core and the second processor core is to include circuitry to support the first and the second processor core to operate in a single virtual core as configured by the operating system to execute the first set of instruction segments of the single threaded program and the second set of instruction segments of the single threaded program concurrently; and
   thread runtime telemetry circuitry to at least provide a recommendation to the operating system to operate in the single virtual core .
170. The system of example 169, wherein the thread runtime telemetry circuitry is to monitor threads executing on processor cores and operational modes of the processor cores.
171. The system of any of examples 169-170, wherein the thread runtime telemetry circuitry is to provide the recommendation to the operating system to operate in the single virtual core based at least in part on an instruction per cycle count for the single threaded program.
172. The system of any of examples 169-170, wherein the thread runtime telemetry circuitry is to provide the recommendation to the operating system to operate in the single virtual core based at least in part on an indication that the single threaded program has an amount of instruction level parallelism to support the single virtual core more.
173. The system of example 172, wherein the amount of instruction level parallelism to support the single virtual core more is to be determined based on profiling.
174. The system of any of examples 169-170, wherein the thread runtime telemetry circuitry is to provide the recommendation to the operating system to operate in the single virtual core based at least in part on a voltage and frequency of a core to execute the single threaded program.
175. The system of any of examples 169-174, wherein the thread runtime telemetry circuitry is to determine a thread to release from the single virtual core upon a request from the operating system.
176. The system of example 175, wherein the thread to release is a least beneficial thread to operate in the single virtual core.
177. A method comprising:
   monitoring execution of a single threaded program on a single core;
   determining, based on the monitoring, the single threaded program could benefit from executing in a single virtual core; and
   providing a recommendation to an operating system to migrate the single threaded program to the single virtual core.
178. The method of example 177, wherein the recommendation to the operating system to migrate the single threaded program to the single virtual core is based at least in part on an instruction per cycle count for the single threaded program
179. The method of example 177, wherein the recommendation to the operating system to migrate the single threaded program to the single virtual core is based at least in part on an indication that the single threaded program has an amount of instruction level parallelism to support the single virtual core.
180. The method of any of examples 177-179, further comprising:
   receiving a request from the operating system to migrate from the single virtual core; and
   determining a least beneficial thread to release from the single virtual core.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
a first processor core to execute a first set of instruction segments of a single threaded program; and
a second processor core to execute a second set of instruction segments of the single threaded program, wherein each of the first processor core and the second processor core is to include circuitry to support the first and the second processor core to operate as a single virtual core to fetch the first set of instruction segments of the single threaded program and the second set of instruction segments of the single threaded program concurrently using flow control instructions that have been inserted into the single threaded program.

2. The apparatus of claim 1, wherein the first processor core is to support a synchronization store instruction to store at least register data in an internal memory location that is accessible to the second processor core.

3. The apparatus of claim 2, wherein the second processor core is to support a synchronization load instruction to load at least register data in the internal memory location of the first processor core.

4. The apparatus of any of claims 1-3, wherein the first and second processor cores are physically adjacent to each other.

5. The apparatus of any of claims 1-3, wherein the first and second processor cores are not physically adjacent to each other.

6. The apparatus of any of claims 1-3, wherein the first and second processor core each further comprise a branch prediction unit to predict an address for at least a proper subset of the inserted t.

7. The apparatus of claim 6, wherein a branch target buffer of the branch prediction units is to record where potential splits for instruction segments occur.

8. The apparatus of any of claims 1-7, wherein splits for instruction segments are yo occur at branch exits.

9. A method comprising:
fetching a first block of a plurality of instruction blocks from a first memory address and executing the first block of the plurality of instruction blocks in a first processor core operating in a virtual single core mode;
fetching a second block of the plurality of instruction blocks from a second memory address and executing the second block of the plurality of instruction blocks in a second processor core in the virtual single core mode; and
upon completion of the first block of the plurality of instruction blocks by the first processor core, providing an indication of a stopping point of the first block of the plurality of instruction blocks to the second processor core wherein the second processor core is to use the indication of a stopping point to determine correctness of the fetching of the second block of the plurality of instruction blocks.

10. The method of claim 9, wherein the second memory address is predicted by a branch prediction unit of the second processor core.

11. The method of claim 10, wherein the second memory address is not correct and further comprising:
clearing a pipeline of the second processor core and fetching a second block of the plurality of instruction blocks based at least in part on the stopping point.

12. The method of claim 10, wherein the second memory address is correct and further comprising:
providing an indication of a stopping point of the second block of the plurality of instruction blocks to the first processor core.

13. The method of any of claims 9-12, further comprising:
updating a branch target buffer in the first processor core upon completion of the first block of the plurality of instruction blocks by the first processor core.

14. A system comprising:
memory to store an operating system and a single threaded program;
a first processor core to execute a first set of instruction segments of the single threaded program; and
a second processor core to execute a second set of instruction segments of the single threaded program, wherein each of the first processor core and the second processor core is to include circuitry to support the first and the second processor core to operate as a single virtual core enabled by the operating system to fetch the first set of instruction segments of the single threaded program and the second set of instruction segments of the single threaded program concurrently using flow control instructions that have been inserted into the single threaded program.

15. The system of claim 14, wherein the first processor core is to support a synchronization store instruction to store at least register data in an internal memory location that is accessible to the second processor core.
